# EUROPEAN PATENT APPLICATION

(11) **EP 1 282 055 A1**
(43) Date of publication of application: **05.02.2003**
(21) Application number: 01912240.7
(22) Date of filing: 09.03.2001
(51) Int. Cl.: G06F 17/60, G01C 21/00, G06K 17/00

(54) **INFORMATION PROCESSING APPARATUS WITH OPTICAL DATA READER, SERVERS, AND ELECTRONIC COMMERCE METHOD**

(30) Priority: 09.03.2000 JP 2000064281; 21.07.2000 JP 2000221011; 31.07.2000 JP 2000232153; 31.07.2000 JP 2000231996; 07.09.2000 JP 2000272207
(71) Applicant: Kitagawa, Yoshiko, Tokyo 150-0012 (JP); Kitagawa, Takashi, Tokyo 150-0012 (JP)
(72) Inventor: KITAGAWA, Takashi, Shibuya-ku, Tokyo 150-0012 (JP)
(74) Representative: Grünecker, Kinkeldey, Stockmair & Schwanhäusser Anwaltssozietät
(86) International application number: JP0101874
(87) International publication number: WO01067326

(57) **Abstract**

An information processor is provided to facilitate electronic business transactions, which includes an input unit (1), a display unit (2), a radio unit (4), a voice processor (5), a CODEC (6), a data memory (9), a processing control unit (10), a two-dimensional code reader (11), a personal information memory (12) and a temporary memory (13). Image data such as an URL printed on an advertising medium is read by the two-dimensional code reader, and subjected to decoding and converting by the processing control unit (10). Based on the converted information, access is made to a designated URL, and an electronic business transaction is carried out by using personal information stored in the personal information memory (12). A code reading attachment may be provided detachably.

## Description

### TECHNICAL FIELD

The present invention relates to a technology using a communication network such as the Internet and, more particularly, to an information processor such as an electronic databook, a cellular phone, a portable notebook computer, a camera, or a television capable of communicating information through the communication network, and transactions used in various industries using such an information processor. Specifically, the invention relates to a computer system such as an electronic business transaction server or a license registration checking server connected to the communication network, and an information processor capable of instantaneously reading image information such as two-dimensional code through one-touch operation, and sending it to the communication network. Further, the invention relates to a navigation method for instantaneously reading image information disposed at street corners through one-touch operation by the information processor, and providing navigation information to a destination to the information processor based on the image information. Further, the invention relates to a computer system such as a navigation server and an image information analysis sever necessary for the navigation method. Furthermore, the invention relates to a method of using the related communication network and computer system.

### BACKGROUND ART

In electronic business transactions, in order to achieve consumer's action of purchasing items available from item providers through an advertising medium such as television, a method of obtaining a uniform resource locator (URL) from the advertising medium and searching a target item on a WEB has generally been employed.

That is, to specify an item to be obtained, the consumer must go through the following process.
(a) He (she) visually reads a URL address, stores or jots the URL address down, or cuts the URL address out.
(b) Then (later), he moves to a personal computer at home or company.
(c) He turns ON the personal computer, starts a browser, and makes connection to the network.
(d) He takes out the address, and enters the URL to the browser by a keyboard.
(e) He searches a page of a target item.
(f) He carries out a buying procedure of the item.
(g) He pays for a charge.
The process is complex and, even if this complex process is carried through, it is not always a guarantee that the item can be bought.

With a current era of cards, ATM cards or credit cards are usually carried to carry out electronic business transactions or buy items at stores. In the case of using such cards, generally, a method of forming a concave-convex pattern on each card and tracing the concave-convex pattern, or a method of reading a magnetic tape portion having personal information written is employed. Each individual normally carries a plurality of ATM cards or credit cards.

However, in mobile electronic business transactions, no systems have been presented for seamlessly linking advertising media such as newspapers, posters and folded ads with electronic trade areas.

In advertising posters hung in a train or the like, it may be impossible to record detailed URL information because of problems of vision. URL information may be visually read incorrectly or mistakes may occur when the URL information is jotted down. Further, even when a noteworthy advertising medium is found while passing a street corner, it may be impossible to enter such URL information or advertisement information because of time. Even jotted-down information or cut-out information may be lost. There is a possibility of making mistakes when entry is made from the keyboard of the personal computer at home. Especially, with arrival of an aging society in Japan in the future, visual reading of the URL information or entry from the keyboard may be a burden on the old or the like having lowered vision or the like.

For example, even by referring to the URL from the advertising medium, it is not easy to specify an item that the consumer is searching for. Even if the consumer decides on item purchase, he must buy an item by using a designated settlement system. Thus, at the item provider side, efficiency of achieving transactions of provided items is not high. For example, because of the complex process up to item purchase, it is difficult to realize item purchase. As which medium the consumer has consulted to buy an item cannot be determined, it is impossible to know how to provide a highly efficient advertising method.

Other than the URL information, visual and aural recognition of information on an address of electronic mail, a cellular phone number or the like, and entry thereof from the keyboard are not only bothersome but also cause errors. Especially, no systems or electronic transaction methods have been presented for executing direct electronic business transactions by easily communicating with transaction destination on a screen of a conventional video unit (electronic display unit). For example, orders based on television advertisements have widely been accepted by calls made by viewing audience of television broadcast. In such a case, the electronic business transaction provider must prepare many telephone operators and lines, and the lines have often been busy when the consumer makes a call.

On the other hand, in a current method of using cards, cards provided by individual companies must be carried, compelling a user to own several cards. Further, use history or bills are issued for the individual cards, imposing enormous costs on card issuers.

Further, to sell items such as liquor, rice, and furniture, display space, inventory control space and the like must be secured in a store. In addition, when an item is bought and delivery is requested, a slip must be filled in for each number of goods to be delivered. Accordingly, a purchaser has had to write his (her) name, address and the like on several slips. Settlement of equipment purchase is made after a passage of time in many cases, compelling the purchaser to pay the purchase price in the meantime. To cancel an order after an item has been ordered, a request for order cancellation must be made to the operator or the like. In such a case, the electronic business transaction provider has had to secure an operator and a telephone line, and the purchaser has been unable to cancel an order at an arbitrary time.

As a conventional navigation system, there has been available a method of calculating a present position or the like of a receiver by receiving information from a plurality of global positioning system (GPS) satellites. Information of various characters or graphics is prepared based on information of position measured by a GPS measuring unit, and displayed on a display screen. By various operations from the user, control is performed for, for example, selection of information of various characters or graphics to be displayed or the like, thereby obtaining a guidance route from a present position to a target position. Such a navigation system is realized not only by an on-vehicle navigation device but also a portable navigation device. However, since the underground (underground shopping area, subway or the like) is inpenetrable to a signal from a GPS satellite, the conventional navigation system does not function effectively underground. Moreover, only based on the GPS position information, it is impossible to identify a floor in a building.

The present invention was made with the foregoing problems in mind, and an object of the invention is to provide an information processor capable of eliminating the necessity of entering information of URL or the like described in an advertising medium visually by using a keyboard or the like, and instantaneously and accurately entering information through one-touch operation.

Another object of the present invention is to provide an information processor, which enables both a consumer and an item provider to efficiently enter and transmit necessary information.

Yet another object of the present invention is to provide an information processor, which facilitates a settlement system after a consumer decides on item purchase.

Yet another object of the present invention is to provide an information processor, which simplifies the process up to item purchase, and easily achieves item purchase.

Yet another object of the present invention is to provide an electronic business transaction providing server, which enables both a consumer and an item provider to efficiently enter and transmit necessary information.

Yet another object of the present invention is to provide a license registration checking server, which facilitates a settlement system after a consumer decides item purchase.

Yet another object of the present invention is to provide an electronic business transaction providing server, which facilitates buying of introduced items, contributes to an increase in customers, and provides benefits or values to introducers.

Yet another object of the present invention is to provide an electronic business transaction providing server, which enables a purchaser to easily designate an address for delivery or make a present to someone when he makes a delivery request.

Yet another object of the present invention is to provide an electronic business transaction providing server, which makes it unnecessary for an electronic business transaction provider to secure an operator or a telephone line, and enables a purchaser to cancel an order himself at an arbitrary time.

Yet another object of the present invention is to provide a navigation server for supplying navigation information to a destination without any entry of a present location based on optical data instantaneously read through one-touch operation.

Yet another object of the present invention is to provide an optical data analyzing server for converting image information (optical data) instantaneously read through one-touch operation into character data to be recognized by a computer.

Yet another object of the present invention is to provide an electronic business transaction method capable of eliminating the necessity of entering information such as URL described in an electronic display unit visually by using a keyboard or the like, accurately entering information necessary for business transactions, and enabling easy information distribution.

Yet another object of the present invention is to provide an electronic business transaction method which enables both a consumer and an item provider to efficiently enter and transmit necessary information.

Yet another object of the present invention is to provide an electronic business transaction method, which facilitates a settlement system after a consumer decides on item purchase.

Yet another object of the present invention is to provide an electronic business transaction method, which simplifies a process up to item buying, and achieves easy item purchase.

A further object of the present invention is to provide a communication network system (card using system) for easily carrying out on inquiry of card use history or bank balance, and transactions.

Yet further object of the present invention is to provide a business transaction promoting method capable of facilitating the purchase of introduced items, contributing to an increase in customers, and providing benefits and values to an introducer.

Yet further object of the present invention is to provide a card item selling method capable of eliminating the necessity for displaying items in a store, and executing inventory control.

Yet further object of the present invention is to provide a delivery address designating method, which enables a purchaser to easily designate an address for delivery or make a present to someone when he makes a delivery request.

Yet further object of the present invention is to provide a business transaction settlement commission method, which enables a purchaser to request settlement without paying the price at the time when he makes a settlement request.

Yet further object of the present invention is to provide a business transaction canceling method, which makes it unnecessary for an electronic business transaction provider to secure an operator or a telephone line, and enables a purchaser to cancel an order himself at an arbitrary time.

Yet further object of the present invention is to provide a navigation method, which eliminates the necessity of entering information visually by using a keyboard or the like, and supplies navigation information to a destination without any entry of a present location, based on image information (optical data) instantaneously read through one-touch operation.

Yet further object of the present invention is to provide a navigation method, which effectively functions even underground or in a building.

### DISCLOSURE OF THE INVENTION

A first feature of the present invention is an information processor comprising: (a) a communication network connection module for connecting with a communication network; (b) an optical data reader for optically reading information necessary for a business transaction; (c) a processing control unit for controlling the processing of image information read by the optical data reader, and sending a result of the processing control through the communication network connection module to the communication network; (d) a personal information memory for storing data necessary for the processing control; and (e) an input unit for entering instructions necessary for the operation of the optical data reader and the processing control unit. Further, a display unit may be added, which displays processing results of at least one of the optical data reader and the processing control unit.

In the present invention, the "communication network" means an information network (computer network) such as LAN, WAN, Internet or Intranet. As the "information processor" of the invention, a portable information processor (portable information terminal) such as a cellular phone, a PHS, a PDA, a notebook computer or an electronic databook are suitably used. An electronic device such as a camera including a digital camera, a game machine, a car navigation device, a scanner or a printer may also be used. A wrist watch, eyeglasses, a belt, shoes or the like, which are attachable to the body or portable, may also be used. A fixed telephone, a public telephone, a desktop computer or a television connected to a network may be used. Further, by adding a predetermined information processing function, even an electric appliance such as a refrigerator or an electronic oven may be used. Not a conventional information processor, but an information processor as a dedicated unit having the feature of the invention may be used. Also in this case, the information processor is characterized by comprising at least a communication network module, an optical data reader for reading an image, and a processing control unit.

The "communication network connection module" of the present invention means, for example a radio unit (radio circuit), a transmitting antenna, a receiving antenna or the like in the case of a cellular phone or the like. The "radio unit" includes, for example a low noise amplifier, a mixer, an intermediate frequency (IF) amplifier, a demodulator, a filter, an A/D converter, a processor, a modulator, a demodulator, a driver amplifier, a phase shifter, a transmitting amplifier and the like. To connect the cellular phone with the Internet, it may be carried out through a radio repeater, a mobile communication subscriber switchboard, a relay processor or the like. In this case, the mobile communication subscriber switchboard and the relay processor are connected to each other through a digital communication network or the like. The use of "communication network connection module" is not limited to a radio wave such as a microwave or a millimeter wave, and infrared rays or an ultrasonic wave may be used. A wired network connection module of a cable system may even be used. Accordingly, data circuit terminating equipment such as a modulator-demodulator (MODEM), a digital service unit (DSU), a network control unit (NCU), a communication control unit (CCU), and a communication control processor (CCP) fall into the category of the "communication network connection module" of the invention. An information display unit such as a set top box (STB) may be connected to a television receiver, and to the Internet through a telephone line or the like. As described above, various types of "communication network connection module" enable the portable information processor (portable information terminal) of the invention to be connected to the communication network such as Internet.

The "optical data reader" of the present invention means an OCR or a barcode reader for optically reading information such as image information containing a written Internet address. The "personal information memory" stores at least one of a name, a telephone number, an address, a settlement card number (credit card number) and the like of an individual. The "processing control unit" can be constituted of a CPU used for a computer system. The processing control unit can include at least a dada decoding module for decoding image information read by the optical data reader, a code converting module for converting the image information decoded by the data decoding module into character data, and an electronic business transaction data editing module for editing character information obtained by the code converting module and personal information recorded in the personal information memory in predetermined forms.

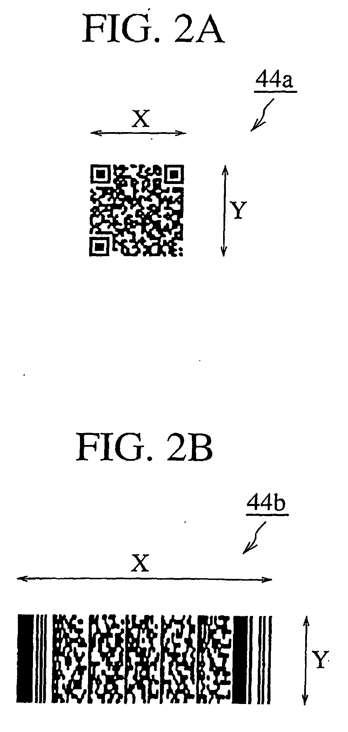

As the image information read by the optical data reader, a one-dimensional code, a two-dimensional code or a three-dimensional code such as a volume hologram is preferred. Alternatively, an intermediate 1.5-dimensional code or a 2.5-dimensional code may be used. From a standpoint of industrial applicability, a two-dimensional code exemplified in FIG. 2A or 2B is preferred. FIG. 2A shows a two-dimensional code of a matrix type called a QR code, where information is present in two-dimensional space of X and Y directions. FIG. 2B shows a two-dimensional code of a stack type called PDF417, where similarly information is present in two-dimensional space of X and Y directions. Other than these, two-dimensional codes compliant with international standard, such as Code 16, Code 49, MaxiCode, Data Matrix, and Code One, are available. A two-dimensional barcode has an information amount of about 200 characters, while a one-dimensional barcode has an information amount of only about 20 characters. According to the present invention, the image information holds information such as URL, in which a domain name of a business transaction providing server for providing items, and items provided by an item provider are listed. In the "image information", personal information necessary for a transaction with a card providing company may be described, and the electronic business transaction providing server may be managed by the card providing company. A customer can access the designated URL of the Internet by reading an image displayed on the electronic display unit or paper by way of the information processor having the optical data reader of the invention. Based on personal information stored in the information processor, an electronic business transaction such as item purchase can be easily carried out. Moreover, information obtained through the Internet is not limited only to item information. For example, all kinds of information including program-related information, detailed information, recipes from a cooking program, and the like can be obtained.

Methods of adding (describing) such image information are as follows:
(a) a print media model in which the image information is embedded in a printable advertising medium such as a magazine, a book, a newspaper, a catalogue, a pamphlet or a folded ad;
(b) a display model for displaying codes on a screen of a television, a liquid crystal panel, displays (CRT) of all types of electronic devices, and the like;
(c) a street model for enabling information to be eternally posted indoors and outdoors, such as on a wall surface, a road surface and a door, for example street billboards, posters, advertising posters in a train and the like;
(d) a package model printing and embedding the image information in a product package such as a rice/laver bag, a shampoo bottle, or a can; and
(e) a watermark model embedding the image information in an entire product from any parts of all types of products by using, for example a watermark technology used for coding or a fractal technology used for information compression.

The image information is read by the optical data reader of the present invention, and the read image information is decoded by the data decoding module of the processing control unit. The decoded image information is converted into character data such as URL of an item provider by the image information converting module of the processing control unit (CPU). Then, based on the obtained URL information of the item provider, reference is made to a designated URL from the portable information processor (portable information terminal). A user checks an item thereof, and decides whether or not to buy the item. When the user does not buy the item, the connection with the Internet is cut off. When the user buys the item, based on information stored in the personal information memory, data is edited in a necessary form by the electronic business transaction data editing module of the attachment control unit, transmitted to the item provider, and thus an electronic business transaction or the like is easily carried out.

The "input unit" of the present invention is not limited to a keyboard, but a switch, a mouse, a trackball, a button or the like may be used. It is only necessary to identify three or more states including information acquisition, information transmission, and permission for personal information transmission. It is more preferable if operation controls of processing checking and canceling can be performed. The "display unit" of the portable information terminal of the present invention enables a content read by the optical data reader, a content of a transaction carried out through the portable information terminal, and the like to be visually checked. In addition, data can be displayed even if the data reading of the optical data reader fails.

The information processor of the present invention may be divided into a main function unit and a code reading attachment. This code reading attachment may be detachably attached to the main function unit. In this case, parts of the communication network connection module, the input unit, the display unit and the processing control unit are housed in the main function unit. On the other hand, remaining parts of the optical data reader and the processing control unit, which are not housed in the main function unit, are housed in the code reading attachment. Accordingly, at the single main function unit, functions of a standard cellular phone, a PHS, a PDA, a notebook computer and an electronic databook can be enjoyed, and connection can be made with the Internet. On the other hand, the remaining part of the processing control unit housed in the code reading attachment includes a data decoding module for decoding the image information read by the optical data reader, a code converting module for converting the image information decoded by the data decoding module into character data, and an electronic business transaction data editing module for editing the character information obtained by the code converting module and personal information recorded in the personal information memory in predetermined forms. Accordingly, the code reading attachment is attached/detached and used according to user's preference and taste.

A second feature of the present invention is directed to a gateway server (license registration checking server) capable of communicating with each of an information processor including an optical data reader, and an electronic business transaction providing server through a communication network. That is, the gateway server is a license registration checking server comprising: a processing control unit including a license registration checking module for obtaining business transaction information through the communication network, the business transaction information having been obtained by subjecting image information read by the optical data reader to processing control at the information processor, and checking the possibility of connecting the information processor to the electronic business transaction providing server based on business transaction information.

In the license registration checking server according to the second feature of the present invention, the processing control unit may further include a module for checking whether the image information has been coded or not, and a module for decoding a code when it is determined that the image information has been coded. The processing control unit may include a module for determining a data standard of the image information when a plurality of image information standards are mixedly present, or a module for checking consistency of the image information. In this case, a checking function such as digit checker can be contained in the image information. Thus, it is possible to check whether the image information has been accurately read or not. The image information may take a general image information form such as a joint photographic expert group (JPEG) or a graphic interchange group (GIF).

The license registration checking module acquires identification information of the electronic business transaction providing server from information data necessary for an electronic business transaction, and checks a possibility of connecting with the electronic business transaction providing server from the information processor. Here, the "identification information of server" means information for identifying a server. If the communication network is the Internet, identification information is preferably on URL. Furthermore, for example, the license registration checking server may comprise a license registration data memory to store access control information. The "access control information" means control information presented beforehand by a specific provider having an access control right. This information is designed to control access permission/nonpermission to a designated provider, and to a designated owner of a portable information processor for a designated period. The license registration checking module checks a possibility of connecting with a specific electronic business transaction providing server from a specific information processor by referring to the access control information.

Furthermore, in the license registration checking server according to the second feature of the present invention, personal information necessary for a transaction with a card providing company is described in the image information, and the electronic business transaction providing server may be managed by the card providing company.

Here, as the "card providing company." a credit card providing company, a financial institution such as a bank, and the like are included. In the case of a credit card, a name of a card providing company, a name of an owner, a card number, an expiration date or the like is preferred as image information. In the case of a financial institution such as a bank, a name of a bank, a branch name, a name of an owner, an account number or the like is preferred as the image information. The image information containing the personal information may be printed on a card or a paper medium. The image information may be printed on a seal, and pasted to a card. Accordingly, card settlement that has heretofore been carried out by reading a magnetic card or applying pressure to a concave-convex portion of the card can be similarly executed by reading the image information. Moreover, the card owner can access the card providing company by reading the image information through the information processor, and carry out a transaction and refer to it's use history. In this case, ID authentication is preferably carried out based on a personal identification number or a password when necessary.

If the card providing company is a credit card providing company, reference can be made to the use history of a credit card, use balance, current payment state and the like. In this case, since the use history can always be checked by the information terminal, it is possible to check a use state, and monitor for excessive use. Since the user can refer to the use history at their convenience, it is not necessary to mail the use history. Accordingly, family members are prevented from knowing what has been used, securing high privacy. Therefore, the credit company can promote the use of a card for expensive dining, buying of luxury brands, lodging at a luxury hotel and the like.

If the card providing company is a financial institution, a request can be made for a transaction such as transfer, and reference can be made to use history, a balance and the like. Also in this case, since the user can refer to the use history at convenient time, it is not necessary to carry a bank book. The user only needs to obtain a printout as occasion demands. Moreover, since an ATM card of the financial institution is used as a settlement card (debit card), an advantage/utility similar to that of a credit card can be expected.

A third feature of the present invention is directed to a gateway server (license registration checking server) capable of communicating with each of an information processor including an optical data reader, and an electronic business transaction providing server through a communication network. That is, the gate server is a license registration checking server comprising: a processing control unit including (a) a data decoding module for obtaining image information through the communication network, the image information having been read by the optical data reader of the information processor, and decoding the image information, (b) a code converting module for converting the image information into character data, and (c) a license registration checking module for checking a possibility of connecting the information processor to the electronic business transaction providing server based on the character data.

In the license registration checking server according to the third feature of the present invention, in the configuration of the license registration checking server of the second feature of the invention, the license registration checking server includes the data decoding module for decoding the image information, and the code converting module for converting the image information into character data. That is, the information processor transmits the image information read by the optical data reader in its original form through the communication network to the license registration checking server. The license registration checking server decodes the image information, and converts the image information into character data. The license registration checking server can further include a module for checking whether the image information has been coded or not, and a module for decoding a code when it is determined that the image information has been coded. The license registration checking server may include a module for determining a data standard of the image information when a plurality of image information standards are mixedly present, or a module for checking consistency of the image information. In this case, a checking function such as a check digit can be contained in the image information. Thus, it is possible to check whether the image information has been accurately read or not. The image information may take a general image information form such as JPEG or GIF.

Similarly to the case of the second feature of the present invention, the license registration checking module acquires identification information of the electronic business transaction providing server from information data necessary for an electronic business transaction, and checks a possibility of connecting with the electronic business transaction providing server from the information processor. Here, the "identification information of the server" means information for specifying a server as described above with reference to the second feature of the invention. If the communication network is Internet, identification information is preferably URL. For example, the license registration checking server may comprise a license registration data memory to store access control information as described above with reference to the third feature of the invention. The license registration checking module checks a possibility of connecting with a specific electronic business transaction providing server from a specific information processor by referring to the access control information.

In an electronic business transaction method using the license registration checking server of the third feature of the present invention, it is the license registration checking server side that decodes the image information and converts the image information into character data. Thus, it is possible to simplify the structure, make compact and reduce the price of an information processor.

A fourth feature of the present invention is directed to a web server (or database server) capable of communicating with an information processor including an optical data reader through a communication network. That is, the web server (or database server) is an electronic business transaction providing server, comprising: a processing control unit including (a) a data decoding module for obtaining image information through the communication network, the image information having been read by the optical data reader of the information processor, and decoding the image information, and (b) a code converting module for converting the image information into character data.

In the electronic business transaction providing server according to the fourth feature of the present invention, the processing control unit includes the data decoding module for decoding the image information, and the code converting module for converting the image information into character data. Accordingly, the information processor needs only to transmit the image information read by the optical data reader in its original form through the communication network to the electronic business transaction providing server. Thus, it is possible to simplify the structure, make compact and reduce the price of an information processor.

The electronic business transaction providing server according to the fourth feature of the present invention can comprise a receiver for receiving the image information read by the optical data reader, and personal data stored in the information processor; and a screen displaying module for displaying a screen of designated URL on a display unit of the information processor according to the designated URL obtained by the code converting module. The electronic business transaction providing server may further comprise a module for checking whether the image information has been coded or not, and a module for decoding a code when it is determined that the image information has been coded. Needless to say, the electronic business transaction providing server may comprise a module for determining a data standard of the image information, and/or a module for checking the consistency of the image information.

In the electronic business transaction providing server according to the fourth feature of the present invention, the "image information" contains personal information necessary for a transaction with a card providing company. If the electronic business transaction providing server is managed by the card providing company, the electronic business transaction providing server of the fourth feature of the invention can be used as a card using/managing system.

A fifth feature of the present invention is directed to a web server (or database server) capable of communicating with an information processor including an optical data reader through a communication network. That is, the web server (or database server) is a navigation server, comprising: (a) a data decoding module for obtaining image information through the communication network, the image information having been read by the optical data reader of the information processor, and decoding the image information; (b) a code converting module for converting the image information decoded by the data decoding module into character data containing information of a code acquiring position and a destination position; and (c) a guidance route searching module for searching a guidance route from the code acquiring position to the destination position.

In the present invention, the image information is dispersed and disposed on a map board at a street corner, a lot number sign, a bulletin board, an advertising board, a poster, an advertising poster hung in a train and the like. That is, the image information is dispersed and disposed with advertising information or the like on various indoor and outdoor places such as a wall surface, a road surface, a door at a street corner or the like. In the image information, at least information regarding the latitude and longitude of a place for navigating a service user (user) by a service provider putting up an advertisement, a destination position such as an address, the latitude and longitude of the location of an advertising medium having the image information printed, a code acquiring position such as an address, or the like is embedded beforehand. The image information is read by the optical data reader of the portable information processor (portable information terminal), and transmitted through the communication network to the navigation server. At the navigation server, the image information transmitted from the portable information terminal is decoded and converted into character data by the data decoding module and the data converting module. The information of the destination position is not limited to the latitude and longitude, or the address of the location for navigating the service user (user). A method may be used, which obtains position information from the following bits of information corresponding to the position information by using a corresponding cable, a corresponding database or the like:
(a) telephone number of a fixed telephone;
(b) designation of a point on a map;
(c) URL address of a WWW homepage of a company, a store or the like;
(d) e-mail address of a company, a store or the like;
(e) ID of a company name, a name or the like; and
(f) others, an arbitrary attribute name with a one-to-one correspondence to a geographical position of a company, a store or the like on an existing database.

At the navigation server, a guidance route from a code acquiring position to a destination position is searched by using the guidance route searching module, and the guidance route is transmitted to the information processor. As a result, the guidance route is displayed on the display portion (display unit) of the information processor. The service user is navigated to a destination according to the guidance route displayed in navigation information up to the destination sent from the navigation server. If the navigation information sent from the navigation server contains plural bits of map information, or an entire map cannot be displayed on the display unit, a map to be displayed may be switched to another by using the input unit of the information processor, or scrolled.

A sixth feature of the present invention is directed to a web server (or database server) connected through a communication network to an information processor for optically reading image information. That is, the web server (or database server) is an electronic business transaction providing server comprising: (a) a receiver for receiving item intrinsic information at the electronic business transaction providing server, the item intrinsic information being obtained by decoding image information intrinsic to an item by the information processor; (b) a module for obtaining personal information of a current purchaser; (c) a module for executing item purchase settlement by using information integrating the personal information of the current purchaser with the item intrinsic information; (d) a module for transmitting a result of the item purchase settlement to the information processor; (e) a module for searching a database as to the presence of a purchase history using the item intrinsic information; (f) a module for adding a benefit/service code to the personal information of a previous purchaser who has bought the item previously, when a purchase history is present; and (g) a module for recording the personal information of the current purchaser and the item intrinsic information so as to correlate to each other, when no purchase history is present.

For example, if secondary and tertiary introducers of items buy items, a stage may be added for recording item intrinsic information such as item intrinsic numbers so as to be correlated to the item purchasers. Accordingly, benefits/values can also be provided to a primary introducer of an item, and the secondary introducer who are introducers thereof. Thus, it is possible to provide a benefit/value to an optional introducer according to a price, a value or the like of the item.

For the "module for obtaining personal information" according to the sixth feature of the present invention, the following modules are conceivable:
(a) a receiving module (receiver) for receiving personal information recorded in the information processor together with the image information;
(b) a personal information referring module for recording the personal information in the electronic business transaction server, and causing the electronic business transaction server to refer to the personal information or the like; and
(c) a personal information receiving/referring module for installing yet another personal information server, recording the personal information therein, and receiving/referring to the personal information or the like when necessary.

An advantage of (a) is that since the information processor is managed by an owner (user), it is possible to minimize leakage of personal information. Advantages of (b) and (c) are the easy altering and managing of personal information. Another advantage produced is the easy prevention of illegal electronic business transactions when the information processor is lost or the like.

A seventh feature of the present invention is directed to a web server (or database server) connected through a communication network to an information processor capable of optically reading image information. That is, the web server (or database server) is an electronic business transaction providing server, comprising: (a) a receiver for receiving image information from the information processor, the image information having been optically read by the information processor as information necessary for a business transaction; (b) a module for obtaining personal information; (c) a screen displaying module for displaying a screen of designated identification information on a display unit of the information processor according to the designated identification information of the electronic business transaction providing server contained in the image information; (d) an electronic business transaction module for carrying out electronic business transactions; and (e) a delivery address designating module for designating an address for item delivery.

For the "module for obtaining personal information" according to the seventh feature of the present invention, various modules for obtaining personal information, described in the sixth feature of the invention, can be used.

An eighth feature of the present invention is directed to a web server (or database server) connected through a communication network to an information processor capable of optically reading image information. That is, the web server (or database server) is an electronic business transaction providing server, comprising: (a) a receiver for receiving the image information from the information processor, the image information having been optically read by the information processor as information necessary for a business transaction; (b) a module for obtaining personal information; (c) a screen displaying module for displaying a screen of designated identification information on a display unit of the information processor according to the designated identification information of the electronic business transaction providing server contained in the image information; (d) an electronic business transaction module for carrying out electronic business transactions; and (e) an electronic business transaction canceling module for adding an order intrinsic number to each electronic business transaction, and canceling the electronic business transaction.

By using the electronic business transaction providing server according to the eighth feature of the present invention, it is possible for an electronic business transaction provider to receive a cancellation request from a user at an arbitrary time without requiring an operator or the like.

For the "module for obtaining personal information" according to the eighth feature of the present invention, various modules for obtaining personal information, described in the sixth feature of the invention, can be used.

A ninth feature of the present invention is directed to an electronic business transaction method using a system including an information processor capable of optically reading image information, an electronic business transaction providing server, and a communication network for interconnecting the information processor and the electronic business transaction providing server. That is, when the information processor optically reads image information as electronic business transaction information, the electronic business transaction method comprises: (a) a step of causing the electronic business transaction providing server to receive electronic business transaction information optically read by the information processor; (b) a step of causing the electronic business transaction providing server to transmit a screen of designated identification information to the information processor; (c) a step of causing the information processor to execute a determination as to the purchase of an item; (d) a step of instructing the information processor to transmit personal information recorded therein, when an item purchase is carried out; (e) a step of receiving the personal information, and causing the electronic business transaction providing server to execute a business transaction; and (f) a step of causing the electronic business transaction providing server to transmit a result thereof to the information processor.

According to the electronic business transaction method of the ninth feature of the present invention, it is not necessary to enter information such as URL described on paper (printed advertising medium), a street sign, an item package, a liquid crystal display, or an electronic display unit such as a CRT monitor or a television screen, described in the first feature of the invention, visually by using the keyboard. The information can be accurately entered instantaneously through one-touch operation. Accordingly, a consumer and an item provider can both enter necessary information efficiently, and transmit the information to the electronic business providing server. Since reference to the URL is easy, it is possible to provide an electronic business transaction method for easily specifying an item desired by the consumer. Procedures up to item purchase are made easy. A settlement system after the consumer decides item purchase can be made easy. Moreover, it is possible to determine to which medium the consumer has referred to buy the item.

Especially, the information processor may optically read image information as information necessary for an electronic business transaction, displayed on an item selling card. Then, electronic business transaction information read from the item selling card by the information processor is transmitted by the information processor to the electronic business transaction providing server. By displaying the image information as information necessary for an electronic business transaction on the item selling card, it is possible to request delivery of an item to a place other than an address recorded in the information processor. Accordingly, it is easier to buy heavy items such as rice, and liquor. In addition, since it is not necessary to display items on a storefront or to keep stock, a selling side can make effective use of small space in a store.

By adding (a) a step of causing the electronic business transaction providing server to transmit address contained in the personal information as a first address for item delivery to the information processor; (b) a step of causing the information processor to authenticate the first address for delivery when an item is delivered to the first address for delivery; (c) a step of causing the information processor to enter a second address for delivery when an address different from the first address for delivery is set as an address for delivery; and (d) a step of causing the electronic business transaction providing server to receive the second address for delivery, an arbitrary address can be set as an address for delivery. Thus, by describing an address of a person to receive a present as an address for delivery, it is possible to make a present of an item.

Here, the "designated identification information" means electronic business transaction information such as identification information of a business transaction providing server represented by a domain of the business transaction providing server for providing items, or URL of an electronic business transaction server, in which detailed information of individual items is described.

For the method of obtaining "personal information" according to the ninth feature of the present invention, the following methods are conceivable:
(a) a method of transmitting personal information recorded in the information processor together with the image information;
(b) a method of recording the personal information in the electronic business transaction server, and causing the electronic business transaction server to refer to the personal information or the like; and
(c) a method of installing other personal information in the server, recording the personal information therein, and receiving/referring to the personal information or the like when necessary.

Advantages of (b) and (c) are the easy altering and managing of personal information. Another advantage to be obtained is the easy prevention of illegal electronic business transactions when the information processor is lost or the like.

Regarding a method of designating an address for delivery, an address or the like may be entered from the input unit such as a keyboard, or an address for delivery converted into image information may be read by the information processor having the optical data reader, and transmitted to the electronic business transaction providing server. Otherwise, an address for delivery may be designated by presenting a previous address for delivery by the electronic business transaction providing server, and selecting this through the information processor.

According to the ninth feature of the present invention, since an optional address can be set as an address for delivery, it also is possible to present an item by describing an address of a person to receive a present as an address for delivery.

A tenth feature of the present invention is an electronic business transaction method comprising: (a) a step of causing an electronic business transaction providing server to receive image information optically read by an information processor; (b) a step of causing the electronic business transaction providing server to check whether the received image information has been coded or not; (c) a step of causing the electronic business transaction providing server to decode a code when it is determined that the image information has been coded; (d) a step of causing the electronic business transaction server to decode the image information; (e) a step of causing the electronic business transaction providing server to convert the image information into character data; (f) a step of causing the electronic business transaction providing server to transmit a screen of designated identification information to the information processor; (g) a step of causing the electronic business transaction providing sever to make the information processor execute a determination as to the purchase of an item; (h) a step of causing the electronic business transaction providing server to instruct the information processor to transmit personal information when item purchase is carried out; and (i) a step of causing the electronic business transaction providing server to receive the personal information, and execute a business transaction.

According to the electronic business transaction method of the tenth feature of the present invention, it is not necessary to enter the information on a print, a street sign, an item package, or an electronic display unit, described in the first feature of the invention, visually by using a keyboard or the like. Information can be accurately entered instantaneously through one-touch operation. Accordingly, a consumer and an item provider can both enter necessary information efficiently, and transmit the information to the electronic business providing server. Since reference to the URL is easy, it is possible to provide an electronic business transaction method for easily specifying an item desired by the consumer. A settlement system after the consumer decides item purchase can be made easy. A process up to item purchase can be made easy. Moreover, it is possible to determine to which medium the consumer has referred to buy the item.

In the electronic business transaction method according to the tenth feature of the present invention, it is the electronic business transaction providing server side that decodes the image information and converts the image information into character data. Thus, it is possible to simplify the structure, make compact and reduce the price of an information processor.

An eleventh feature of the present invention is an electronic business transaction method comprising: (a) a step of causing a gateway server (license registration checking server) to receive image information optically read by an information processor; (b) a step of causing the gateway server (license registration check sever) to check by referring to a license registration data memory whether an electronic business transaction server is under a license contract or not; (c) a step of causing the gateway server (license registration checking server) to enable the information processor to display a screen of designated identification information when it is determined that the electronic business transaction providing server is under the license contract; (d) a step of causing the gateway server (license registration checking server) to instruct the information processor to transmit personal information; (e) a step of causing the gateway server (license registration checking server) to receive the personal information from the information processor; (f) a step of causing the gateway server (license registration checking server) to transmit the personal information to the electronic business transaction providing server; (g) a step of causing the gateway server (license registration checking server) to receive settlement information from the electronic business transaction providing server; and (h) a step of causing the gateway server (license registration checking server) to transmit the settlement information to the information processor.

According to the electronic business transaction method of the eleventh feature of the present invention, it is not necessary to enter information such as the URL described on paper, a street sign, an item package, or an electronic display unit, described in the first feature of the invention, visually by using the keyboard or the like. The information can be accurately entered instantaneously through one-touch operation. Accordingly, a consumer and an item provider can both enter necessary information efficiently, and transmit the information to the electronic business providing server. Since reference to the URL is easy, it is possible to provide an information processor capable of easily specifying an item desired by the consumer. A settlement system after the consumer decides item purchase can be made easy. Moreover, it is possible to determine to which medium the consumer has referred to buy the item.

In the electronic business transaction method according to the eleventh feature of the present invention, it may be the license registration checking server side that decodes the image information and converts the image information into character data. Accordingly, it is possible to simplify the structure, make compact and reduce the price of an information processor.

A twelfth feature of the present invention is directed to a business transaction promoting method using a system including a plurality of information processors capable of optically reading image information, an electronic business transaction providing server, and a communication network for interconnecting the information processors and the electronic business transaction providing server. That is, the business transaction promoting method is an electronic business transaction method comprising: (a) a step of causing a first information processor owned by a current purchaser to read image information intrinsic to an item; (b) a step of causing the electronic business transaction providing server to receive item intrinsic information obtained by decoding the image information by the first information processor, and execute item purchase settlement by using information obtained by integrating personal information of the current purchaser with the item intrinsic information; (c) a step of causing the electronic business transaction providing server to search database as to presence of item purchase history corresponding to the item intrinsic information; (d) a step of adding a benefit/service code to personal information of a previous purchaser who has bought the item previously, when purchase history is present; and (e) a step of recording the personal information of the current purchaser and the item intrinsic information so as to be correlated to each other when no purchase history is present.

When the information processor and the electronic business transaction providing server are connected to the Internet, a network line and a device such as a digital line, a telephone communication line, a packet communication network, a relay repeater, an access point or the like can be used.

The "image information" may be printed on an electronic display unit, paper or matter such as a catalog, a newspaper, a magazine or an advertisement, or a surface of an image information display module such as a card as described in the first feature of the present invention. An item itself may be an image information display module, and displaying (printing) may be made on a part of the item.

In the "image information", when the communication network is the Internet, electronic business transaction information such as identification information of a business transaction providing server represented by a domain of the business transaction providing server for providing items, or the URL of the electronic business transaction server, in which detailed information of individual items is described, in one-dimensional, 1.5-dimensional or two-dimensional code form. Two-dimensional codes used in the present invention may be integrated under one standard, or a plurality of standards may be mixedly present as long as differences between the standards is made clear. On the assumption that analysis of image information is guaranteed, any image information can be used. A "composite code" obtained by combining codes of different categories, such as a combination of one-dimensional and two-dimensional codes, may be used. An advantage of using the composite code is that information owned by the existing one-dimensional code can be used effectively.

In addition, in the "image information", personal information necessary for a transaction with a card providing company or an item selling company may be described beforehand, and the electronic business transaction providing server may be managed by the card providing company or the item selling company. A customer can access a designated URL of the Internet by reading image information displayed on the electronic display unit or the paper using the information processor having an optical data reader. Based on personal information contained in the information processor or recorded on the server, it is possible to easily carry out electronic business transactions such as item purchase.

The "image information intrinsic to specific item" means information intrinsic to each item. The intrinsic information is represented by an item type, an item name, a serial number or the like. Such information may be a name itself or coded information. It is only necessary for such intrinsic information to specify one item.

As the "information processor" of the twelfth feature of the present invention, various portable information terminals such as a cellular phone, a PHS, a PDA, a notebook computer, and an electronic databook, and an electronic device are suitably used as described in the first feature of the invention. Further, a wrist watch, eyeglasses, a belt or shoes, which is attachable to a body or carried, a fixed telephone, a public telephone, a desktop computer, or a television, which is connected to a network, may be used. If a predetermined information processing function is added, an electric device such as a refrigerator or an electronic oven may also be used. Instead of the conventional information processor, an information processor as a dedicated device having the feature of the present invention may be used. Also in this case, the information processor is characterized by including at least a communication network module, an optical data reader for reading image information, and a processing control unit.

For a method of acquiring "personal information" according to the twelfth feature of the present invention, the acquisition methods described in the ninth feature of the invention can be employed.

According to the business transaction promoting method of the twelfth feature of the present invention, by linking intrinsic information of each item with a purchaser, it is possible to clarify a relationship between the purchaser and an introducer. Thus, the introducer can receive a benefit/value, leading to sales promotion. Moreover, when the purchaser having bought an item introduced by the introducer introduces another new purchaser, the introducer can receive a benefit/value. Thus, a chain of introductions can be managed on the computer, making it possible to provide a benefit/value thereof to an arbitrary introducer. Accordingly, the item introducer introduces item purchase to a third party (primary introducer), promoting the sale of the item. Moreover, when the primary introducer introduces the item to yet another third party (secondary introducer), it is possible to provide a benefit/value to the original item purchaser.

A thirteenth feature of the present invention is directed to a delivery address designating method by a system including an information processor capable of optically reading image information, an electronic business transaction providing server, and a communication network for interconnecting the information processor and the electronic business transaction providing server. That is, the delivery address designating method is an electronic business transaction method comprising: (a) a step of causing the electronic business transaction providing server to receive electronic business transaction information from the information processor, the electronic business transaction information being obtained by optically reading image information as information necessary for an electronic business transaction by the information processor; (b) a step of causing the electronic business transaction providing server to transmit a screen of designated identification information of the electronic business transaction providing server to the information processor; (c) a step of causing the information processor to execute a determination as to whether to purchase an item; (d) a step of acquiring personal information when purchase is carried out; (e) a step of causing the electronic business transaction providing server to transmit an address contained in the personal information as a first address for item delivery to the information processor; (f) a step of causing the information processor to authenticate the first address for delivery when an item is delivered to the first address for delivery; (g) a step of causing the information processor to transmit a second address for delivery when an address different from the first address for delivery is set as an address for delivery; (h) a step of causing the electronic business transaction providing server to receive the second address for delivery; and (i) a step of causing the electronic business transaction providing server to execute a business transaction.

For a method of acquiring the "personal information" according to the thirteenth feature of the present invention, the acquiring methods described in the ninth feature of the invention can be employed.

According to the ninth feature of the present invention, since an arbitrary address can be set as an address for delivery, it is possible to present an item by describing an address of a person to receive the present as the address for delivery. Here, the method of designating an address for delivery may be to enter an address or the like from the input unit or the like such as a keyboard, or read an address for delivery converted into image information by the information processor having the optical data reader and transmit the address to the electronic business transaction providing server. In addition, an address for delivery may be designated by presenting a previous address for delivery by the electronic business transaction providing server, and making a selection through the information processor.

A fourteenth feature of the present invention is directed to a business transaction settlement commission method using a system including a first information processor for reading image information, a second information processor for receiving information contained in the image information from the first information processor, an electronic business transaction providing server, and a communication network for interconnecting these units. That is, the business transaction settlement commission method is an electronic business transaction method comprising: (a) a step of causing the first information processor to read the image information as information necessary for an electronic business transaction; (b) a step of causing the second information processor to permit settlement of the electronic business transaction; and (c) a step of causing the electronic business transaction providing server to carry out settlement based on the permission of settlement by the second information processor.

Thus, when an item is bought, its settlement can be requested to a third party. Moreover, the method may further comprise (d) a step of causing the electronic business transaction providing server to transmit a result of settlement to the first and second information processors after the end of the settlement.

The business transaction settlement commission method as the electronic business transaction method according to the fourteenth feature of the present invention can be applied to, for example, the authentication of its settlement by a superior when supplies are bought for a company, a settlement request made by a child to parents, settlement commission to a person desired to buy an item, such as a sweetheart, or the like. Moreover, it is possible to preset limitations on types of items capable of being bought, an upper limit of money, and conditions such as a period.

A fifteenth feature of the present invention is directed to an electronic business transaction method using a system including an information processor capable of optically reading image information, an electronic business transaction providing server, and a communication network for interconnecting these units. That is, the electronic business transaction method comprises: (a) a step of causing the electronic business transaction providing server to receive electronic business transaction information, the electronic business transaction information being obtained by optically reading image information as information necessary for an electronic business transaction by the information processor; (b) a step of causing the electronic business transaction providing server to transmit a screen of designated identification information of the electronic business transaction providing server to the information processor; (c) a step of causing the information processor to execute a determination as to whether to purchase an item; (d) a step of acquiring personal information and causing the electronic business transaction providing server to execute a business transaction when a purchase is carried out; (e) a step of causing the electronic business transaction providing server to transmit a result thereof to the information processor; (f) a step of adding an order intrinsic number to the business transaction; and (g) a step of canceling the business transaction by designating the order intrinsic number.

According to the fifteenth feature of the present invention, for each order intrinsic number added for each electronic business transaction, orderer information such as a name, an ID or an address of an orderer, and item information such as a name or a price of an item are managed. The orderer can cancel an order through the information processor even after ordering. In such a case, the electronic business transaction providing server can specify an intrinsic number of a relevant electronic business transaction, and cancel an order by referring to a history of orders made by the orderer based on the orderer ID. For a method of deciding a relevant transaction, history of orders and order intrinsic numbers may be held in the information processor, and the orderer may connect with the electronic business transaction providing server to request order cancellation with respect to the order intrinsic numbers. After the orderer connects with the electronic business transaction server, a list of orders capable of being canceled by the orderer may be displayed, and the orderer may select one from the list.

Regarding a method of acquiring "personal information" according to the fifteenth feature of the present invention, as in the case of the sixth feature of the invention, the following methods can be provided: (a) personal information recorded in the information processor is transmitted with image information; (b) the personal information is recorded in the electronic business transaction server, and the electronic business transaction server refers to the personal information or the like; and (c) other personal information server is installed, the personal information is recorded therein, and reception/reference to the personal information is carried out when necessary. As advantages of (a), (b) and (c), advantages similar to those described in the foregoing sixth feature can be included.

A sixteenth feature of the present invention is directed to an electronic business transaction method using a system including a remote controller, an information processor capable of optically reading image information, an electronic business transaction providing server, and a communication network for interconnecting these units. That is, the electronic business transaction method comprises: (a) a step of driving the remote controller to display the image information as information necessary for an electronic business transaction on a display unit; (b) a step of causing the information processor to read the image information displayed on the display unit; (c) a step of causing the electronic business transaction providing server to receive electronic business transaction information, the electronic business transaction information being the image information optically read by the information processor; (d) a step of causing the electronic business transaction providing server to transmit a screen of designated identification information of the electronic business transaction providing server to the information processor; (e) a step of causing the information processor to execute a determination as to whether to purchase an item; and (f) a step of acquiring personal information and causing the electronic business transaction providing server to execute a business transaction when purchase is carried out.

Regarding a method of acquiring "personal information" according to the sixteenth feature of the present invention, the acquiring methods described in the ninth feature of the invention can be employed.

According to the business transaction method of the sixteenth feature of the present invention, it is not necessary to enter information such as the URL described on an electronic display unit such as a liquid crystal display, a CRT monitor or a television screen, visually by using the keyboard. Information can be accurately entered instantaneously through one-touch operation. Accordingly, a consumer and an item provider can both enter necessary information efficiently, and transmit the information to the electronic business providing server. Since reference to the URL is easy, it is possible to provide an information processor for easily identifying an item desired by the consumer. A settlement system after the consumer decides item purchase can be made easy. Moreover, procedures up to item purchase can be made easy. Moreover, it is possible to determine to which medium the consumer has referred to buy the item.

The remote controller may be provided with a function similar to that of the information processor. In this case, (a) the step of causing the remote controller to display the image information, and (b) the step of causing the information processor having the optical data reader to read the image information displayed on the remote controller are omitted. The electronic business transaction method of the sixteenth feature of the present invention enables purchasing to be actively carried out through advertising on TV or the like.

Model numbers, product numbers and the like of not only television but also all kinds of home electric appliances are provided as image information. Thus, a process of user registration, a repairing request at the time of failure, a request of support or the like can be simplified.

A seventeenth feature of the present invention is directed to a navigation method comprising: (a) a step of causing an information processor to read image information displayed on an advertising medium; (b) a step of causing the information processor to decode the image information, and convert the image information into character data containing at least information of a code acquiring position and a destination position; (c) a step of causing the information processor to transfer at least the character data through a communication network to a navigation server; and (d) a step of causing the navigation server to transmit a guidance route at least from the code acquiring position to the destination position through the communication network to the information processor.

In this case, for the "portable information processor (portable information terminal)", a cellular telephone, a PHS, a PDA, a notebook computer, an electronic databook or the like are suitably used. Also, a wrist watch, eyeglasses, a belt or shoes, which are attachable to the body or portable, may be used (see first feature).

In the present invention, the image information is displayed on a display surface of an advertising medium. For the advertising medium, a street model is suitably used, which enables external information to be displayed indoors/outdoors on a wall surface, a road surface, a door or the like, such as a map board at a street corner, a lot number sign, a bulletin board, an advertising board, a poster, or an advertising poster hung in a train. In the image information, at least the latitude and longitude of a location for navigating a service user (user) by a service provider putting up an advertisement, information regarding a destination position such as an address, the latitude and longitude of a location of an advertising medium having the image information printed, information regarding a code acquiring position such as an address, or the like is embedded beforehand. The image information is read by the image information reader of the portable information processor (portable information terminal), and the image information is decoded and converted into character data by the data decoding module and the data converting module of the portable information terminal. By using the portable information terminal, the character data is transferred through the communication network to the navigation server.

The information of the destination position is not limited to the latitude and longitude, or the address of the location for navigating the service user (user). From information corresponding to various bits of position information described in the fifth feature, position information can be obtained.

An eighteenth feature of the present invention is directed to a navigation method comprising: (a) a step of causing an information processor to read image information displayed on an advertising medium; (b) a step of transferring at least the image information from the information processor through a communication network to a navigation server; (c) a step of causing the navigation server to decode the image information, and convert the image information into character data containing at least information of a code acquiring position and a destination position; and (d) a step of causing the navigation server to transmit a guidance route at least from the code acquiring position to the destination position through the communication network to the information processor.

In the navigation method according to the eighteenth feature of the present invention, the navigation server includes a data decoding module for decoding the image information, and a code converting module for converting the image information into character data. Accordingly, the information processor only needs to transmit the image information read by the optical data reader in its original form through the communication network to the navigation server. Thus, it is possible to simplify the structure, make compact and reduce the price of an information processor.

As in the case of the navigation method of the seventeenth feature of the present invention, the image information is displayed on a map board at a street corner, a lot number sign, a bulletin board, an advertising board, a poster, an advertising poster hung in a train or the like. In the image information, latitude and longitude of a place of a location for navigating a user by a service provider putting up an advertisement, information regarding a destination position such as an address, the latitude and longitude of a place of an advertising medium having the image information printed, information regarding a code acquiring position such as an address or the like is embedded beforehand. The image information is read by the image information reader of the portable information terminal, and this image information is transmitted in its original form through the communication network to the navigation server. Then, the image information is decoded and converted into character data by the data decoding module and the data converting module of the navigation server. A guidance route from the code acquiring position to the destination position is transmitted through the communication network to the information processor.

A nineteenth feature of the present invention is directed to a navigation method comprising: (a) a step of causing an information processor to read image information displayed on an advertising medium; (b) a step of transferring at least the image information from the information processor through a communication network to an image information analyzing server; (c) a step of causing the image information analyzing server to decode the image information, and convert the image information into character data containing at least information of a code acquiring position and a destination position; (d) a step of causing the image information analyzing server to transmit the character data through the communication network to the navigation server; and (e) a step of causing the navigation server to transmit a guidance route at least from the code acquiring position to the destination position through the communication network to the information processor.

In the navigation method of the nineteenth feature of the present invention, as in the case of the navigation method of the seventeenth feature of the invention, the image information is displayed on a map board at a street corner, a lot number sign, a bulletin board, an advertising board, a poster, an advertising poster hung in a train or the like. In the image information, the latitude and longitude of a location for navigating a user by a service provider putting up an advertisement, information regarding a destination position such as an address, the latitude and longitude of a location of an advertising medium having the image information printed, information regarding a code acquiring position such as an address or the like is embedded beforehand. On the other hand, the image information analyzing server includes a data decoding module for decoding the image information, and a code converting module for converting the image information into character data. Thus, the information processor only needs to transmit the image information read by the optical data reader in its original form through the communication network to the image information analyzing server. Then, the image information is decoded and converted into character data by the data decoding module and the data converting module of the image analyzing server. The character data is transmitted through the communication network to the navigation server. As a result, the navigation server searches a guidance route from the code acquiring position to the destination position, and transmits a result of the searching through the communication network to the information processor.

In the seventeenth to nineteenth features of the present invention, preferably, the character data further contains registration information which is information regarding the service provider and which is capable of being registered in the portable telephone terminal. Here, the "registration information which is information regarding advertising person and which is capable of being registered in the portable information terminal" is, for example, information regarding a name, a profile (e.g., French restaurant), a telephone number, a location, opening hours, holidays or the like of a store (advertising person)advertised in an informational magazine. The location of the store indicates an address, the latitude and longitude or the like of the store. By inserting such an advertisement in a magazine ad, or a catalogue, it is possible to instantaneously fetch the information in the portable information terminal through one-touch operation, and register the information in the portable information terminal.

### BRIEF DESCRIPTION OF THE DRAWINGS

FIG. 1 is a block diagram showing a structure of a portable information processor according to a first embodiment of the present invention.
FIGS. 2A and 2B are schematic views, each showing an example of a two-dimensional code.
FIG. 3 is a flowchart showing an operation of the portable information processor according to the first embodiment of the present invention.
FIG. 4 is a sectional view of the portable information processor according to the first embodiment of the present invention.
FIG. 5 is a system configuration view of when an electronic business transaction is carried out by using the portable information processor according to the first embodiment of the present invention.
FIG. 6 is a block diagram showing a structure of a portable information processor according to a second embodiment of the present invention.
FIG. 7 is a sectional view showing the potable information processor according to the second embodiment of the present invention.
FIG. 8A is a perspective view showing the portable information processor and a code reading attachment according to the second embodiment of the present invention.
FIG. 8B is a view showing a configuration where the portable information processor and the code reading attachment of FIG. 8A are connected together.
FIG. 9A is a perspective view showing another structure (appearance) of the portable information processor and the code reading attachment according to the second embodiment of the present invention.
FIG. 9B is a view showing a configuration where the portable information processor and the code reading attachment of FIG. 9A are connected together.
FIG. 10 is a sectional view of a portable information processor according to a third embodiment of the present invention.
FIG. 11 is a perspective view showing a structure (appearance) of a code reading attachment according to the third embodiment of the present invention.
FIG. 12 is a system configuration view of a communication network system according to a fourth embodiment of the present invention.
FIG. 13 is a block diagram showing a structure of an electronic business transaction providing server according to the fourth embodiment of the present invention.
FIG. 14 is a flowchart showing an operation of a portable information processor according to the fourth embodiment of the present invention.
FIG. 15 is a flowchart showing an operation of the electronic business transaction providing server according to the fourth embodiment of the present invention.
FIG. 16 is a system configuration view of a communication network system according to a fifth embodiment of the present invention.
FIG. 17 is a block diagram showing a structure of a portable information processor according to a fifth embodiment of the present invention.
FIG. 18 is a block diagram showing a structure of an electronic business transaction providing server according to a fifth embodiment of the present invention.
FIG. 19 is a flowchart showing an operation of the portable information processor according to the fifth embodiment of the present invention.
FIG. 20 is a flowchart showing an operation of the electronic business transaction providing server according to the fifth embodiment of the present invention.
FIG. 21 is a system configuration view of a communication network system according to a sixth embodiment of the present invention.
FIG. 22 is a block diagram showing a structure of a license registration checking server according to the sixth embodiment of the present invention.
FIG. 23 is a flowchart of the license registration checking server according to the sixth embodiment of the present invention.
FIG. 24 is a system configuration view of a communication network system according to a seventh embodiment of the present invention.
FIG. 25 is a block diagram showing a structure of a license registration checking server according to the seventh embodiment of the present invention.
FIG. 26 is a flowchart of the license registration checking server according to the seventh embodiment of the present invention.
FIG. 27 is a system configuration view of a communication network system (card using system) according to an eighth embodiment of the present invention.
FIG. 28 is a block diagram showing a structure of an electronic business transaction providing server according to the eighth embodiment of the present invention.
FIG. 29 is a flowchart showing an operation of a portable information processor according to the eighth embodiment of the present invention.
FIG. 30 is a flowchart showing an operation of a card providing company server (electronic business transaction providing server) according to the eighth embodiment of the present invention.
FIGS. 31A and 31B are views, each showing an example of a card information listing method according to the present invention.
FIG. 32 is an explanatory view showing a print portal model, a street portal model, and a product portal model in an electronic business transaction according to a ninth embodiment of the present invention.
FIG. 33 is a system configuration view of a business transaction promoting method according to a tenth embodiment of the present invention.
FIG. 34 is a block diagram showing a structure of an electronic business transaction providing server according to the tenth embodiment of the present invention.
FIG. 35 is a block diagram showing a structure of a license registration checking server according to the tenth embodiment of the present invention.
FIG. 36 is a view showing a data flow and a system configuration of the business transaction promoting method according to the tenth embodiment of the present invention.
FIG. 37 is a flowchart showing processing of the business transaction promoting method according to the tenth embodiment of the present invention.
FIG. 38 is a flowchart showing an operation of the electronic business transaction providing server of the tenth embodiment of the present invention.
FIG. 39 is a derivative view of user introduction according to the tenth embodiment of the present invention.
FIG. 40 is a system configuration view of a card item selling method according to an eleventh embodiment of the present invention.
FIG. 41 is a block diagram showing a structure of an electronic business transaction providing server according to the eleventh embodiment of the present invention.
FIG. 42 is a view showing a data flow and a system configuration of the card item selling method according to the eleventh embodiment of the present invention.
FIG. 43 is a flowchart showing an operation of the card item selling method according to the eleventh embodiment of the present invention.
FIG. 44 is a flowchart showing an operation of the electronic business transaction providing server according to the eleventh embodiment of the present invention.
FIG. 45 is a view showing a data flow and a system configuration of a content buying method according to the eleventh embodiment of the present invention.
FIG. 46 is a flowchart showing an operation of the content buying method according to the eleventh embodiment of the present invention.
FIG. 47 is a view showing a data flow and a system configuration of a content buying method according to a twelfth embodiment of the present invention.
FIG. 48 is a flowchart showing an operation of the content buying method according to the twelfth embodiment of the present invention.
FIG. 49 is a block diagram showing a structure of an electronic business transaction providing server according to a thirteenth embodiment of the present invention.
FIG. 50 is a view showing a data flow and a system configuration of a business transaction settlement commission method according to the thirteenth embodiment of the present invention.
FIG. 51 is a flowchart showing an operation of the business transaction settlement commission method according to the thirteenth embodiment of the present invention.
FIG. 52 is a view showing a data flow and a system configuration of a first modified example of the business transaction settlement commission method according to the thirteenth embodiment of the present invention.
FIG. 53 is a flowchart showing an operation of the first modified example of the business transaction settlement commission method according to the thirteenth embodiment of the present invention.
FIG. 54 is a view showing a data flow and a system configuration of a second modified example of the business transaction settlement commission method according to the thirteenth embodiment of the present invention.
FIG. 55 is a flowchart showing an operation of the second modified example of the business settlement commission method according to the thirteenth embodiment of the present invention.
FIG. 56 is a view of a remote controller according to a fourteenth embodiment of the present invention.
FIG. 57 is a system configuration view of a navigation system according to a fifteenth embodiment of the present invention.
FIG. 58 is a block diagram showing a configuration of a portable information processor (cellular phone) according to the fifteenth embodiment of the present invention.
FIG. 59 is a block diagram showing a configuration of a navigation server (map navigation server) according to the fifteenth embodiment of the present invention.
FIG. 60 is a flowchart showing a flow of a navigation method according to the fifteenth embodiment of the present invention.
FIG. 61 is a system configuration view of a navigation system according to a sixteenth embodiment of the present invention.
FIG. 62 is a block diagram showing configurations of an optical data analyzing server (code analyzing server) and a navigation server (map navigation server) according to the sixteenth embodiment of the present invention.
FIG. 63 is a flowchart showing a flow of a navigation method according to the sixteenth embodiment of the present invention.
FIG. 64 is an explanatory view of a replica portal model in an electronic business transaction according to a nineteenth embodiment of the present invention.
FIG. 65 is an explanatory view of a browsing service in the electronic business transaction according to the nineteenth embodiment of the present invention.
FIG. 66 is an explanatory view of a transaction service in the electronic business transaction according to the nineteenth embodiment of the present invention.
FIG. 67 is an explanatory view of a "my portal" service in the electronic business transaction according to the nineteenth embodiment of the present invention.
FIG. 68 is a view showing a page of a pocketbook having a seal pasted in the electronic business transaction according to the nineteenth embodiment of the present invention.
FIG. 69 is a flowchart showing a flow of access control in an electronic business transaction according to a twentieth embodiment of the present invention.
FIG. 70 is a flowchart showing a method of using a mobile metadatabase using an automatic recognition technology in an electronic business transaction according to a twenty-first embodiment of the present invention.

### BEST MODES OF CARRYING OUT THE INVENTION

Next, description will be made of first to twenty-first embodiments of the present invention with reference to the accompanying drawings. In the drawings, identical or similar portions are denoted by identical or similar reference numerals. It should be noted, however, that the drawings are only schematic, and scales or the like are different from actual size. Thus, specific structures should be judged in consideration of the following explanations. Needless to say, relations or scales of dimensions may differ in some positions from one drawing to another.

### (First Embodiment)

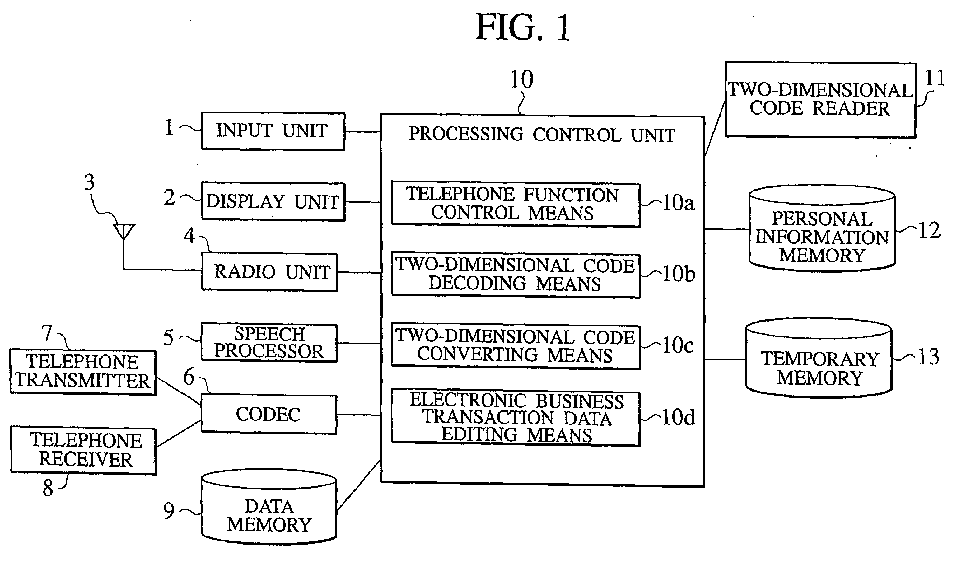

FIG. 1 is a block diagram showing a structure of a cellular telephone incorporating a two-dimensional code reading function as an example of a portable information processor according to a first embodiment of the present invention. The portable information processor of the first embodiment of the invention includes an input unit 1, a display unit 2, a radio unit 4, a voice processor 5, a coder decoder (CODEC) 6, a data memory 9, a processing control unit 10, an optical data reader (two-dimensional code reader) 11, a personal information memory 12, a temporary memory 13 and the like. An antenna 3 is connected to the radio unit 4. The radio unit 4 and the antenna 3 constitute "communication network connecting means (module)" of the invention. A telephone transmitter 7 and a telephone receiver 8 are connected to the CODEC 6.

The input unit 1 is a keyboard composed of pushbuttons of numerals 0 to 9, symbols of "*", "#", "F", "Δ", "∇", and characters of "DECIDE", "CANCEL" and the like. Accordingly, when a user of the portable information processor of the first embodiment carries out an input operation from the input unit 1, corresponding key information is transmitted to the processing control unit 10. The input unit 1 is not limited to the pushbuttons, and it may be composed of scroll buttons and the like. For the display unit 2, a liquid crystal display (LCD), a light emitting diode (LED) panel, an electroluminescence (EL) panel or the like can be used. In other words, any type can be used for the display unit 2 as long as it displays general information in a standard cellular telephone, for example an entered telephone number, a selected function item, an abbreviated dial and the like, a current state of the portable information processor, a selection menu, a communication result, and others.

The antenna 3 receives and transmits radio waves. The antenna 3 shown in FIG. 1 functions both as a receiving antenna and a transmitting antenna. The radio unit 4 demodulates reception data received through the antenna 3, outputs it to the processing control unit 10, modulates transmission data outputted from the processing control unit 10, and outputs it to the antenna 3. The radio unit 4 may have a configuration of a well-known radio unit. Though not shown, the radio unit 4 can include, for example a low-noise amplifier connected to the antenna (receiving antenna) 3, a mixer connected to the low-noise amplifier, an intermediate frequency (IF) amplifier connected to the mixer, a demodulator connected to the intermediate frequency amplifier, and the like. A baseband signal is outputted from the demodulator, and sent to the processing control unit 10. A signal from a transmitting device, not shown, is entered to the mixer together with a signal from the low-noise amplifier. Further, the radio unit 4 includes a modulator, to which a baseband signal from the processing control unit 10 is entered through a predetermined input terminal, a mixer connected to the modulator, and a power amplifier connected to the mixer. A signal from a transmitting device, not shown, is entered to the mixer together with a signal from the modulator. The power amplifier is connected to the antenna (transmitting antenna) 3.

Alternatively, the radio unit 4 may include a low-noise amplifier connected to an antenna (receiving antenna), a filter connected to the low-noise amplifier, a mixer connected to the filter, an intermediate frequency (IF) amplifier connected to the mixer, an A/D converter connected to the intermediate frequency amplifier, and an A/D converter, and transmit an output of the A/D converter to the processing control unit (processor) 10. Then, the radio unit 4 may include a modulator connected to the processing control unit (processor) 10, a driver amplifier connected to the modulator, a phase shifter connected to the driver amplifier, and a transmission amplifier connected to the phase shifter. The transmission amplifier is connected to the antenna (transmitting antenna) 3.

The telephone transmitter 7 enters the voice of a user through a microphone. The telephone receiver 8 outputs the voice of a communicating opposite party through a speaker. The CODEC 6 converts the analog signal of a voice into a digital signal, and a digital signal into an analog signal. The voice processor 5 is a digital signal processor (DSP), and designed to subject a digital voice signal to voice coding/decoding. The data memory 9 incorporates a read only memory (ROM) and a random access memory (RAM). The ROM is a memory for storing a program (recognition code) for overall control of the receiver executed by the processing control unit 10. The RAM is a memory for storing program data or the like used during program execution by the processing control unit 10, or used as a working area.

The processing control unit 10 is in charge of overall control of the portable information processor of the first embodiment of the present invention. The processing control unit 10 includes telephone function control means (module) 10a, a data decoding module (two-dimensional code decoding means) 10b, a code converting module (two-dimensional code converting means) 10c, and an electronic business transaction data editing means (module) 10d. The telephone function control means (module) 10a is means (module) for controlling the telephone functions of a conventional standard cellular telephone. The telephone function control means (module) 10a executes calling control, speech control, various setting operations and the like according to an input from the input unit 1 and a received call.

The two-dimensional code decoding means (module) 10b obtains data read by the two-dimensional code reader 11, and checks whether a two-dimensional code is valid or not. The two-dimensional code converting means (module) 10c converts two-dimensional data read by the two-dimensional code decoding means (module) 10b into character data. Being passed through the two-dimensional code decoding means (module) 10b and the two-dimensional code converting means (module) 10c, the two-dimensional code can be converted from simple image data into data to be read by a computer. The electronic business transaction data editing means (module) 10d is means for editing and integrating personal information stored in the personal information memory 12 and item information obtained by the two-dimensional code converting means (module) 10c, and transmitting it to an external unit. The two-dimensional code reader 11 reads a two-dimensional code containing information embedded regarding items, such as item listing page, item information or the like written on an advertising medium, and fetches it in the portable information processor of the first embodiment of the invention. The personal information memory 12 records personal information of an owner, for example a name, an address, an e-main address, a credit card number and the like. The temporary memory 13 temporarily stores a code read from the two-dimensional code reader 11, and codes obtained by the two-dimensional code decoding means (module) 10b and the two-dimensional code converting means (module) 10c. Though not shown in FIG. 1, needless to say, a power supply circuit, a battery or the like is provided to enable each of these units to function normally.

Data read by the two-dimensional code reader 11 is a two-dimensional code similar to that shown in each of FIGS. 2A and 2B. FIG. 2A shows image information (two-dimensional code) 44a of a matrix type called "QR code," and FIG. 2B shows a two-dimensional code 44b of a stack type called "PDF 417." While a one-dimensional bar code has an information amount of about 20 characters, each of the image information (two-dimensional code) 44a and 44b has an information amount of about 2000 characters.

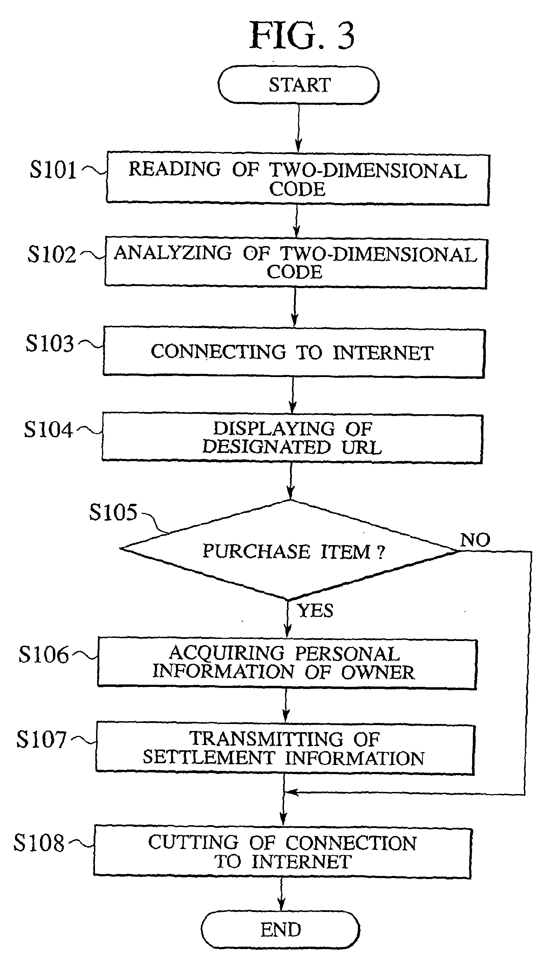

FIG. 3 is a flowchart showing an operation flow of the portable information processor of the first embodiment of the invention shown in FIG. 1.
(a) First, in step S101, a two-dimensional code printed on printed matter such as an advertising medium or on surface of an item is read by the optical data reader (two-dimensional code reader) 11, and stored through the processing control unit 10 in the temporary memory 13.
(b) Then, in step S102, the two-dimensional code stored in the temporary memory 13 is analyzed by the data decoding module (two-dimensional code decoding means) 10b. Further, the two-dimensional code is converted into character data by the code converting module (two-dimensional code converting means) 10d. The converted character data is stored again in the temporary memory 13. The character data obtained here is the URL of an item provider.
(c) In step S103, connection is made to the Internet by using the telephone function control means (module) 10a, the radio unit 4, the antenna 3 and the like and, in step S104, reference is made to the URL of the item provider.
(d) In step S105, the user decides whether or not to buy an item by using the input unit 1 of the code reading attachment. If the item is not bought, the connection with the Internet is cut off in step S108. If the item is bought, the process moves to step S106.
(e) In the case of buying an item, in step S106, the electronic business transaction data editing means (module) 10d obtains personal information stored in the personal information memory 12, and edits it to a form designated by the item provider. In step S107, settlement information for buying the item is transmitted to the item provider. After the end of the transmission, in step S108, the connection with the Internet is cut off.

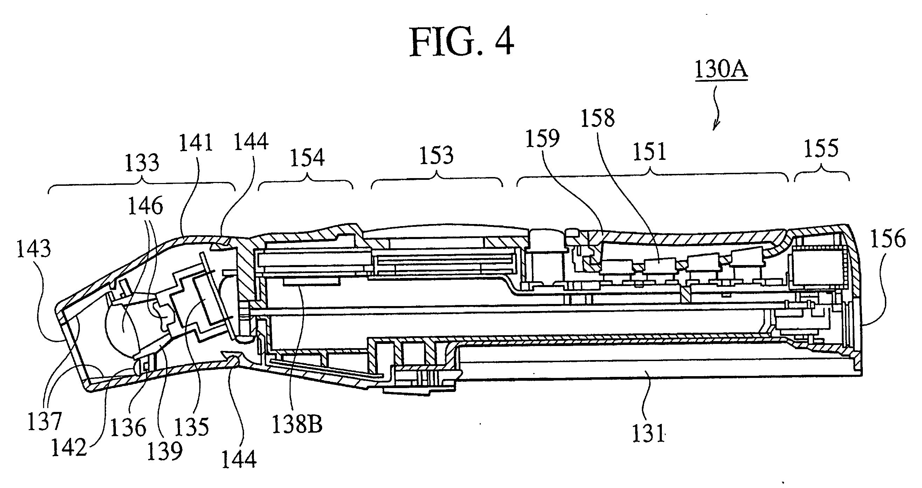

FIG. 4 is a sectional view showing a specific mechanical configuration of the portable information processor of the first embodiment of the invention shown in FIG. 1. As shown in FIG. 4, a portable information processor 130A of the first embodiment includes a telephone receiver 154, a liquid crystal display unit 153, an input operation unit 151, a telephone transmitter (microphone) 155, an interface terminal unit 156, a two-dimensional code reader 133, an IC chip 138B, an antenna (not shown), and a battery 131. The telephone receiver 154 is a speaker for outputting the voice of a communicating opposite party, being equivalent to the telephone receiver 8 in FIG. 1. The liquid crystal display unit 153 is a liquid crystal display (LCD) for displaying general information in the portable information processor of the first embodiment, being equivalent to the display unit 2 in FIG. 1. The input operation unit 151 has pushbuttons including numeral buttons 158 of 0 to 9, a series of function buttons, and the like, being equivalent to the input unit 1 in FIG. 1. Over the numeral buttons 158, a freely opened/closed cover called a flipper 159 is disposed to prevent the pressing of buttons by mistake. Only the pushbuttons are shown on the section of FIG. 4. However, the portable information processor 130A may include scroll buttons or the like on its side face or surface. The telephone transmitter (microphone) 155 is a microphone for entering a voice of a user, being equivalent to the telephone transmitter 7 in FIG. 1. By bringing the telephone transmitter (microphone) 155 close to the mouth of a user, and simultaneously the telephone receiver 154 close to the ear of a user, speaking can be carried out. The interface terminal unit 156 transmits and receives data with the external unit, or charges/discharges the battery 131. The two-dimensional code reader 133 reads a two-dimensional code containing information embedded regarding items, such as an item listing page or item information written on an advertising medium or the like by an optical method, and converts it into an electric signal. In other words, the two-dimensional code reader 133 is equivalent to the two-dimensional code reader 11 in FIG. 1. The IC chip 138B is a system LSI monolithically integrating electronic circuits for realizing the functions of the radio unit 4, the voice processor 5, the CODEC 6, the data memory 9, the processing control unit 10, the personal information memory 12, the temporary memory 13 and the like shown in FIG. 1. Instead of the IC chip 138B, a multichip module or a hybrid IC assembling a plurality chips, each having the function of the radio unit 4, the voice processor 5, the CODEC 6, the data memory 9, the processing control unit 10, the personal information memory 12, the temporary memory 13 and the like, may be used. Alternatively, a hybrid configuration may be used, where only the radio unit 4 is implemented by a microwave monolithic IC (MMIC) or a microwave hybrid IC (MHIC), mounting a high-frequency transmission line such as a microstrip line on a substrate, and the units other than the radio unit 4 are merged in a monolithic IC. The battery 131 supplies power to normally function the portable information processor 130A.

The two-dimensional code reader 133 includes a cylindrical casing 141, a plurality of optical lenses 146, an area sensor (CCD) 135, and an illuminating LED 136. Instead of the illuminating LED 136, a semiconductor laser may be used. One end of the casing 141 is integrated with a casing of the portable information processor 130A at a fitting portion 144. On the other end of the casing 141, an abutting portion 143 is formed to be pressed to an advertising medium or the like. Light emitted from the illuminating LED 136 to the advertising medium pressed to the abutting portion 143 is irradiated to the entire two-dimensional code pattern by a diffusion lens 142 and reflection plates 137. Reflected light from the two-dimensional code pattern is focused on a surface of the area sensor 135 by a plurality of optical lenses. The area sensor 135 converts the focused light of the two-dimensional code pattern into an electric signal. The electric signal of the two-dimensional code pattern is entered to the IC chip 138, and predetermined information processing is executed. The plurality of optical lenses 146 and the area sensor 135 are fixed by a supporting member 139. Accordingly, an optical axis is not shifted, and the two-dimensional code pattern can be focused on the area sensor 135 only by pressing the abutting portion 143 to the advertising medium. By modulating the light emitted from the illuminating LED 136 at a high frequency, and synchronously detecting it or trying other contrivance, the signal can be accurately read even if the abutting portion 143 is not necessarily pressed to the advertising medium.

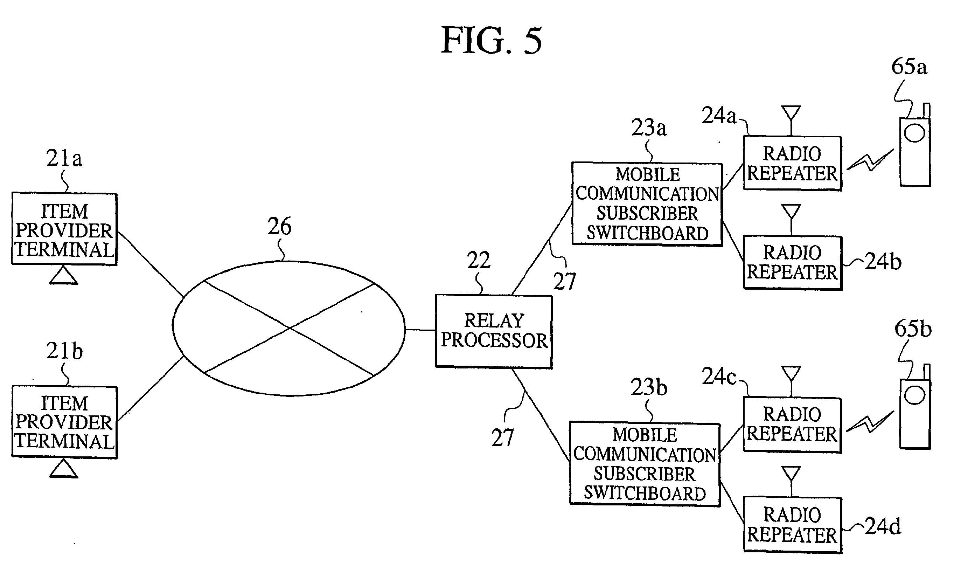

FIG. 5 is a view showing a system configuration when an electronic transaction is carried out by using a plurality of portable information processors of the first embodiment of the invention. The system includes Internet (communication network) 26, to which a first and a second item provider terminals 21a, 21b and the like, and a digital communication network 27, to which a first and a second portable information processors 65a, 65b and the like. Information transmitted from the first portable information processor 65a is sent through radio repeaters 24a, 24b, 24c, 24d and the like, and mobile communication subscriber exchanges 23a, 23b and the like to a relay processor 22. The relay processor 22 mediates data between the Internet 26 and the digital communication network 27.

In the first embodiment of the present invention, the two-dimensional code reader is fixed to the tip of the receiver of the cellular telephone. However, it may be fixed to the side face or the surface of the cellular telephone.

The following cases can be applied to information converted into a two-dimensional code and a system.
(a) A database itself (item, service information, price, advertisement listing medium, or the like) is coded. Thus, wide area diffusion processing can be carried out without any burden being imposed on an information system (network server system and database system).
(b) "A group of data (first-hand information) and operation (registration, access or the like)" regarding a store, an individual or a location, such as cellular telephone number, URL of a homepage, an e-mail address, or position information (latitude and longitude) are coded beforehand. This combination enables a mechanism for rendering various registration execution services to be realized.
(c) Data itself, such as a table having a program or a structure, a selection menu or a matrix, is coded beforehand, and a mechanism for executing and displaying is realized by reading the code. Since the selection menu can be displayed without accessing the network, server load is greatly reduced. Moreover, the editing/organizing of paper of a catalogue can be greatly simplified.

### (Second Embodiment)

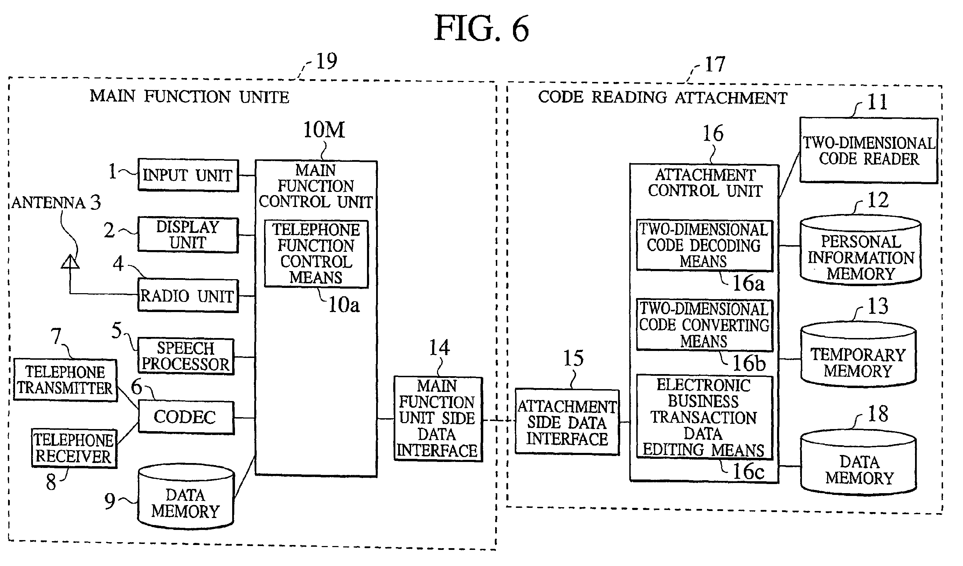

FIG. 6 is a block diagram showing a structure of a portable information processor according to a second embodiment of the present invention. The portable information processor of the second embodiment of the invention includes a main function unit 19 to be connected to Internet, and a code reading attachment 17 as an attachment able to be removed from the main function unit 19.

The main function unit 19 includes an input unit 1, a display unit 2, a radio unit 4, a voice processor 5, a CODEC 6, a data memory 9, a main function control unit 10M, and a main function side data interface 14. An antenna 3 is connected to the radio unit 4. A receiver 7 and a transmitter 8 are connected to the CODEC 6. The code reading attachment 17 includes a two-dimensional code reader 11, a personal information memory 12, a temporary memory 13, an attachment control unit 16, an attachment side data interface 15, and a data memory 18.

Each unit of the main function unit 19 will now be described. The input unit 1 is a keyboard composed of pushbuttons of numerals 0 to 9, symbols of "*", "#", "F", "Δ", "∇". and characters of "DECIDE", "CANCEL" and the like. Accordingly, when a user of the portable information processor of the second embodiment carries out an input operation from the input unit 1, corresponding key information is transmitted to the main function control unit 10M. The input unit 1 is not limited to the pushbuttons, and it may be composed of scroll buttons and the like. For the display unit 2, a liquid crystal display (LED), a light emitting diode (LED) panel, an electroluminescence (EL) panel or the like can be used. In other words, any type can be used for the display unit 2 as long as it displays general information in a standard cellular telephone, for example an entered telephone number, a selected function item, an abbreviated dial and the like, a current state of the portable information processor, a selection menu, a communication result, and others.

The antenna 3 receives and transmits radio waves. The antenna 3 shown in FIG. 6 functions both as a receiving antenna and a transmitting antenna. The radio unit 4 demodulates reception data received through the antenna 3, outputs it to the processing control unit 10, modulates transmission data outputted from the processing control unit 10, and outputs it to the antenna 3. The radio unit 4 may have a configuration of a well-known radio unit. Though not shown, the radio unit 4 can include, for example a low-noise amplifier connected to the antenna (receiving antenna) 3, a mixer connected to the low-noise amplifier, an intermediate frequency (IF) amplifier connected to the mixer, a demodulator connected to the intermediate frequency amplifier, and the like. A baseband signal is outputted from the demodulator, and sent to the processing control unit 10. A signal from a transmitting device, not shown, is entered to the mixer together with a signal from the low-noise amplifier. Further, the radio unit 4 includes a modulator, to which a baseband signal from the processing control unit 10 is entered through a predetermined input terminal, a mixer connected to the modulator, and a power amplifier connected to the mixer. A signal from a transmitting device, not shown, is entered to the mixer together with a signal from the modulator. The power amplifier is connected to the antenna (transmitting antenna) 3.

Alternatively, the radio unit 4 may include a low-noise amplifier connected to an antenna (receiving antenna), a filter connected to the low-noise amplifier, a mixer connected to the filter, an intermediate frequency (IF) amplifier connected to the mixer, an A/D converter connected to the intermediate frequency amplifier, and an A/D converter, and transmit an output of the A/D converter to the processing control unit (processor) 10. Then, the radio unit 4 may include a modulator connected to the processing control unit (processor) 10, a driver amplifier connected to the modulator, a phase shifter connected to the driver amplifier, and a transmission amplifier connected to the phase shifter. The transmission amplifier is connected to the antenna (transmitting antenna) 3.

The telephone transmitter 7 enters the voice of a user through a microphone. The telephone receiver 8 outputs the voice of a communicating opposite party through a speaker. The CODEC 6 converts the analog signal of a voice into a digital signal, and a digital signal into an analog signal. The voice processor 5 is a DSP, and designed to subject a digital voice signal to voice coding/decoding. The data memory 9 incorporates a ROM and a RAM. The ROM is a memory for storing a program (recognition code) for overall control of the receiver executed by the main function control unit 10M. The RAM is a memory for storing program data or the like used during program execution by the main function control unit 10M, or used as a working area.

The main function control unit 10M is in charge of overall control of the portable information processor of the second embodiment of the present invention. It includes telephone function control means (module) 10a. The telephone function control means (module) 10a is a means (module) for controlling functions of a conventional standard cellular telephone. It executes calling control, speech control, various setting operations and the like according to an input from the input unit 1 and a received call. The main function side data interface 14 is an interface of data between the main function unit 19 and the code reading attachment 17.

Each unit of the code reading attachment 17 will now be described. The attachment control unit 16 controls the code reading attachment 17, and includes a two-dimensional code decoding means (module) 16a, a two-dimensional code converting means (module) 16b, and an electronic business data editing means (module) 16c. The two-dimensional code decoding means (module) 16a obtains data read by the two-dimensional code reader 11, and checks whether the two-dimensional code is valid or not. The two-dimensional code converting means (module) 16b converts two-dimensional data read by the two-dimensional code decoding means (module) 16a into character data. Being passed through the two-dimensional code decoding means (module) 16a and the two-dimensional code converting means (module) 16b, the two-dimensional code can be converted from simple image data into data to be read by a computer. The electronic business transaction data editing means (module) 16c is a means for editing and integrating personal information stored in the personal information memory 12 and item information obtained by the two-dimensional code converting means (module) 16b, and transmitting it to an external unit. The two-dimensional code reader 11 reads a two-dimensional code containing information embedded regarding items, such as an item listing page, item information or the like written on an advertising medium, and fetches it in the attachment control unit 16. The personal information memory 12 records the personal information of an owner, for example a name, an address, an e-main address, a credit card number and the like. The temporary memory 13 temporarily stores a code read from the two-dimensional code reader 11, and codes obtained by the two-dimensional code decoding means (module) 16a and the two-dimensional code converting means (module) 16b.

Though not shown in the drawing, needless to say, a power supply, a battery or the like is provided to enable each of these units of the main function unit 19 to function normally. A power supply, a battery or the like necessary for the code reading attachment 17 may be obtained from the main function unit 19, or a power supply, a battery or the like, which is necessary, may be provided inside the code reading attachment 17.

The cellular telephone side data interface 14 and the code reading attachment data interface 15 may be directly connected by a concave-convex form, or by a cable, to which a connector physically suited to these interfaces is connected.

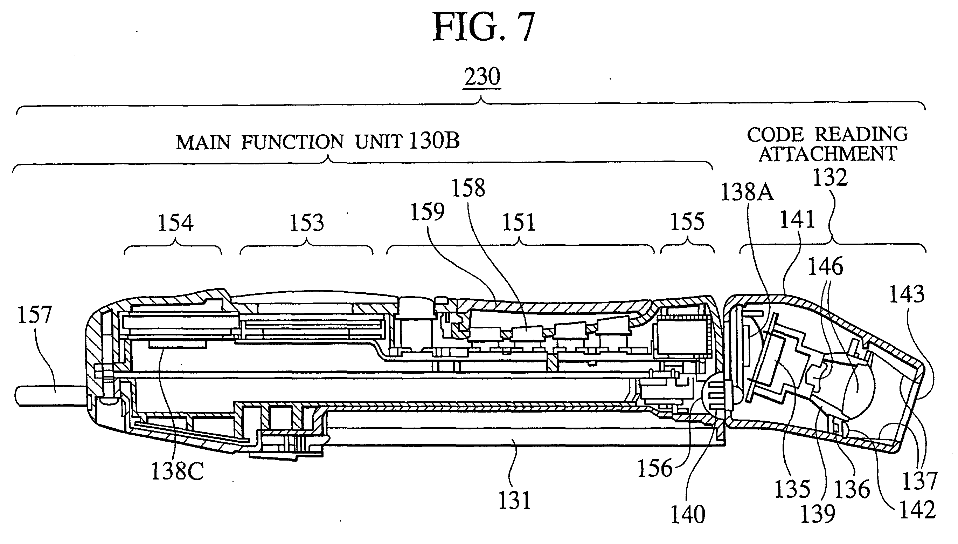

FIG. 7 is a sectional view showing a configuration of a portable information processor 230 of the second embodiment of the invention shown in FIG. 6. The portable information processor 230 of the second embodiment includes a main function unit 130B and a code reading attachment 132.

As shown in FIG. 7, the main function unit 130B includes a telephone receiver 154, a liquid crystal display unit 153, an input operation unit 151, a telephone transmitter (microphone) 155, an interface terminal unit 156, an IC chip 138C, an antenna 157, and a battery 131. Functions and operations of the telephone receiver 154, the liquid crystal display unit 153, the input operation unit 151, the telephone transmitter (microphone) 155, the interface terminal unit 156, the antenna 157 and the battery 131 are similar to those of the portable information processor 130A shown in FIG. 4. The IC chip 138C is a system LSI monolithically integrating electronic circuits for realizing the functions of the radio unit 4, the voice processor 5, the CODEC 6, the data memory 9, the main function control unit 10M and the like, shown in FIG. 6. Compared with the IC chip 138B shown in FIG. 4, the IC chip 138C includes functions other than the personal information memory 12 and the temporary memory 13.

The code reading attachment 132 has a function of reading a two-dimensional code embedded in an advertising medium or the like by an optical method, and includes a casing 141, a plurality of optical lenses 146, an area sensor (CCD sensor) 135, an illuminating LED 136, an IC chip 138 A, and a connector 140. Compared with the two-dimensional code reader 133 shown in FIG. 4, the shape of the casing 141 is different, and the IC chip 138A and the connector 140 are new components. The IC chip 138A is a system LSI monolithically integrating electronic circuits for realizing functions of the attachment control unit 16, the personal information memory 12, the temporary memory 13 and the like shown in FIG. 6. The connector 140 is directly connected to the interface terminal unit 156 by a concave-convex form, and designed to transmit and receive data between the main function unit 130B and the code reading attachment 132. On an opening of the casing 141, an abutting portion 143 is formed to be pressed to an advertising medium or the like to read a two-dimensional pattern. Light emitted from the illuminating LED 136 to the advertising medium pressed to the abutting portion 143 is irradiated to the entire two-dimensional code pattern by a diffusion lens 142 and reflection plates 137. A reflected light from the two-dimensional code pattern is focused on a surface of the area sensor 135 by the plurality of optical lenses 146. The area sensor 135 converts the focused light of the two-dimensional code pattern into an electric signal. The electric signal of the two-dimensional code pattern is entered to the IC chip 138A, and predetermined information processing such as two-dimensional code decoding is executed. When personal information, item information or the like in the IC chip 138A is transmitted to the external unit, such data is sent through the connector 140 and the interface terminal unit 156 to the main function unit 130B side. The plurality of optical lenses 146 and the area sensor 135 are fixed by a supporting member 139. Accordingly, an optical axis is not shifted, and the two-dimensional code pattern can be focused on the area sensor 135 only by pressing the abutting portion 143 to the advertising medium. The code reading attachment 132 can be freely attached or detached from the main function unit 130B, and an electronic business transaction function can be attached to the normal main function unit 130B, if necessary. In FIG. 6, power necessary for the code reading attachment 132 is supplied from the battery 131 of the main function unit 130B through the interface terminal unit 156 and the connector 140.

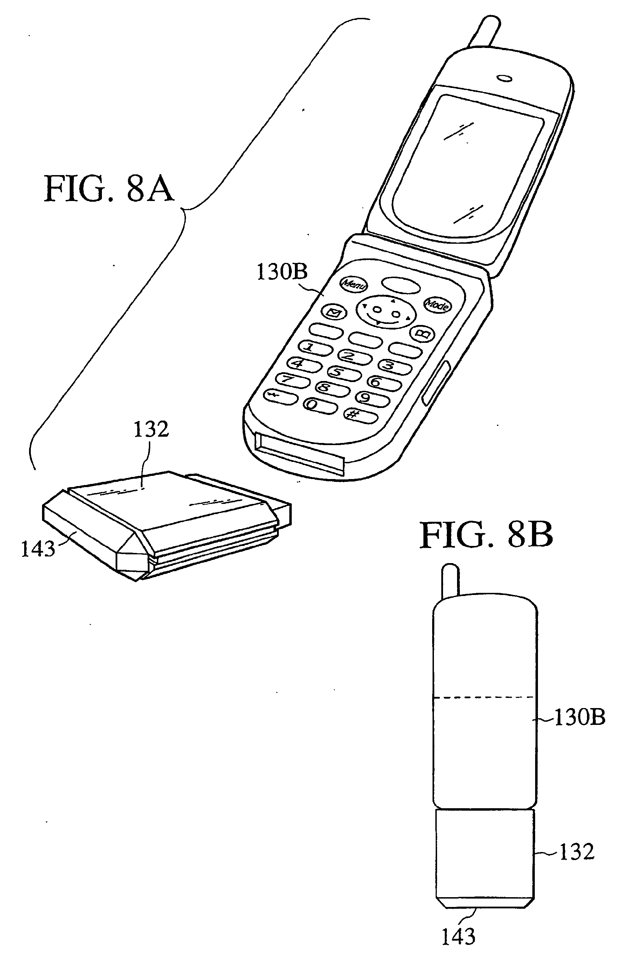

FIG. 8A shows the portable information processor 130B of the second embodiment of the invention and the code reading attachment 132 including the abutting portion 143 for optical reading. FIG. 8B shows an attached state of the portable information processor 130B and the code reading attachment 132. As shown in FIG. 8B, only by pressing the advertising medium to the abutting portion 143 while the portable information processor 130B and the code reading attachment 132 are connected with each other, can image information (two-dimensional code pattern) be focused by the area sensor 135 inside the code reading attachment 132, and the necessary information be read. As shown in FIG. 8B, in the connected state of the portable information processor 130B and the code reading attachment 132, the abutting portion 143 has a structure of being attached vertically in a connecting direction.

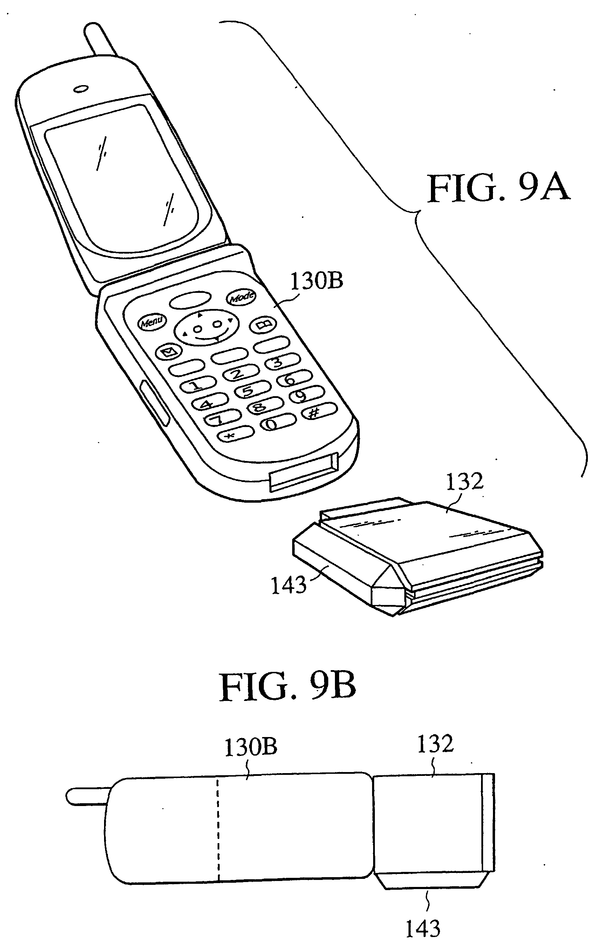

FIG. 9A shows the portable information processor 130B of the second embodiment of the invention and the code reading attachment 132 including the abutting portion 143. FIG. 9B shows an attached state of the portable information processor 130B and the code reading attachment 132. As shown in FIG. 9B, only by pressing the advertising medium to the abutting portion 143 while the portable information processor 130B and the code reading attachment 132 are connected with each other, can a two-dimensional code pattern be focused on the area sensor 135 inside the code reading attachment 132, and the necessary information be read. As shown in FIG. 9B, in the connected state of the portable information processor 130B and the code reading attachment 132, the abutting portion 143 has a structure of being attached perpendicularly in a connecting direction, and the possibility of horizontally using the code reading attachment 132 comprises a difference from the configuration of FIG. 8B.

### (Third Embodiment)

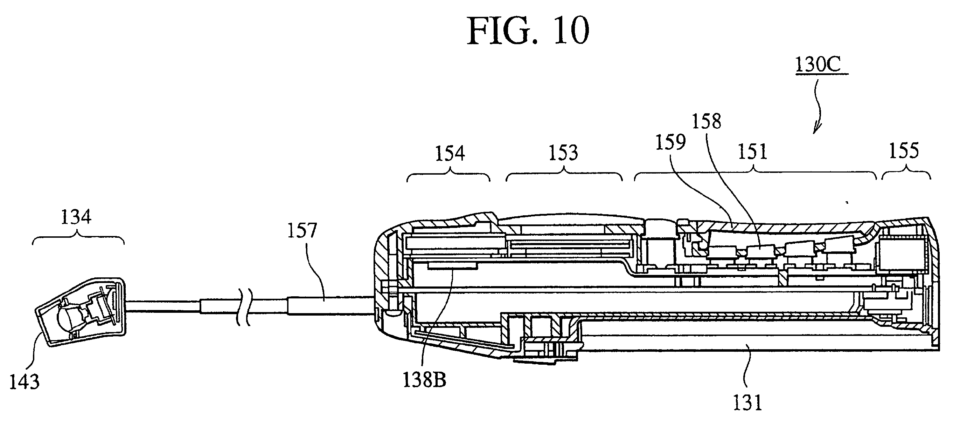

FIG. 10 is a sectional view showing a mechanical configuration of a portable information processor 130C according to a third embodiment of the present invention. A block diagram showing a structure of the portable information processor of the third embodiment of the invention is similar to that of the portable information processor of the first embodiment. As shown in FIG. 10, the portable information processor 130C of the third embodiment includes a telephone receiver 154, a liquid crystal display unit 153, an input operation unit 151, a telephone transmitter (microphone) 155, an IC chip 138B, an antenna 157, a battery 131, and a two-dimensional code reader 134. Functions and operations of the telephone receiver 154, the liquid crystal display unit 153, the input operation unit 151, the telephone transmitter (microphone) 155, the IC chip 138B and the battery 131 are similar to those of the portable information processor 130A shown in FIG. 4. The portable information processor 130C of the third embodiment is different from the portable information processor 130A of the first embodiment in that the two-dimensional code reader 134 is disposed on a tip of an extensible antenna 157. Though not shown in FIG. 10, as in the case of the two-dimensional code reader 133 shown in FIG. 4, the two-dimensional code reader 134 has a function of reading a two-dimensional code embedded in an advertising medium or the like by an optical method, and includes a casing, a plurality of optical lenses, an area sensor (CCD), and an illuminating LED. An electric signal of a two-dimensional code pattern converted by the area sensor (CCD) is entered to the IC chip 138B through a wire disposed inside the antenna 157, and predetermined information processing is carried out. For a two-dimensional code hung up indoors/outdoors so as to be unreachable by the user, such as a wall surface, a road surface or a door, for example a bulletin board at a street, a poster, or an advertising poster hung in a train, by extending the antenna 157, the abutting portion of the two-dimensional code reader 134 can be pressed to the two-dimensional code.

Also in the third embodiment, as in the case of the second embodiment, the information processor may be composed of a main function unit, and a code reading attachment to be removed from the main function unit. In addition, the antenna portion can be detachable.

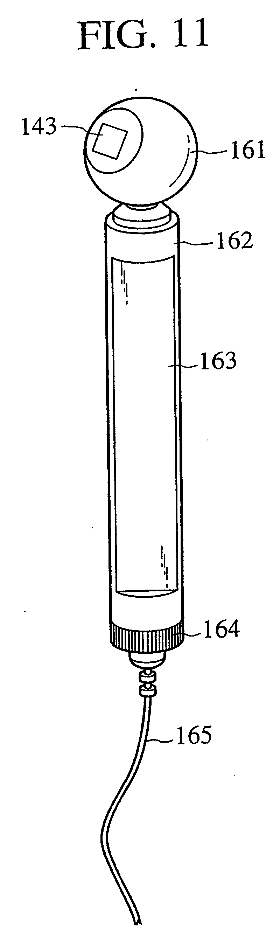

FIG. 11 shows an example of a code reading attachment including a tip reading portion 161, a main body cylindrical portion 162, and a connecting cable 165. The tip reading portion 161 has an abutting portion 143 for optical reading. The inside of the tip reading portion 161 has a structure similar to that of the code reading attachment 132 shown in FIG. 7. That is, the tip reading portion 161 includes, inside, a plurality of optical lenses 146, an area sensor (CCD sensor) 135, an illuminating LED 136, an IC chip 138A, and a connector 140, similar to those in FIG. 7. The IC chip 138A is a system LSI monolithically integrating electronic circuits for realizing functions of the attachment control unit 16, the personal information memory 12, the temporary memory 13 and the like shown in FIG. 6. Light emitted from the illuminating LED 136 to the advertising medium pressed to the abutting portion 143 is irradiated to the entire two-dimensional code pattern by a diffusion lens 142 and reflection plates 137. A reflected light from the two-dimensional code pattern is focused on a surface of the area sensor 135 by the plurality of optical lenses 146. The area sensor 135 converts the focused light of the two-dimensional code pattern into an electric signal. The electric signal of the two-dimensional code pattern is entered to the IC chip 138A, and predetermined information processing such as two-dimensional code decoding is executed. When personal information, item information or the like in the IC chip 138A is transmitted to the external unit, such data is sent through the connector 140 and the interface terminal unit 156 to the main function unit 130B side. The plurality of optical lenses 146 and the area sensor 135 are fixed by a supporting member 139. Accordingly, an optical axis is not shifted, and the two-dimensional code pattern can be focused on the area sensor 135 only by pressing the abutting portion 143 to the advertising medium. The tip reading portion 161 can fetch a character design or the like, and make it switchable, thereby enabling selection to be made according to user's preference.

An arrangement may also be made where an angle of a neck portion of the tip reading portion 161 shown in FIG. 11 can be changed, or rotation can be made. The main body cylindrical portion 162 includes an LED light emitting unit 163 and a power supply switch 164. The LED light emitting unit 163 may be designed to notify normal or abnormal completion of code reading by an LED color or an emitted light pattern. For example, when reading of image information is successful, a green light is emitted. When it results in failure, a red light is emitted. Further, the red light may flash on and off when the reading of image information results in failure. The LED light emitting portion 163 is formed substantially in all areas of the main body cylindrical portion 162. However, it may be provided in a part of the main body cylindrical portion 162. Further, since the LED has high luminance in a small area, the LED light emitting portion 163 may be provided in the tip reading portion 161. The power supply switch 164 can be turned ON/OFF by being rotated, and its attaching position may be above/below the main body cylindrical portion 162, or other places. A method of connecting to the main function unit (information processor) uses the connecting cable 165. However, without using the connecting cable 165, direct connection may be made as in the cases shown in FIGS. 7, 8B and 9B.

### (Fourth Embodiment)

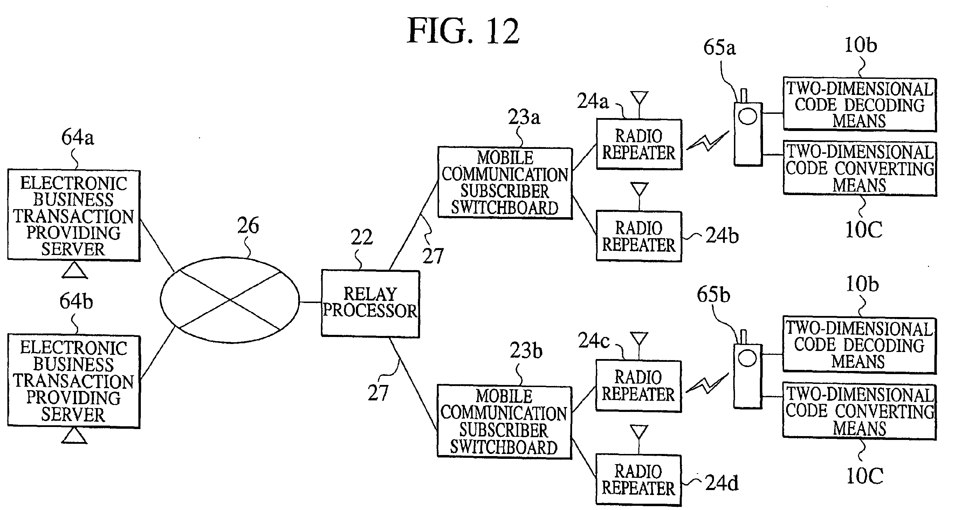

FIG. 12 is a configuration view of a communication network system according to a fourth embodiment of the present invention, in which two-dimensional code decoding means (module) 10b and two-dimensional code converting means (module) 10c are provided in the first embodiment of FIG. 5. Each of fourth and fifth portable information processors 65a and 65b includes the two-dimensional code decoding means (module) 10b and the two-dimensional code converting means (module) 10c. A block diagram showing a structure of each of the fourth and fifth portable information processors 65a and 65b is similar to that of FIG. 1 of the first embodiment, and thus description thereof will be omitted.

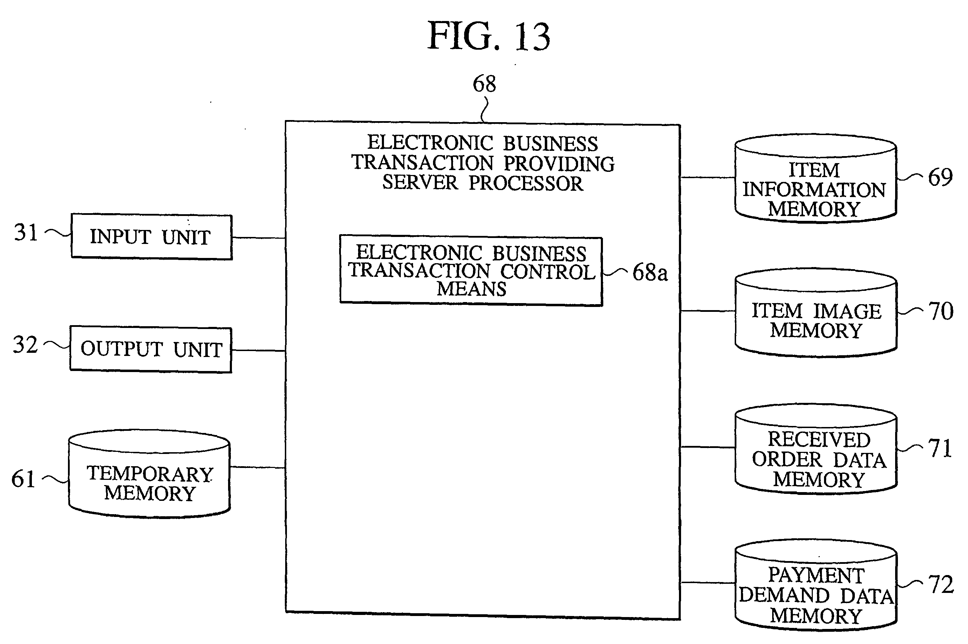

FIG. 13 is a block diagram showing a structure of a fourth electronic business transaction providing server 64a as a web server (or database server). The fourth electronic business transaction providing server 64a includes an input unit 31, an output unit 32, a temporary memory (main memory) 61, an electronic business transaction providing server processor 68, an item information memory 69, an item image memory 70, an order data memory 71, and a payment demand data memory 72. The input unit 31 includes a keyboard, a mouse and the like, and the output unit 32 includes a liquid crystal display or a CRT display, or the like. The temporary memory (main memory) 61 incorporates ROM and RAM. The ROM functions as a program memory for storing a program executed by the electronic business transaction providing server processor 68, and the RAM functions as a data memory for storing data or the like used during program execution by the electronic business transaction server processor 68, or used as a working area. The item information memory 69 stores item information such as an item name, an item number, a model number, color or size, regarding an item handled by the electronic business transaction providing server. The item image memory 70 stores image data regarding an item handled by the fourth electronic business transaction providing server 64a. The order data memory 71 stores data such as a transaction customer, a transaction item, or a transaction date and time regarding an electronic business transaction handled by the electronic business transaction providing server. The payment demand data memory 72 stores demand data to the transaction customer and its payment result data regarding the electronic business transaction handled by the electronic business transaction providing server. The electronic business transaction providing server processor 68 includes electronic business transaction control means (module) 68a for controlling electronic business transactions carried out by the electronic business transaction providing server.

A block diagram showing a structure of the fifth electronic business transaction providing server 64b as a web server (or database server) shown in FIG. 12 is similar to that showing the structure of the fourth electronic business transaction providing server 64a, and thus description thereof will be omitted.

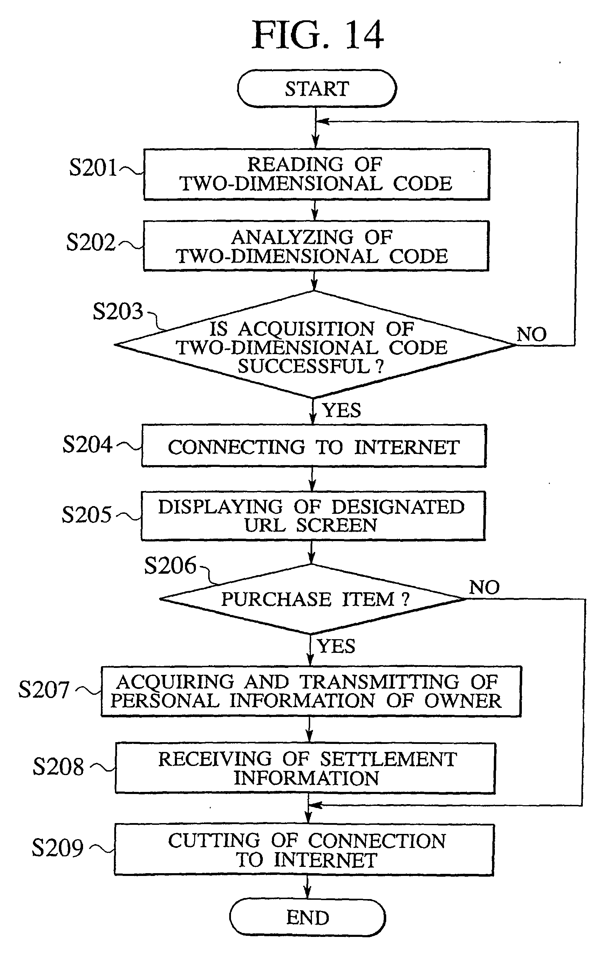

FIG. 14 is a flowchart showing a processing operation flow when the fourth portable information processor 65a of the fourth embodiment of the invention carries out an electronic business transaction.
(a) First, in step S201, a two-dimensional code displayed on an electronic display unit such as a television is read by the optical data reader (two-dimensional code reader) 11, and stored through the processing control unit 10 in the temporary memory (main memory) 13.
(b) Then, in step S202, the two-dimensional code stored in the temporary memory (main memory) 13 is analyzed by the data decoding module (two-dimensional code decoding means) 10b. Further, the two-dimensional code is converted into character data by the code converting module (two-dimensional code converting means) 10d. The converted character data is stored again in the temporary memory (main memory) 13. The character data obtained here is the URL of an item provider.
(c) In step S203, by using a check digit code contained in the two-dimensional code, predetermined calculation is executed to check whether the two-dimensional code has been successfully obtained or not. If the acquisition of the two-dimensional code has been a failure, in step S201, reading of two-dimensional code is carried out again.
(d) In step S204, connection is made to the Internet by using the telephone function control means (module) 10a, the radio unit 4, the antenna 3 and the like, and electronic business transaction information is transmitted. In step S205, reference is made to the URL of the item provider.
(e) In step S206, the user decides whether or not to buy an item by using the input unit 1. If the item is not bought, the connection with the Internet is cut off in step S209. If the item is bought, the process moves to step S207.
(f) In the case of buying the item, in step S207, the electronic business transaction data editing means (module) 10d obtains personal information stored in the personal information memory 12, edits it in a form designated by the item provider, and transmits this information. In step S208, settlement information for buying the item is received from the item provider. At the end of the transmission, in step S209, the connection with the Internet is cut off.

Though not shown, a flowchart showing a processing operation flow when the fifth portable information processor 65b of the fourth embodiment of the invention carries out an electronic business transaction is similar to that of FIG. 14.

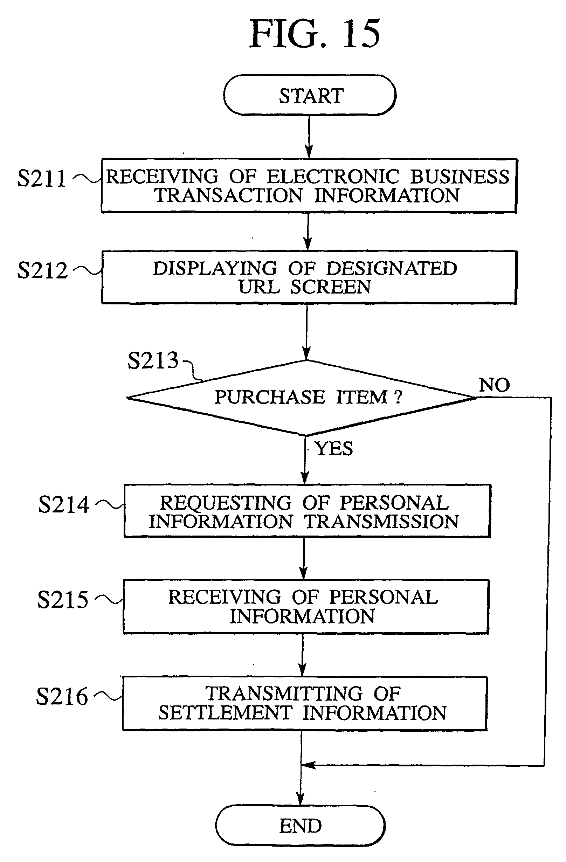

FIG. 15 is a flowchart showing a processing operation flow when the fourth electronic business transaction providing server 64a of the fourth embodiment of the invention carries out an electronic business transaction.
(a) First, in step S211, the electronic business transaction providing server 64 receives electronic business transaction information corresponding to step S204 of FIG. 14.
(b) Then, in step S212, the electronic business transaction providing server 64 transmits a screen of a designated URL to the fourth portable information processor 65a. This corresponds to step S205 of FIG. 14.
(c) In step S213, the user determines whether or not to buy an item. If the item is not bought, the electronic business transaction is finished. If the item is bought, in step S214, a request for transmission of personal information is made to the fourth portable information processor 65a.
(d) Corresponding to step S207 of FIG. 14, the electronic business transaction providing server 64 receives personal information in step S215, and settles a business transaction. In S216, the electronic business transaction providing server 64 transmits the result thereof to the fourth portable information processor 65a.

Needless to say, a flowchart showing a processing operation flow when the fifth portable information processor 65b carries out an electronic business transaction is similar to that of FIG. 15.

### (Fifth Embodiment)

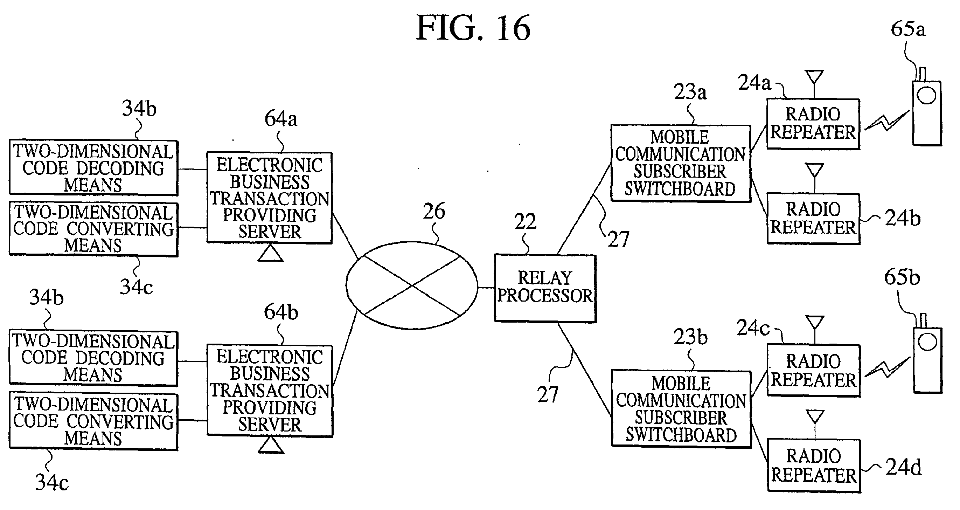

As shown in FIG. 16, compared with FIG. 12 as the system configuration view of the communication network system of the fourth embodiment of the invention, a communication network system according to a fifth embodiment of the present invention is different in that each of the fourth and fifth electronic business transaction providing servers 64a and 64b as web servers (or database servers) includes two-dimensional code decoding means (module) 34b and two-dimensional code converting means (module) 34c. Another difference from the communication network system of the fourth embodiment is that neither of the fourth and fifth portable information processors 65a and 65b includes a two-dimensional code decoding means (module) 10b or a two-dimensional code converting means (module) 10c.

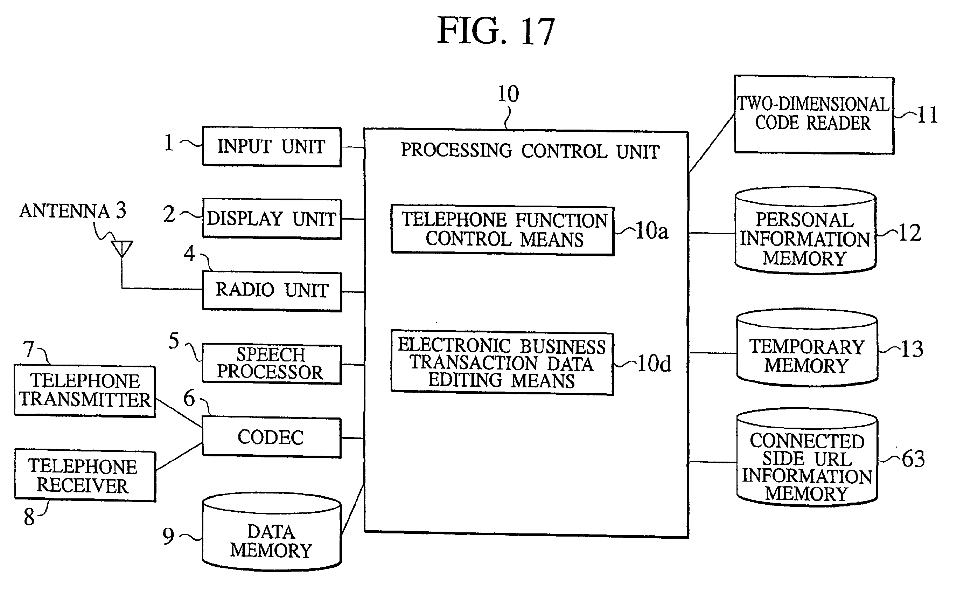

Specifically, as shown in FIG. 17, compared with the system configuration view (see FIG. 1) of the fourth portable information processor 65a described in the fourth embodiment, the fourth portable information processor 65a of the fifth embodiment is different in that neither two-dimensional code decoding means (module) 10b nor two-dimensional code converting means (module) 10c is provided. Further, the fourth portable information processor 65a of the fifth embodiment includes a new component, i.e., a connected side URL information memory 63. The connected side URL information memory 63 stores URL of the fourth or fifth electronic business transaction providing server 64a or 64b for providing electronic business transactions.

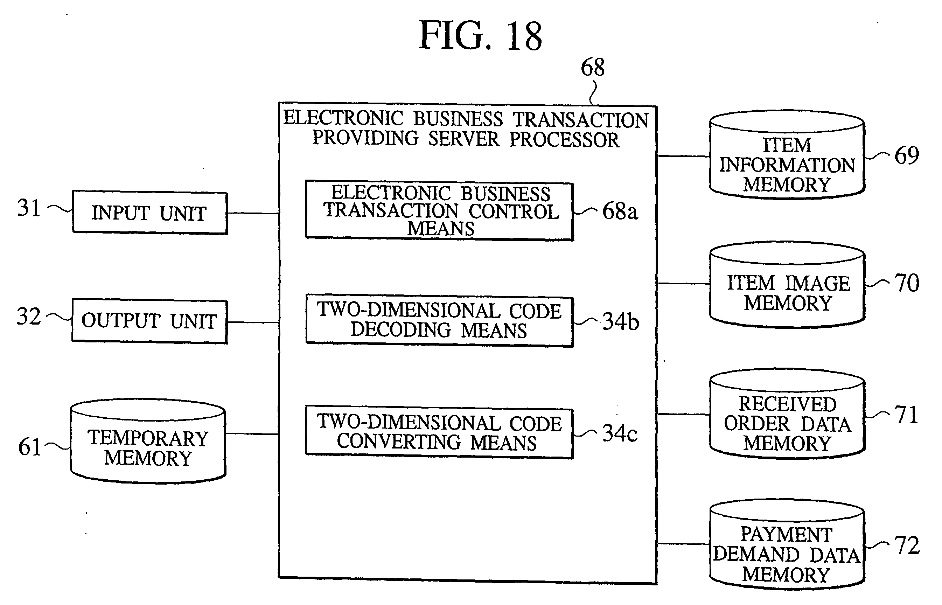

As shown in FIG. 18, compared with the system configuration view (see FIG. 13) of the fourth electronic business transaction providing server 64a of the fourth embodiment, the fourth electronic business transaction providing server 64a of the fifth embodiment is different in that the electronic business transaction providing server processor 68 includes a two-dimensional code decoding means (module) 34b and a two-dimensional code converting means (module) 34c.

That is, devices for decoding and converting two-dimensional codes are different between the fourth and fifth embodiments. In the fourth embodiment, the fourth information processor 65a decodes and converts the two-dimensional code, and transmits the electronic business transaction information to the fourth electronic business transaction providing server 64a. However, in the fifth embodiment, image data of a two-dimensional code read by the fourth information processor 65a is transmitted as image data to the fourth electronic business transaction providing server 64a. Then, at the fourth electronic business transaction providing server 64a, the two-dimensional code is decoded and converted.

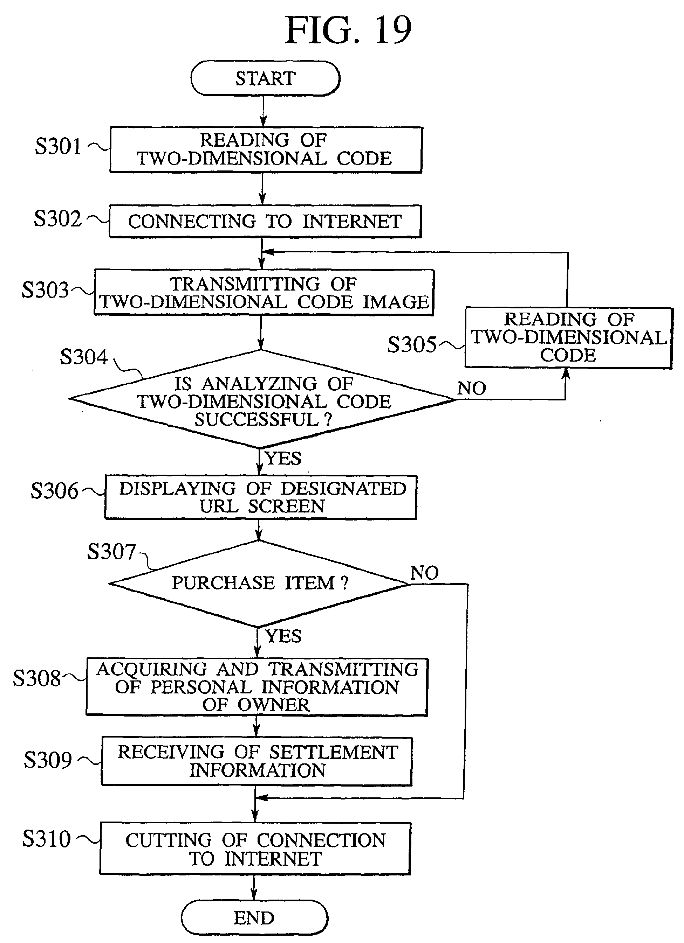

FIG. 19 is a flowchart showing a processing operation flow when the fourth portable information processor 65a of the fifth embodiment carries out an electronic business transaction with particular URL (e.g., fourth electronic business transaction providing server 64a).
(a) First, in step S301, a two-dimensional code displayed on an electronic display unit such as a television is read by the optical data reader (two-dimensional code reader) 11, and its image data is stored through the processing control unit 10 in the temporary memory (main memory) 13.
(b) Then, in step S302, connection is made to the Internet by using the telephone function control means (module) 10a, the radio unit 4, the antenna 3 or the like, and connection is made to designated URL (here, fourth electronic business transaction providing server 64a) stored in the connected side URL information memory 63. Then, in step S303, the image data of the two-dimensional code is transmitted to the fourth electronic business transaction providing server 64a.
(c) In step S304, the fourth portable information processor 65a receives a response as to the success of the analysis of the image data of the two-dimensional code from the connected side server (fourth electronic business transaction providing server 64a). If the analysis has been a failure, in step S305, the fourth portable information processor 65a reads the two-dimensional code, and transmits the image data of the two-dimensional code to the fourth electronic business transaction providing server 64a again in step S303. If the analysis has been successful at the fourth electronic business transaction providing server 64a, in step S306, a screen of URL designated by the two-dimensional code is displayed on the display unit 2 of the fourth portable information processor 65a.
(d) In step S307, the user decides whether or not to buy an item. If the item is not bought, the connection of the fourth portable information processor 65a with the Internet is cut off in step S310. If the item is bought, the process moves to step S308.
(e) In the case of buying the item, in step S308, the electronic business transaction data editing means (module) 10d of the fourth portable information processor 65a obtains personal information stored in the personal information memory 12, edits it in a form designated by the item provider, and transmits the edited information to the fourth electronic business transaction providing server 64a. After the transmission, in step S309, settlement information for buying the item is received from the item provider (fourth electronic business transaction providing server 64a). After the end of the reception, in step S309, the fourth portable information processor 65a cuts off the connection with the Internet.

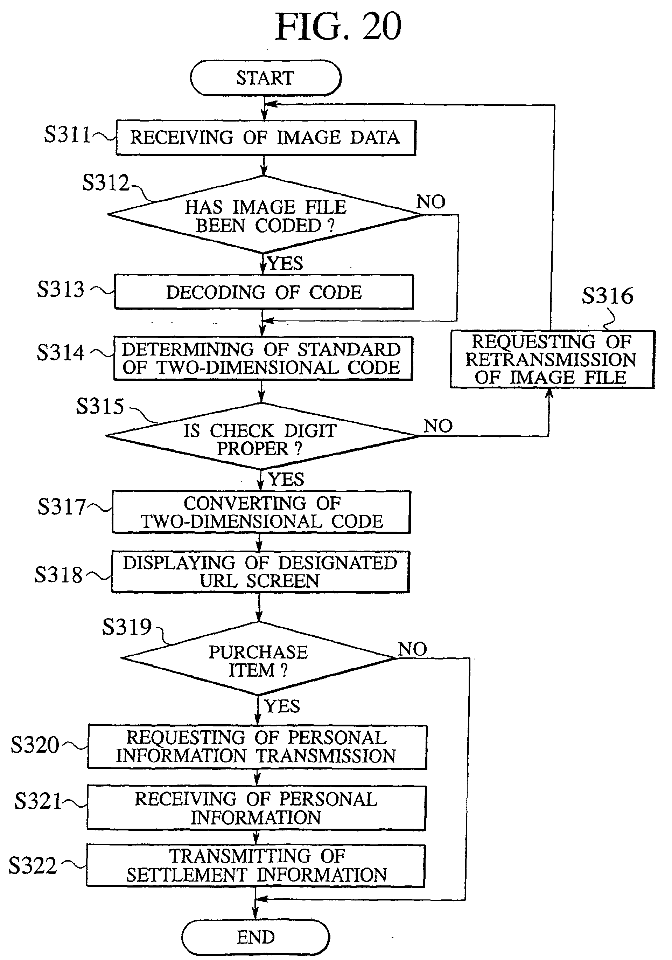

FIG. 20 is a flowchart showing a processing operation flow when the fourth electronic business transaction providing server 64a of the fifth embodiment carries out an electronic business transaction with a particular user (e.g., fourth portable information processor 65a).
(a) First, in step S311, the fourth electronic business transaction providing server 64a receives image data sent from the fourth portable information processor 65a corresponding to step S303 of FIG. 19.
(b) Then, in step S312, the fourth electronic business transaction providing server 64a checks whether the received image data has been coded or not. If the image data has been coded, in step S313, the fourth electronic business transaction providing server 64a decodes the code.
(c) Then, in step S314, the fourth electronic business transaction providing server 64a determines a standard of a two-dimensional code. If standards of two-dimensional codes have been unified beforehand, it is not necessary to execute this step.
(d) The two-dimensional code decoding means (module) 34b of the fourth electronic business transaction providing server 64a decodes the two-dimensional code. In this case, predetermined calculation is carried out by using a check digit code contained in the two-dimensional code, and whether the acquisition of the two-dimensional code has been successful or not is checked. If the fourth electronic business transaction providing server 64a has failed to obtain the two-dimensional code, in step S316, a request for the retransmission of the two-dimensional code is made. In step S311 image data is received again. If the check digit is valid, in step S317, the image data of the two-dimensional code is converted into character data by the two-dimensional code converting means (module) 34c of the fourth electronic business transaction providing server 64a.
(e) Then, in step S318, a screen of designated URL is transmitted to the fourth portable information processor 65a. This corresponds to step S306 of FIG. 19.
(f) In step S319, the user determines whether or not to buy an item. If the item is not bought, the electronic business transaction is finished. If the item is bought, in step S320, a request for transmission of personal information is made to the fourth portable information processor 65a.
(g) Corresponding to step S308 of FIG. 19, personal information is received, and a business transaction is settled in step S321. In S322, a result thereof is transmitted to the fourth portable information processor 65a.

### (Sixth Embodiment)

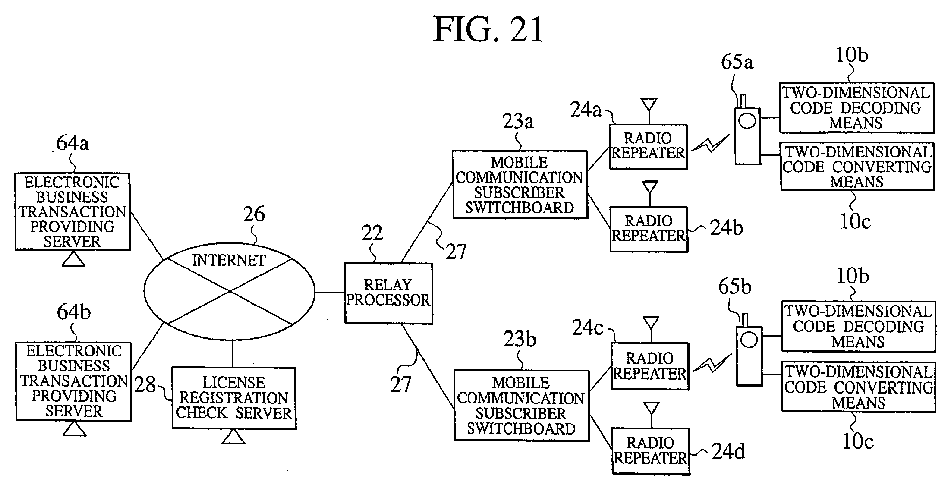

As shown in FIG. 21, compared with FIG. 12 as the system configuration view of the fourth embodiment, a communication network system according to a sixth embodiment of the present invention is different in that a license registration checking server 28 as a gateway server is connected to the Internet 26. The gateway server (license registration checking server) receives connections from fourth and fifth portable information processors 65a and 65n, and determines whether or not to permit the connections to fourth and fifth electronic business transaction providing servers 64a and 64b.

Block diagrams showing structures of a portable information processor and an electronic business transaction providing server of the sixth embodiment of the invention are similar to those of the fourth embodiment of FIGS. 1 and 13, and thus description thereof will be omitted.

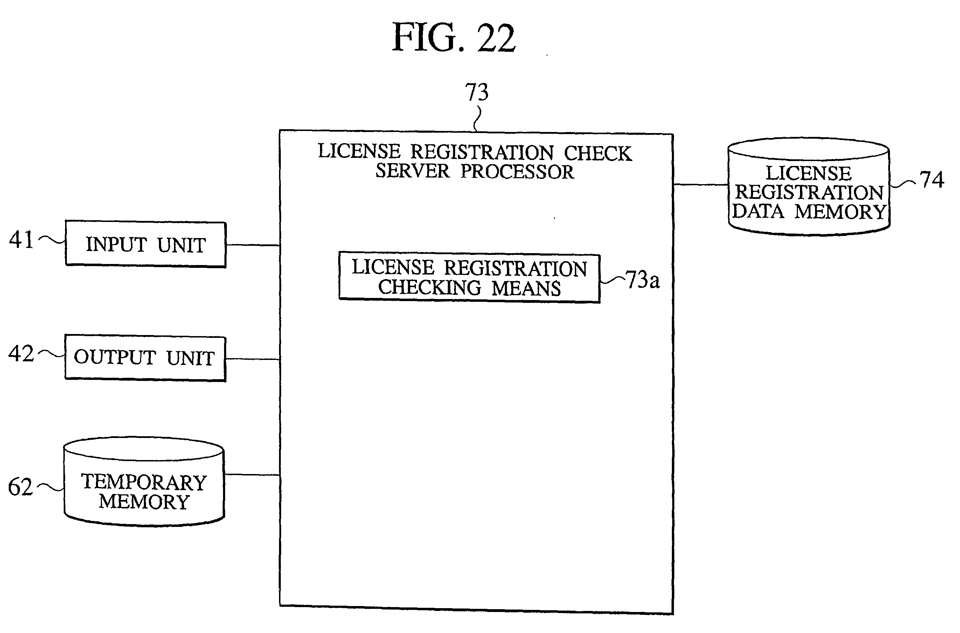

FIG. 22 is a block diagram showing a structure of a license registration checking server (gateway server) 28. The license registration checking server 28 includes an input unit 41, an output unit 42, a temporary memory (main memory) 62, a license registration checking server processor 73, and a license registration data memory 74. The input unit 41 includes a keyboard, a mouse and the like, and the output unit 42 includes a liquid crystal display, a CRT display, or the like. The temporary memory (main memory) 62 incorporates ROM and RAM. The ROM is a memory for storing a program executed by the license registration checking server processor 73, and the RAM is a memory for storing program data or the like used during program execution by the license registration checking server processor 73, or used as a working area. The license registration data memory 74 stores information about the electronic business transaction server to be used by the communication network system of the sixth embodiment. The license registration checking server processor 73 includes a license registration checking means (module) 73a. The license registration checking means (module) 73a checks whether the electronic business transaction providing server described in the transmitted electronic business transaction information has been license-registered or not. That is, the fourth and fifth portable information processors 65a and 65b can connect with only the electronic business transaction server registered therein.

A license of the communication network system of the sixth embodiment may be issued for each electronic business transaction providing server, or for each item provided by the electronic business transaction providing server.

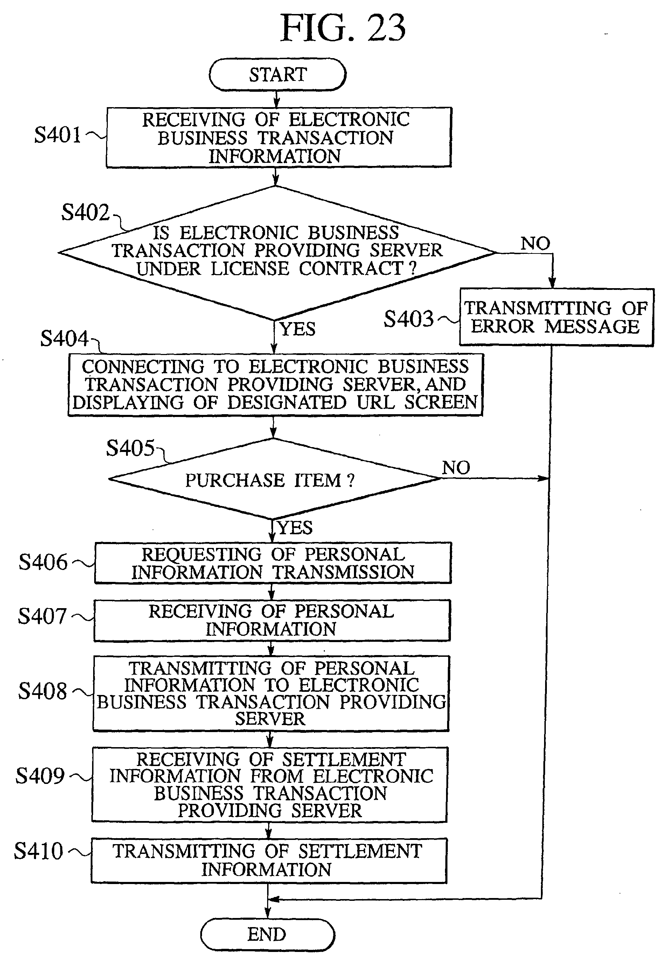

A flowchart showing a processing operation flow of the fourth portable information processor 65a when the fourth portable information processor 65a and the fourth electronic business transaction providing server 64a of the sixth embodiment of the invention carry out electronic business transactions is similar to that of the fourth embodiment of FIG. 14, and thus description thereof will be omitted. On the other hand, FIG. 23 is a flowchart showing a processing operation flow when the license registration checking server 28 of the sixth embodiment of the invention carries out an electronic business transaction.
(a) First, in step S401, corresponding to step S204 of FIG. 14, the license registration checking server 28 receives electronic business transaction information from the fourth portable information processor 65a.
(b) Then, in step S402, the license registration checking server 28 refers to the license registration data memory 74 shown in FIG. 22, and checks whether the fourth electronic business transaction providing server 64a is under license contract or not. If it is not under license contract, in step S403, the license registration checking server 28 transmits an error message to the fourths portable information processor 65a, and finishes processing. If it is under the license contract, the process proceeds to step S404.
(c) In step S404, connection is made to the fourth electronic business transaction providing server 64a, and a screen of designated URL is displayed by the license registration checking server 28.
(d) In step S405, the user decides whether or not to buy an item through the fourth portable information processor 65a. If the item is not bought, the processing is finished. If the item is bought, the process moves to step S406.
(e) In step S406, the license registration checking server 28 makes a request for personal information transmission to the user. Corresponding to step S207 of FIG. 14, personal information is received in step S407. Then, in step S408, the license registration checking server 28 transmits the personal information to the fourth electronic business transaction providing server 64a, and receives settlement information from the fourth electronic business transaction providing server 64a in step S409. This corresponds to steps S215 and S216 of FIG. 15.
(f) Then, in step S410, the license registration checking server 28 transmits the settlement information to the fourth portable information processor 65a.

In the foregoing, the license registration checking server 28 is described as mediating for all the data transmission carried out at the fourth portable information processor 65a and the fourth electronic business transaction providing server 64a. In this case, however, a processing capability required of the license registration checking server 28 is high. Considering the processing capability of the license registration checking server 28, the license registration checking server 28 may first authenticate the fourth electronic business transaction providing server 64a, and for processing thereafter, without going through the license registration checking server 28, data may be directly transmitted between the fourth portable information processor 65a and the fourth electronic business transaction providing server 64a.

### (Seventh Embodiment)

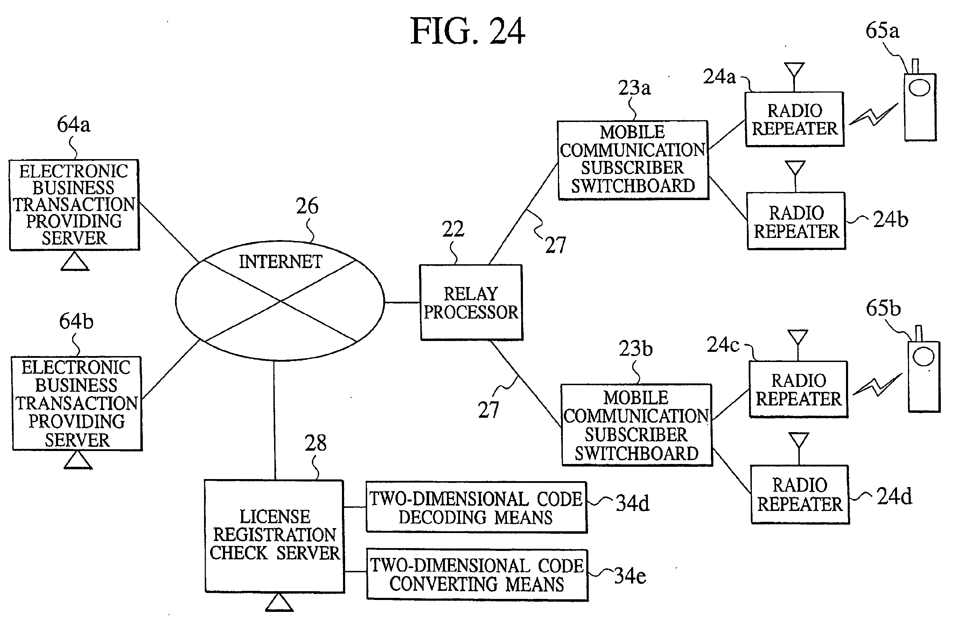

As shown in FIG. 24, compared with FIG. 21 as the system configuration view of the sixth embodiment, a communication network system according to a seventh embodiment of the present invention is different in that a gateway server (license registration checking server) 28 includes a two-dimensional code decoding means (module) 34d and a two-dimensional code converting means (module) 34e, and neither of fourth and fifth portable information processors 65a and 65b include two-dimensional decoding means (module) 10b and a two-dimensional code converting means (module) 10c.

Block diagrams showing structures of the portable information processors 65a and 65b and electronic business transaction providing servers 64a and 64b of the seventh embodiment of the invention are respectively similar to those of the fifth and fourth embodiments of FIGS. 17 and 13. However, in the fifth embodiment, the URL of the fourth or fifth electronic business transaction providing server 64a or 64b was stored in the connected side URL information memory 63. In the seventh embodiment, however, such URLs are stored in the license registration checking server (gateway server) 28.

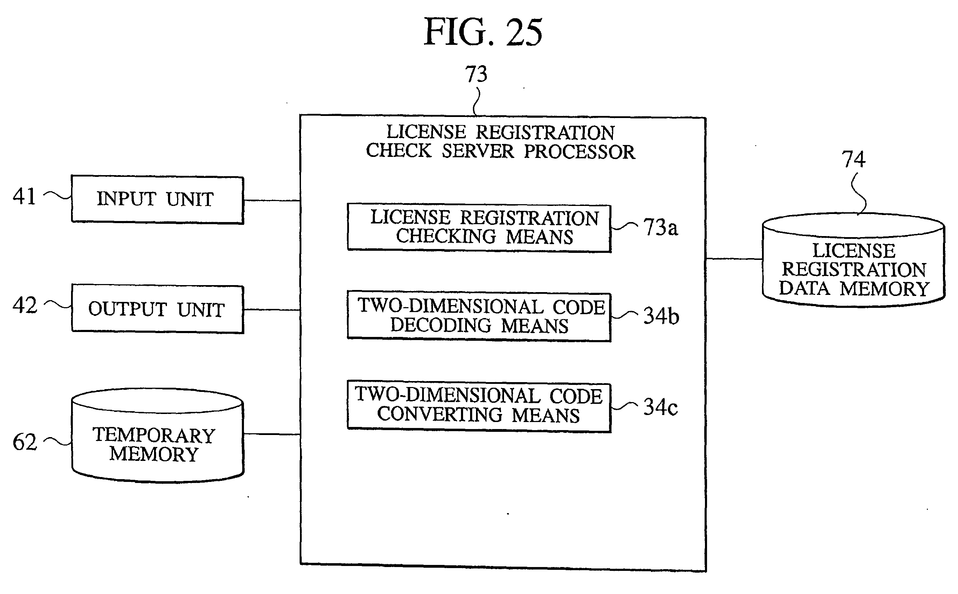

Compared with the license registration checking server of the sixth embodiment shown in FIG. 22, the license registration checking server of the seventh embodiment of the present invention shown in FIG. 25 is different in that a license registration checking server processor 73 includes two-dimensional code decoding means (module) 34d and two-dimensional code converting means (module) 34e. That is, dispositions of the devices for decoding/converting two-dimensional codes are different between the sixth and seventh embodiments. In the sixth embodiment, the two-dimensional code was decoded and converted by the fourth information processor 65a, and then transmitted to the license registration checking server 28. In the seventh embodiment, however, image data of a two-dimensional code read by the fourth information processor 65a is transmitted as it is to the license registration checking server 28, and the two-dimensional code is decoded and converted by the license registration checking server 28.

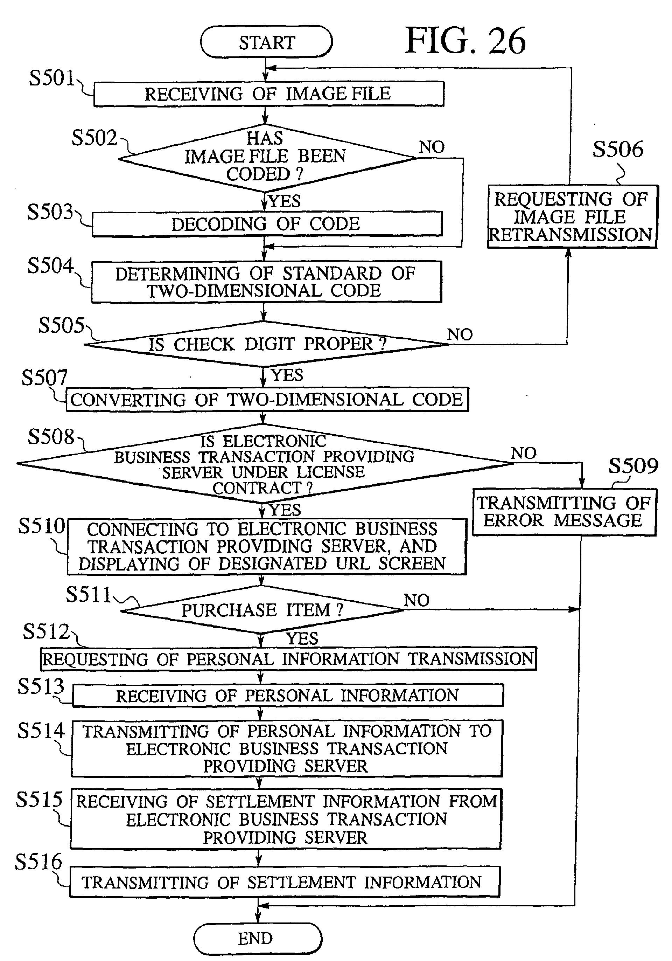

A flowchart showing a processing operation flow when the fourth portable information processor 65a and the fourth electronic business transaction providing server 64a of the seventh embodiment of the invention carry out electronic business transactions is similar to those of the fifth and fourth embodiments of FIGS. 19 and 15, and thus description thereof will be omitted. FIG. 26 is a flowchart showing a processing operation flow when the license registration checking server 28 of the seventh embodiment of the present invention carries out an electronic business transaction.
(a) First, in step S501, corresponding to step S303 of FIG. 19, the license registration checking server 28 receives an image file from the fourth portable information processor 65a.
(b) Then, in step S502, the license registration checking server 28 checks whether the image data received from the fourth portable information processor 65a has been coded or not. If it has been coded, the code is decoded in step S503.
(c) Then, in step S504, the license registration checking server 28 determines a standard of a two-dimensional code sent from the fourth information processor 65a. If standards of two-dimensional codes have been unified beforehand, it is not necessary to execute this step.
(d) The license registration checking server 28 decodes the two-dimensional code sent from the fourth portable information processor 65a by the two-dimensional code decoding means (module) 34d. In this case, predetermined calculation is carried out by using a check digit code incorporated in the two-dimensional code, and whether the two-dimensional code has been successfully obtained or not is checked. If the acquisition of the two-dimensional code has failed, then in step S506, the license registration checking server 28 makes a request for the retransmission of a two-dimensional code to the fourth portable information processor 65a. Then, in step S501, image data is received again from the fourth information processor 65a. If the check digit is valid, in step S507, the two-dimensional code sent from the fourth portable processor 65a is converted into character data by the two-dimensional code converting means (module) 34e.
(e) Then, in step S508, the license registration checking server 28 refers to the license registration data memory 74, and checks whether the fourth electronic business transaction providing server 64a is under license contract or not. If it is not under the license registration, in step S509, an error message is sent to the fourth portable information processor 65a, and processing is finished. If it is under the license contract, the process proceeds to step S510.
(f) In step S510, the license registration checking server 28 makes connection to the fourth electronic business transaction providing server 64a, and displays a screen of a designated URL on the display unit of the fourth portable information processor 65a.
(g) In step S511, the user determines whether or not to buy an item. If the item is not bought, the electronic business transaction is finished. If the item is bought, in step S512, the license registration checking server 28 makes a request for personal information transmission to the fourth portable information processor 65a.
(h) Corresponding to step S308 of FIG. 19, the license registration checking server 28 receives personal information from the fourth portable information processor 65a in step S513. Then, in step S514, the license registration checking server 28 transmits the personal information to the fourth electronic business transaction providing server 64a, and receives settlement information from the fourth electronic business transaction providing server 64a in step S515. This corresponds to steps S215 and S216 of FIG. 15.
(i) Then, in step S516, the license registration checking server 28 transmits the settlement information to the fourth portable information processor 65a.

In the seventh embodiment of the present invention, as in the case of the sixth embodiment, the license registration checking server 28 mediated all the data transmission carried out at the fourth portable information processor 65a and the fourth electronic business transaction providing server 64a. In this case, however, a processing capability required of the license registration checking server 28 is high. Considering the processing capability of the license registration checking server 28, the license registration checking server 28 may first authenticate the fourth electronic business transaction providing server 64a, and for processing thereafter, without going through the license registration checking server 28, data may be directly transmitted between the fourth portable information processor 65a and the fourth electronic business transaction providing server 64a.

### (Eighth Embodiment)

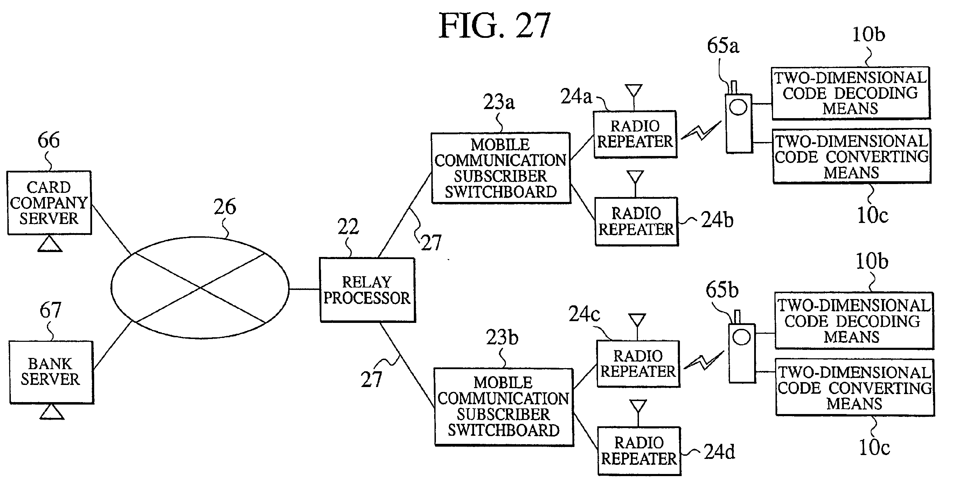

A communication network system (card using system) according to an eighth embodiment of the present invention shown in FIG. 27 includes a card providing company server 66 as an electronic business transaction providing server, Internet (communication network) 26, to which a bank server 67 as an electronic business transaction server is connected, and a digital communication network 27, to which fourth and fifth portable information processors 65a and 65b, and the like are connected. Each of the fourth and fifth portable information processors 65a and 65b includes two-dimensional decoding means (module) 10b and the two-dimensional code converting means (module) 10c. Information from the fourth portable information processor 65a is transmitted through radio repeaters 24a, 24b, 24c, 24d and the like, and mobile communication subscriber switchboards 23a, 23b and the like to a relay processor 22. The relay processor 22 mediates data transfer between the Internet 26 and the digital communication network 27. A block diagram showing a structure of each of the portable information processors 65a and 65b of the eighth embodiment is similar to that of the first embodiment of FIG. 1.

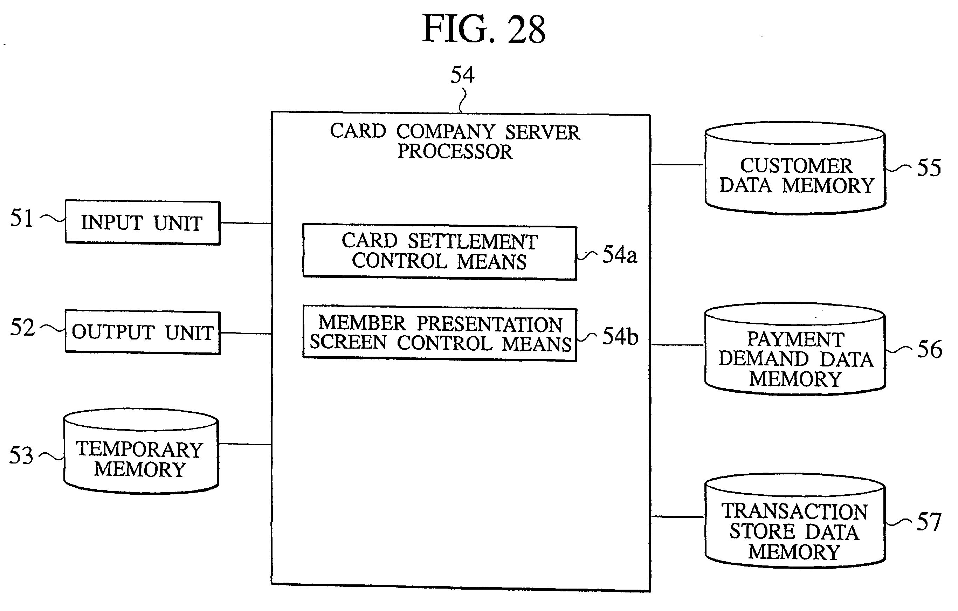

The card providing company (electronic business transaction providing server) 66 shown in FIG. 28 includes an input unit 51, an output unit 52, a temporary memory (main memory) 53, a card providing company server processor 54, a customer data memory 55, a payment demand data memory 56, and a transaction store data memory 57. The input unit 51 includes a keyboard, a mouse and the like, and the output unit 52 includes a liquid crystal display, a CRT display and the like. The temporary memory (main memory) 53 incorporates ROM and RAM. The ROM functions as a memory for storing a program executed by the card providing company server processor 54, and the RAM functions as a memory for storing program data or the like used during program execution by the license registration checking server processor 73, or used as a working area.

The customer data memory 55 records customer personal information of the card providing company, such as a card number, a name, or an address. The payment demand data memory 56 records usage history of a customer, a balance, a charge, a state of payment and the like. The transaction store data memory 57 records, a store code, a name, an address or the like of a store under contract with the card providing company. The card providing company server processor 54 includes a card settlement control means (module) 54a, and a member presentation screen control means (module) 54b. The card settlement control means (module) 54a carries out card settlement processing by referring to/updating the customer data memory 55, the payment demand data memory 56, and the transaction store data memory 57 in business of the conventional card providing company. In the eight embodiment of the present invention, the member presentation screen control means (module) 54b controls a screen displayed for each connection terminal or processing when transaction requests are made from the fourth and fifth portable information processors 65a and 65b. In practice, by using the member presentation screen control means (module) 54b as an interface, each module for realizing the card settlement control means (module) 54a carries out its transaction processing.

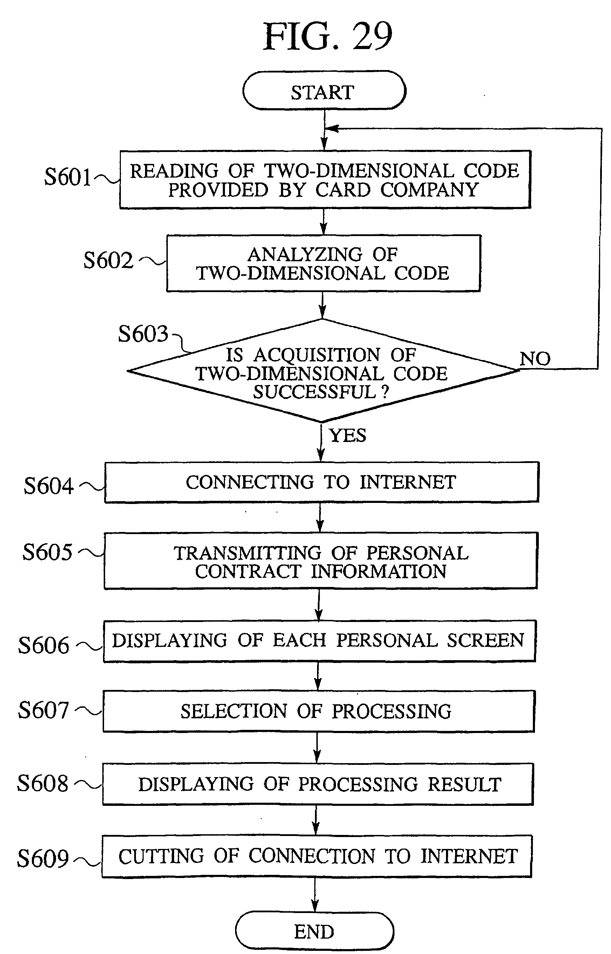

FIG. 29 is a flowchart showing a processing operation flow when the fourth portable information processor 65a of the eighth embodiment of the present invention carries out a transaction with the card providing company server (electronic business transaction server) 66.
(a) First, in step S601, at the fourth portable information processor 65a, a two-dimensional code displayed on an electronic display unit is read by the optical data reader (two-dimensional code reader) 11, and stored through the processing control unit 10 in the temporary memory (main memory) 13.
(b) Then, in step S602, at the fourth portable information processor 65a, the two-dimensional code stored in the temporary memory (main memory) 13 is analyzed by the data decoding module (two-dimensional code decoding means) 10b. Further, at the fourth portable information processor 65a, the two-dimensional code is converted into character data by the code converting module (two-dimensional code converting means) 10d. The converted character data is stored again in the temporary memory (main memory) 13. The character data obtained here is an URL of an item provider.
(c) In step S603, by using a check digit code incorporated in the two-dimensional code, a predetermined calculation is executed to check whether the two-dimensional code has been successfully obtained or not. If the acquisition of the two-dimensional code has been a failure, in step S601, reading of two-dimensional code is carried out again.
(d) In step S604, at the fourth portable information processor 65a, connection is made to the Internet by using the telephone function control means (module) 10a, the radio unit 4, the antenna 3 or the like, and personal contact information provided from the card providing company is transmitted to the card providing company server (electronic business transaction providing server) 66 in step S605. In step S606, reference is made to a screen set for each individual.
(e) In step S607, the fourth portable information processor 65a selects desired processing from the displayed screen, and transmits it to the card providing company server (electronic business transaction providing server) 66. Then, in step S608, a processing result sent from the card providing company server (electronic business transaction providing server) 66 is displayed on the display unit of the fourth portable information processor 65a. After the displaying, the connection with the Internet is disconnected in step S609.

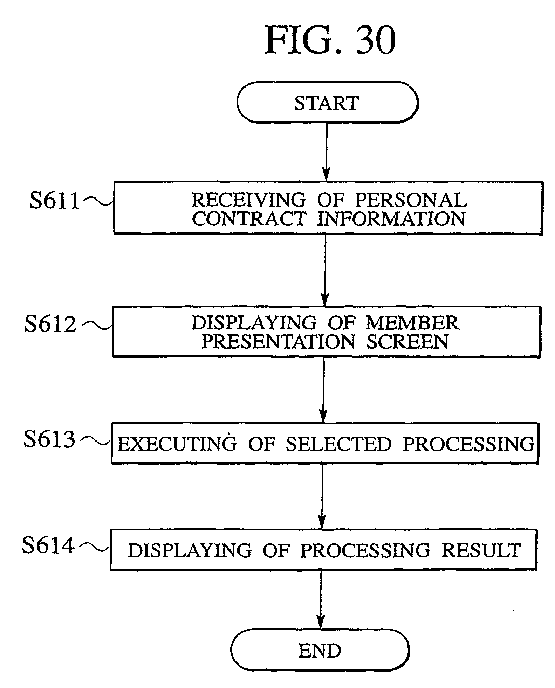

FIG. 30 is a flowchart showing a processing operation flow when the card providing company server (electronic business transaction providing server) 66 of the eighth embodiment of the invention receives a transaction from the fourth portable information processor 65a.
(a) First, in step S611, the card providing company server 66 receives personal contract information corresponding to step S605 of FIG. 29.
(b) Then, based on the personal contract information received in step S611, the card providing company server 66 causes the fourth portable information processor 65a to display a screen for selecting transaction processing to be carried out by each individual by the member presentation screen control means (module) 54b.
(c) In step S613, based on the selection by the fourth portable information processor 65a, the processing selected in step S607 of FIG. 29 is executed. After the end of the processing, in step S614, a result of the processing is displayed by the fourth portable information processor 65a.

In the eighth embodiment of the present invention, the card presenting company server (electronic business transaction server) 66 was described. However, the bank server (electronic business transaction presenting server) 67 has a similar function.

In addition, in the eighth embodiment, the two-dimensional code was decoded at the portable information processor, and the information after the decoding was transmitted to the card providing company server (electronic business transaction providing server) 66. However, as in the case of the fifth embodiment, the two-dimensional code decoding may be carried out at the card providing company server (electronic business transaction providing server) 66. Also, as in the case of the sixth embodiment, a gateway server (license registration checking server) may be installed. Further, as in the case of the seventh embodiment, a gateway server (license registration checking server) may be installed, and two-dimensional code decoding may be carried out at this server.

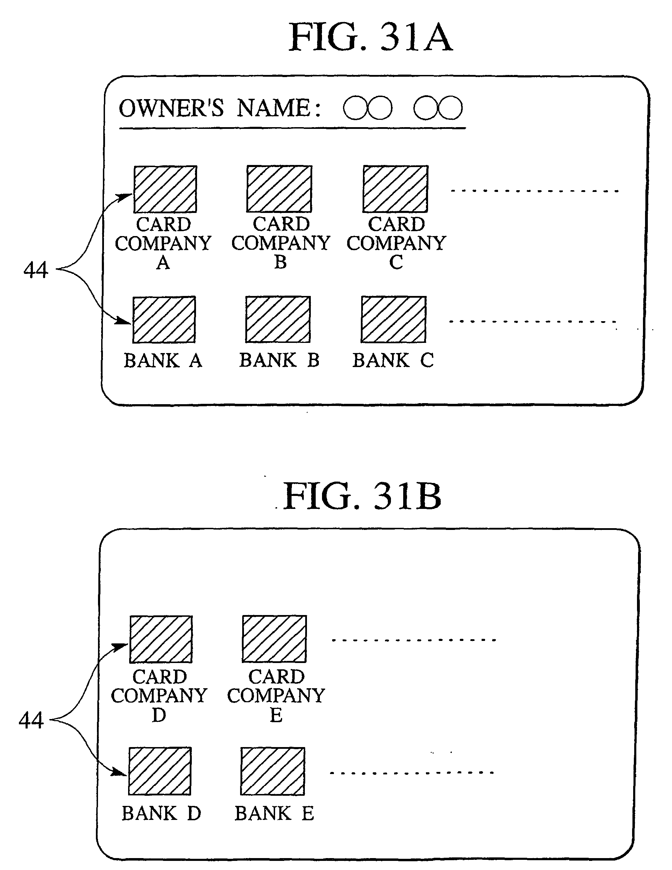

In the eighth embodiment of the present invention, the information of the card providing company is processed as an image converted into a two-dimensional code. Thus, as shown in FIGS. 31A and 31B, one conventional plastic card can contain images provided by 20 to 50 companies.

### (Ninth Embodiment)

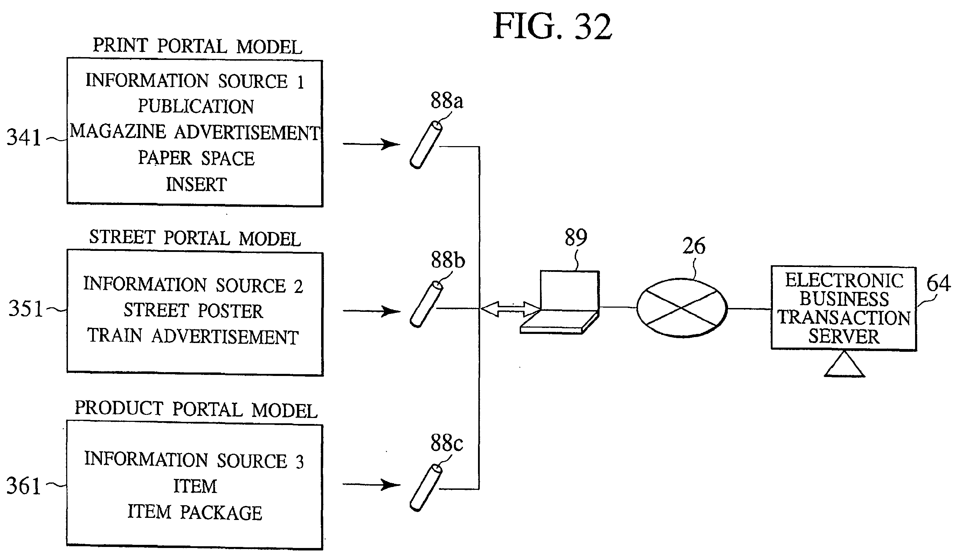

FIG. 32 shows three models of electronic business transactions using optical reading only portable information terminals 88a, 88b, and 88c according to a ninth embodiment of the present invention. The three models are a "print portable model", a "street portal model" and a "product portal model". Hereinafter, these three models will be described in sequence.

### (a) Print Portal Model

By allowing the optical reading only portable information terminal 88a to click image information (two dimensional code) 44 of an item provider side information 341 only once, which includes a UCR of a transaction desired item or a transaction desired service pasted or printed on an advertising medium 341 such as a publication, a magazine ad, a newspaper, or an insert, information of the item/service is printed by the optical reading only portable information terminal 88a. The information can be processed on the WEB of a network terminal 89 through a network 26. Acquisition of information on the advertising medium forms a print portal. In the invention, this electronic business transaction is called a "print portal model".

### (b) Street Portal Model

By allowing the optical reading only portable information terminal 88b to click image information (two dimensional code) 44 of item provider side information only once, which includes a UCR of a transaction desired item of a transaction desired service pasted or printed on a street ad 351 such as a street poster, or an ad in a subway, information of an URL or the like of the item/service is acquired. This information can be directly accessed on the WEB page of a wireless device such as a portable terminal, or a cable device such as a home network terminal. A printing operation of information forms a self portal. In the invention, this electronic business transaction is called a "street portal model".

### (c) Product Portal Model

A two-dimensional code of item provider side information 361 containing the URL of a transaction desired item or a transaction desired service is pasted or printed directly on the transaction desired item or an item package. By allowing the optical reading only portable information terminal 88c to click this image information (two-dimensional code) 44 only once, a user can make direct connection to a user support page when the user reorders an item or when the user needs support for the item. All items become net portals for the item. In the invention, this electronic business transaction is called a "product portable model".

Specific service examples using the foregoing embodiment are (a) from an optional place and an optional medium (TV guide, newspaper, street poster or the like) through the portable information processor, a program described in the medium is reserved on a self video recorder (video recorder provided with a recording function having an IP address connected to the Internet), (b) content to be directly downloaded through the network is downloaded from an optional medium (catalog, insert, pamphlet, magazine ad or the like) through the portable information processor to a net terminal (digital television, game machine, personal computer, music player or the like), and others can be provided.

### (Tenth Embodiment)

An item transaction promoting method according to a tenth embodiment of the present invention is designed to provide a privilege/value to an item introducer by recording particular item purchaser history, and correlating an item and a purchaser.

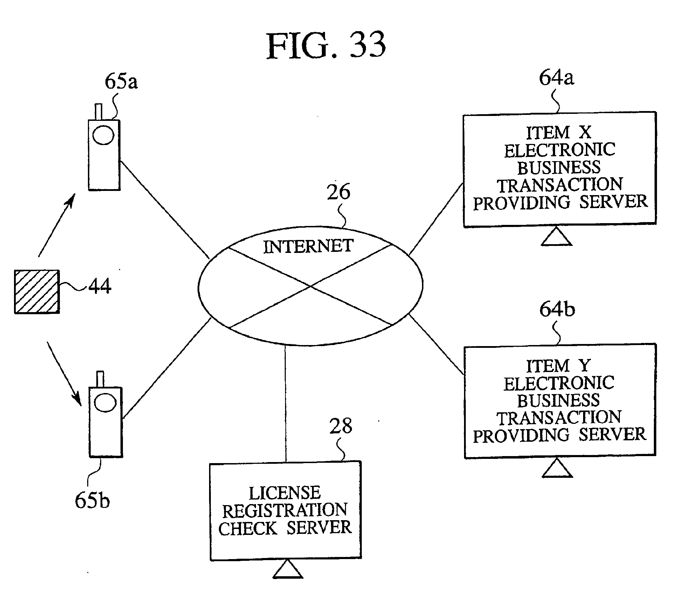

That is, the item transaction promoting method of the tenth embodiment of the present invention shown in FIG. 33 uses a system, which includes image displaying means (module) for displaying an image corresponding to information necessary for an electronic business transaction or item intrinsic information such as an item intrinsic number, first and second information processors 65a and 65b each including an optical data reader for reading an image, and a personal information memory for recording personal information necessary for an electronic business transaction containing at least a personal intrinsic number, an item X electronic business transaction providing server 64a, and a communicating network (Internet) 26 for interconnecting the first and second information processors 65a and 65b and the item X electronic business transaction providing server 64a. An image (two-dimensional code) 44 may be displayed on image displaying means (module) such as an electronic display unit, or printed on paper or on an object such as a catalog, a newspaper, or ad, or on a surface of image displaying means (module) such as a card. An item itself may be image displaying means (module), and the image (two-dimensional code) 44 may be displayed (printed) on a part of the item.

Further, an item X electronic business transaction server 64b, and a gateway server (license registration checking server) 28 may be provided. When the first and second information processors 65a and 65b, the item X and Y electronic business transaction servers 64a and 64b, and the gateway server (license registration checking server) 28 are connected to the Internet, connection is sometimes made to the Internet 26 through a digital communication network, a telephone communication line, a relay processor, an access point or the like. The license registration checking server 28 mediates connection between the first and second information processors 65a and 65b and the item X and Y electronic business transaction providing servers 64a and 64b, and permits the connection. Furthermore, the item X and Y electronic business transaction providing servers 64a and 64b have similar functions. All the items may be handled at one electronic transaction server, or the items may be distributed to optional servers, according to the item to be provided.

A block diagram showing structures of the first and second information processors 65a and 65b is similar to that of the first embodiment of FIG. 1, and thus description thereof will be omitted.

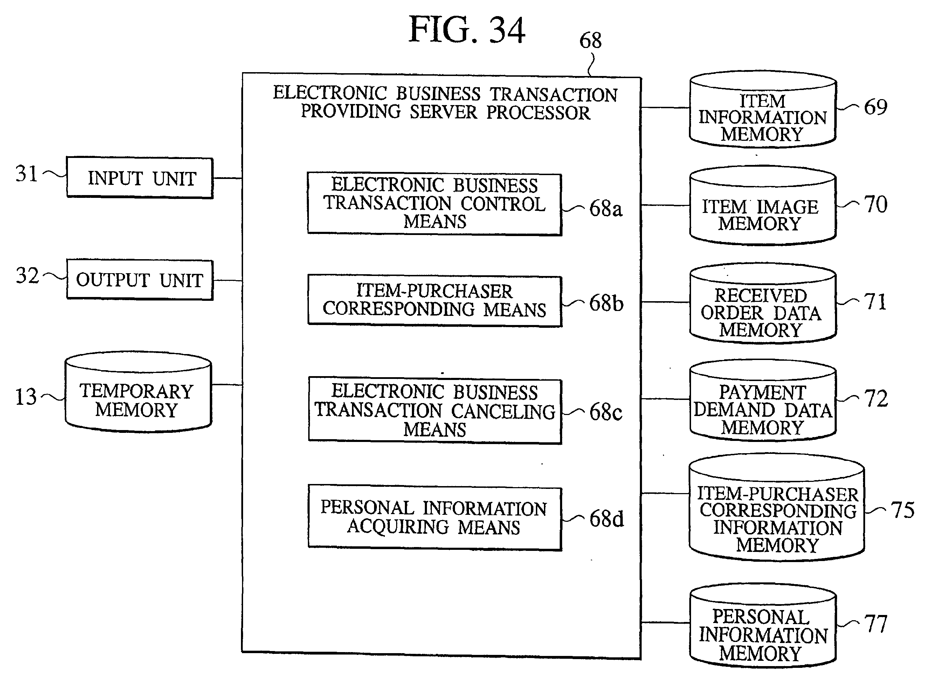

FIG. 34 is a block diagram showing in detail the item X electronic business transaction providing server 64a shown in FIG. 33. A block diagram of the item Y electronic business transaction server 64b shows a similar structure. The item X electronic business transaction server 64a includes an input unit 31, an output unit 32, a temporary memory (main memory) 13, an electronic business transaction providing server processor 68, an item information memory 69, an item image memory 70, an order data memory 71, a payment demand data memory 72, an item-purchaser correlation information memory 75, and a personal information memory 77. The input unit 31 includes a keyboard, a mouse and the like, and the output unit 32 includes a liquid crystal display or a CRT display and the like. The temporary memory (main memory) 13 incorporates ROM and RAM. The ROM functions as a program memory or the like for storing a program executed by the electronic business transaction server processor 68, and the RAM functions as a data memory or the like for storing data or the like used during program execution by the electronic business transaction processor 68, or used as a working area. The item information memory 69 stores item information such as an item name, an item number, a model number, color or size, regarding an item handled by the electronic business transaction providing server. The item image information memory 70 stores an image regarding an item handled by the first electronic business transaction providing server 64a. The order data memory 71 stores data such as a transaction partner, a transaction item, or a transaction date and time regarding an electronic business transaction handled by the electronic business transaction providing server. The payment demand data memory 72 stores demand data to the transaction partner and its payment result data regarding the electronic business transaction handled by the electronic business transaction providing server. The item-purchaser correlation information memory 75 stores information correlated to information of a customer who has bought the item. The personal information memory 77 records a settlement procedure indicated by a name, an address, a card or the like with respect to a uniquely set personal ID. The electronic business transaction providing server processor 68 includes electronic business transaction control means (module) 68a for controlling electronic business transactions carried out by the electronic business transaction providing server, item-purchaser correlating means (module) 68b for correlating item intrinsic information such as an item intrinsic number with a purchaser intrinsic number, electronic business transaction canceling means (module) 68c for canceling an electronic business transaction, and personal information obtaining means (module) 68e. The electronic business transaction canceling means (module) 68c cancels an electronic business transaction based on an order intrinsic number provided for each electronic transaction. The personal information obtaining means (module) 68e obtains information such as a name, an address or a settlement procedure necessary for settling an electronic transaction from the personal information memory 77 based on a purchaser personal ID received from the information processor.

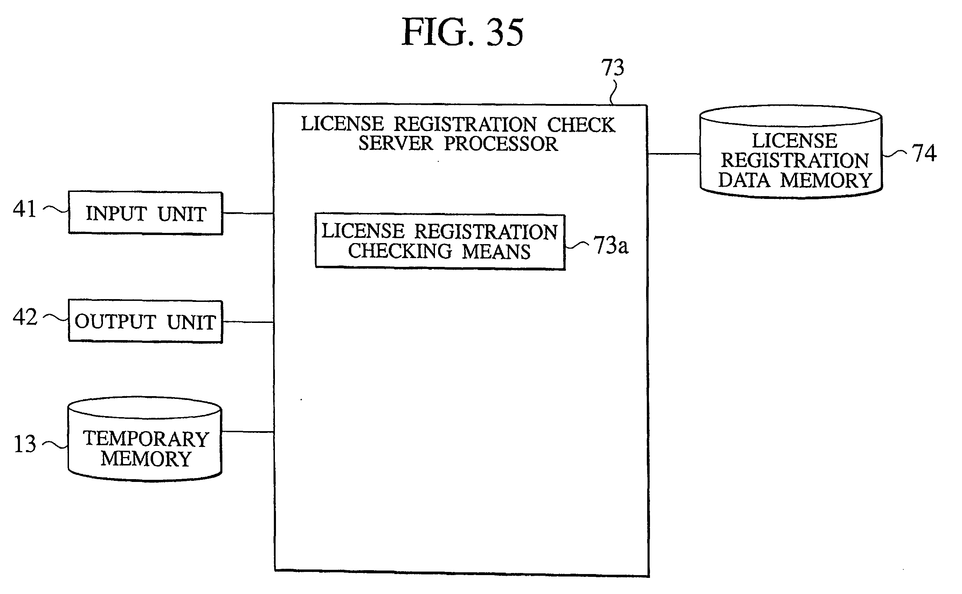

FIG. 35 is a block diagram showing a structure of a license registration checking server 28. The license registration checking server 28 includes an input unit 41, an output unit 42, a temporary memory (main memory) 13, a license registration checking server processor 73, and a license registration data memory 74. The input unit 41 includes a keyboard, a mouse and the like, and the output unit 42 includes a liquid crystal display or a CRT display and the like. The temporary memory (main memory) 13 incorporates ROM and RAM. The ROM functions as a memory for storing a program executed by the license registration checking server processor 73, and the RAM functions as a memory for storing program data or the like used during program execution by the license registration checking server 73, or used as a working area. The license registration data memory 74 records information of the electronic business transaction server to be used by the business transaction promoting method of the tenth embodiment. The license registration checking server processor 73 includes a license registration checking means (module) 73a. The license registration checking means (module) 73a checks whether the electronic business transaction providing server described in the transmitted electronic business transaction information has been license-registered or not. That is, the first and second portable information processors 65a and 65b can connect with only the electronic business transaction server registered therein.

A license of the business transaction promoting method of the tenth embodiment may be issued for each electronic business transaction providing server, or for each item provided by the electronic business transaction providing server.

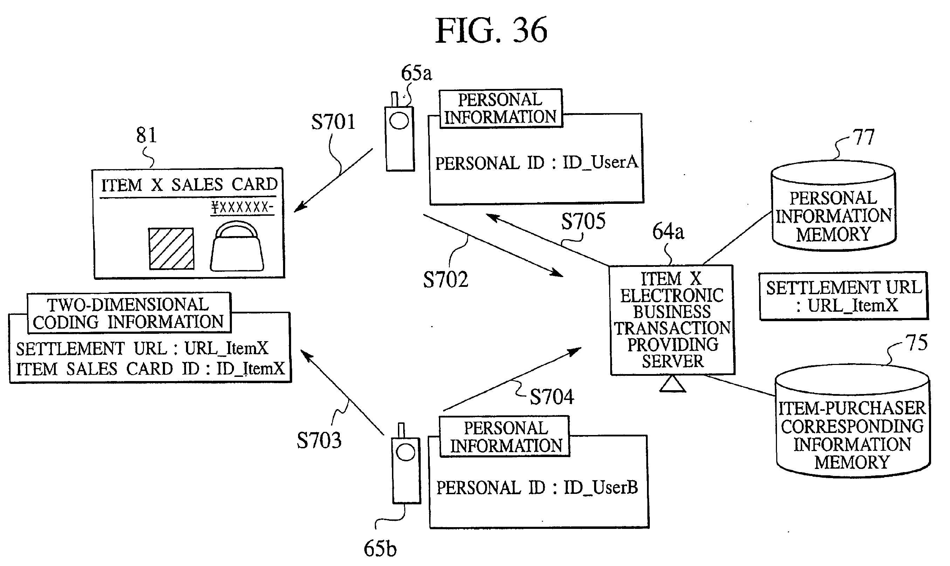

FIG. 36 is a diagram showing a data flow and a system configuration of the business transaction promoting method of the tenth embodiment of the present invention. As shown in FIG. 36, this business transaction promoting method includes a second information processor 65a, a first information processor 65b, an item X selling card 81 and an item X electronic business transaction providing server 64a.

Each of the second and first information processors 65a and 65b stores the personal information of an owner. Personal information means personal ID and the like. Here, an owner of the second information processor 65a is referred to as a previous purchaser (referred to as "user A", hereinafter), and an owner of the first information processor 65b a current purchaser (referred to as "user B", hereinafter).

On the item X selling card 81 functioning as an "image displaying means (module)" of the present invention, a two-dimensional code, explanation of an item X, a picture and the like are printed. The two-dimensional code contains a connected side URL (in this case, the URL of the item X electronic business transaction server 64a) and an item selling card ID coded when settlement is carried out. The item selling card ID is an intrinsic number for each item and each card.

The item X electronic business transaction providing server 64a includes an item-purchaser correlating information memory 75 and a personal information memory 77.

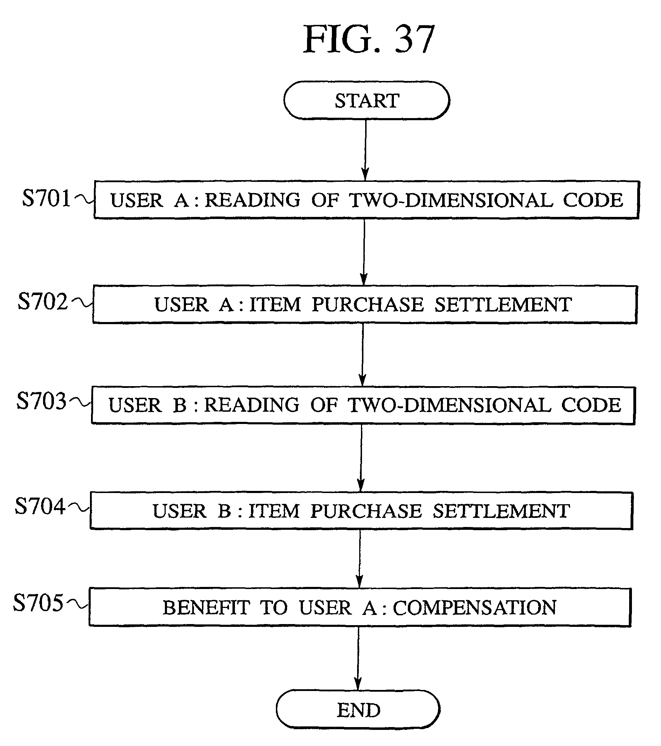

FIG. 37 is a flowchart illustrating processing of the business transaction promoting method of the tenth embodiment of the present invention.
(a) In step S701, the user A reads the two-dimensional code printed on the item X selling card 81 by using the second information processor 65a, and makes connection to the item X electronic business transaction providing server 64a. Then, in step S702, the user A settles purchase of the item X according to a screen presented therein. In this case, the item X electronic business transaction providing server 64a correlates an item selling card ID of the item X selling card 81 with personal ID recorded in the first information processor.
(b) The user A introduces the item X to the user B. In step S703. upon the introduction of the item X, the user B reads the two-dimensional code printed on the item X selling card 81 by using the first information processor 65b if he/she decides to buy the item X, and makes connection to the item X electronic business transaction providing server 64a. Then, in step S704, the user B settles the purchase of the item X according to a screen presented thereon. In this case, the item X electronic business transaction providing server 64a correlates the user A having a purchase history with the item selling card ID of the same item X selling card 81. That is, it can be determined that the buying of the item X by the user B is through the introduction of the user A by searching in the database.
(c) In step S705, a privilege/value code is added to the personal information of the user A, who has introduced the item X to the user B. As a result, a privilege/value can be provided to the user A.

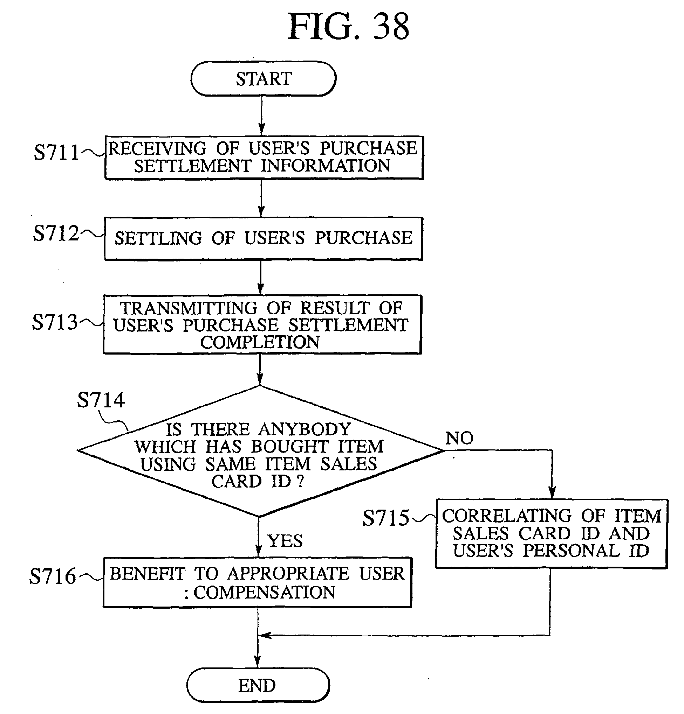

FIG. 38 is a flowchart showing a processing operation when the item X electronic business transaction providing server 64a settles purchase.
(a) First, by an item X purchase settlement request from the user B (current purchaser), in step S711, purchase settlement information of the user B is received. The information received in this case contains personal information such as personal ID of the user B recorded in the information processor owned by the user B, and a settlement URL and an item X selling card ID described in the two-dimensional code of the selling card read by the user B. In step S712, based on the personal ID of the user B, the personal information of the user B is obtained from the personal information memory 77, and purchase settlement is carried out. In step S713, a result thereof is transmitted to the information processor of the user B.
(b) In step S714, the item X electronic business transaction providing server 64a searches the database recorded in the item-purchaser correlating information memory 75, and checks whether a previous purchase history with the same item X selling card ID is present or not.
(c) If no purchase history is present, in step S715, the personal ID is correlated with the item selling card ID, and stored in the item-purchaser correlating information memory. If a purchase history is present, since it means that the user A who has made the previous purchase (previous purchaser) mediated the buying of the item X, a privilege/value code is added to the personal information of the user A. As a result of the addition of the privilege/value code, a privilege/value can be provided to the user.

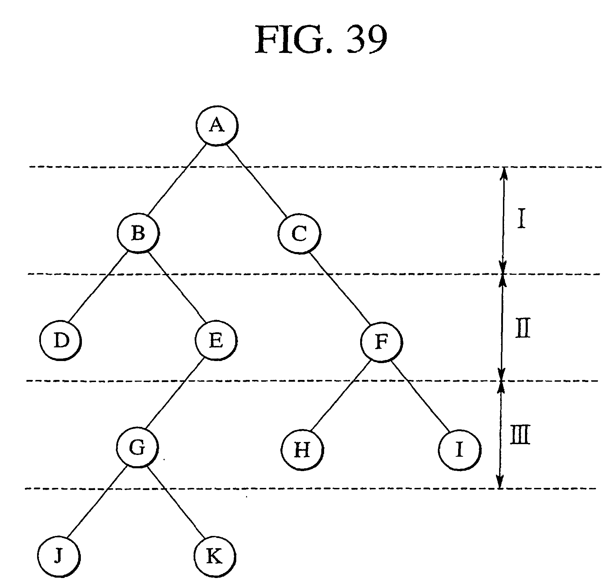

In the tenth embodiment, the example of providing the privilege/value only to the introducer was described. However, a privilege can also be provided to a user who further introduces the introducer to another. FIG. 39 shows derivation of user introduction. As shown, the derivation of the user introduction has a tree structure. As shown in FIG. 39, the user A (previous purchaser) introduces the user B (current purchaser) and a user C (another current purchaser), and the user B (current purchaser) introduces a user D (next purchaser) and a user E (next purchaser). The user C (another current purchaser) introduces a user F (next purchaser). Thus, the users directly introduced by the user A can be defined as a primary introducer I, the user introduced by the primary introducer as a secondary introducer II, the user introduced by the secondary introducer as a tertiary introducer III, and the like. Therefore, it is possible to optionally define a range of receiving privileges/values. That is, when the user F (next purchaser) buys an item, privileges/values can be provided to the user C (another current purchaser) who has introduced the user F (next purchaser), and the user A (previous purchaser), who has introduced the user C (anther current purchaser).

In the tenth embodiment, the personal information obtaining means (module) 68e obtained the personal information stored in the personal information memory 77 of the item X electronic business transaction providing server 64a. However, the method is not limited to this. For example, the personal information may be recorded in the personal information memory 12 of the first and second information processors 65a and 65b, and the personal information may be transmitted with image data to the item X electronic business transaction providing server 68. Other than the item X electronic business transaction providing server 64a, a personal information server is installed, the personal information is recorded therein, and the personal information is obtained from the personal information server. In this case, the personal information server may be realized by a device physically similar to the license registration checking server 28.

Moreover, in the tenth embodiment, installment of the license registration checking server was described. However, the license registration checking server may not be installed.

The electronic business transaction providing server was installed for each item. However, it is not necessary to install an electronic business transaction providing server for each item, and for example it is enough for URL to be referred to for each item only to be different. A plurality of items may be described in one URL, and the user may select one out of them. In other words, it is only necessary for the user to specify an item.

Furthermore, the described business transaction providing method may be applied to one item such as an item X, or among a plurality of items.

### (Eleventh Embodiment)

A card selling method according to an eleventh embodiment of the present invention is designed to originally buy items displayed at a store, but display only a card containing item information at the store and carry out each settlement. Accordingly, no stock is necessary in the store, and no items need to be displayed, saving space. Moreover, by designating an address for item delivery, it is possible to remove the time and labor of carrying items home, and to make presents or items to others.

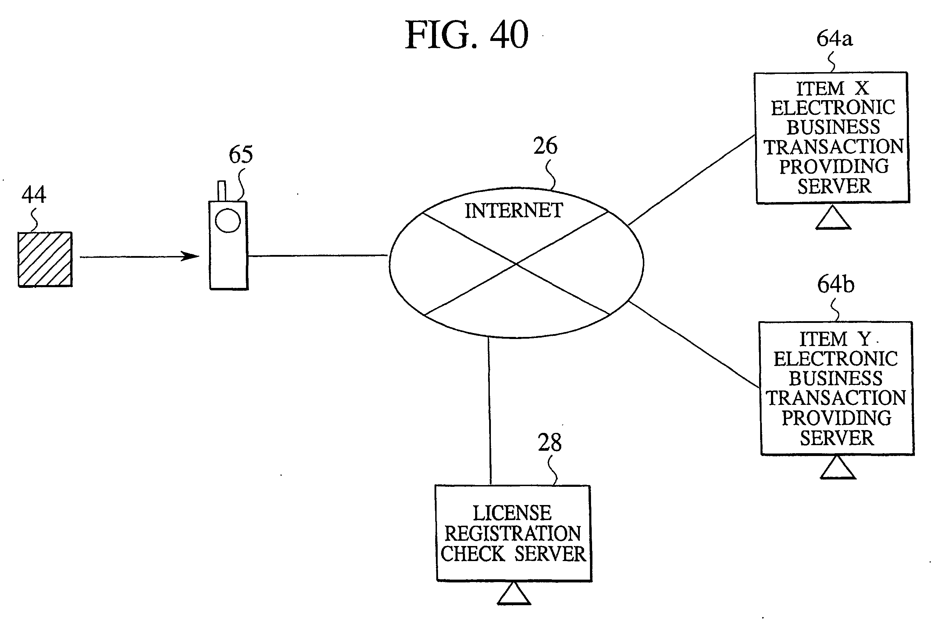

That is, the card selling method of the eleventh embodiment of the present invention shown in FIG. 40 uses a system, which includes an image displaying means (module) for displaying an image corresponding to information necessary for an electronic business transaction or item intrinsic information such as an item intrinsic number, an information processor 65 including an optical data reader for reading an image, and a personal information memory for recording personal information necessary for an electronic business transaction containing at least a personal intrinsic number, an item X electronic business transaction providing server 64a, and a communicating network (Internet) 26 for interconnecting the information processors 65 and the item X electronic business transaction providing server 64a. An image (two-dimensional code) 44 may be displayed on an image displaying means (module) such as an electronic display unit, or printed on paper or an object such as a catalog, a newspaper, a magazine, or ad, or on a surface of an image displaying means (module) such as a card. An item itself may be an image displaying means (module), and the image (two-dimensional code) 44 may be displayed (printed) on a part of the item. Further, an item Y electronic business transaction server 64b, and a gateway server (license registration checking server) 28 may be provided. When the information processors 65, the item X and Y electronic business transaction providing servers 64a and 64b, and the gateway server (license registration checking server) 28 are connected to the Internet, connection may be made to the Internet 26 through a digital communication network, a telephone communication line, a relay processor, an access point or the like.

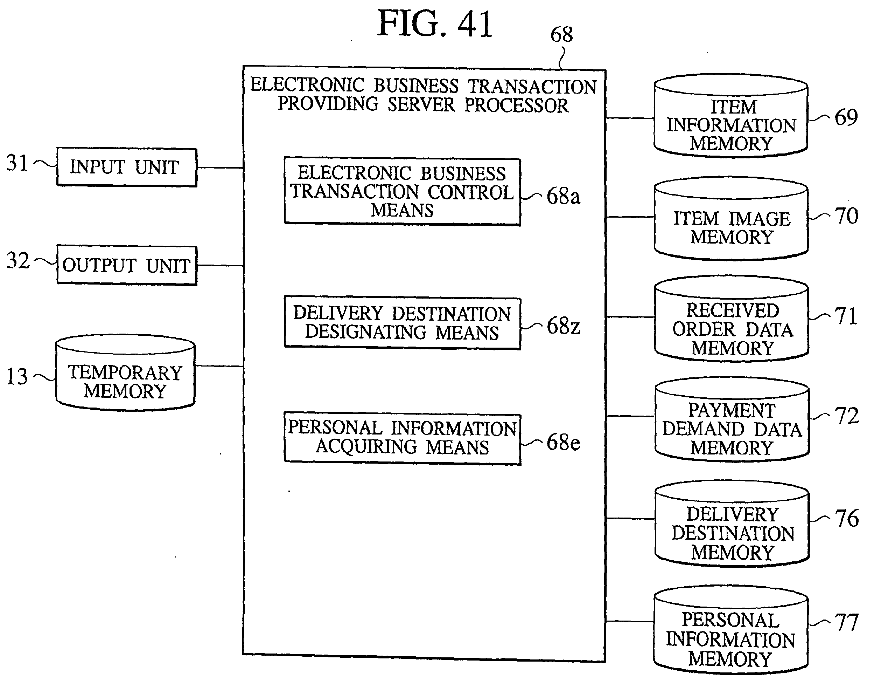

As shown in FIG. 41, compared with the block diagram (see FIG. 34) showing the structure of the item X electronic business transaction providing server 64a of the tenth embodiment, the item X electronic business transaction providing server 64a is different in that the item-purchaser correlation means (module) 68b and the item-purchaser correlating information memory 75 are not provided in the electronic business transaction providing server processor 68, and a delivery address designating means (module) 68z and a delivery address memory 76 are provided in the electronic business transaction providing server processor 68. The item X electronic business transaction providing server 64a obtains an address for delivery of an item X from the delivery address designating means (module) 68z, and stores the address in the delivery address memory 76.

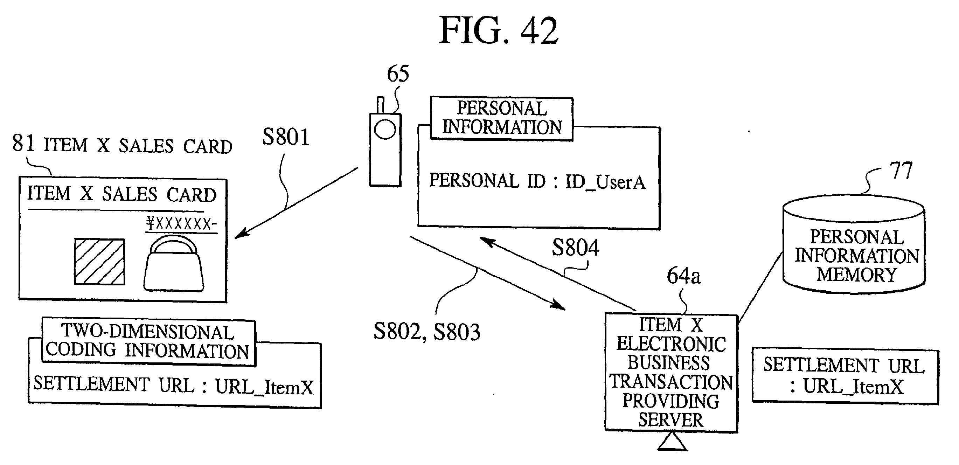

FIG. 42 shows a data flow and a system configuration of the card selling method of the eleventh embodiment of the present invention. As shown in FIG. 42, this card selling method includes an information processor 65, an item X selling card 81 and an item X electronic business transaction providing server 64a.

The information processors 65 stores the personal information of its owner. The personal information is personal ID or the like.

On the item X selling card 81, a two-dimensional code, explanation, a picture, and the like of an item X are printed. The two-dimensional code contains a connected side URL (in this case, the URL of the item X electronic business transaction server 64a) coded when settlement is carried out.

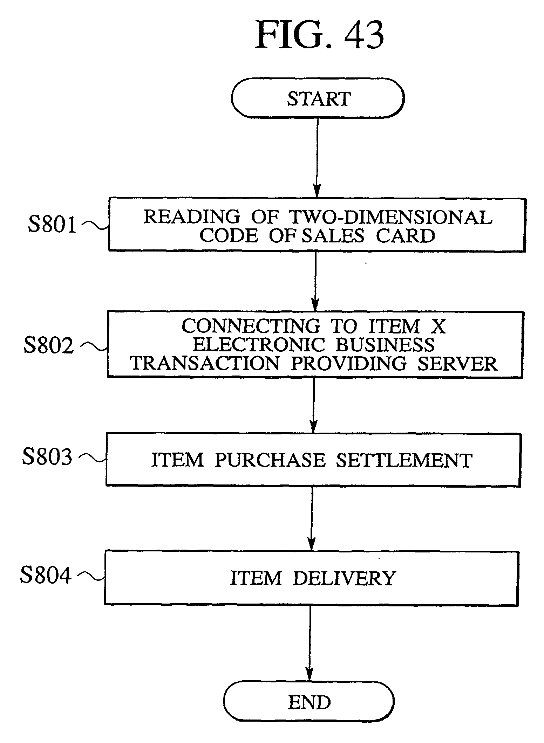

FIG. 43 is a flowchart illustrating the processing of the card selling method of the eleventh embodiment of the present invention.
(a) In step S802, the user reads the two-dimensional code printed on the item X selling card 81 by using the information processor 65, and makes a connection to the item X electronic business transaction providing server 64a in step S802. Then, in step S803, the user settles the purchase of the item X according to a screen presented thereon.
(b) In step S804, delivery arrangements for the item X, the purchase of which is settled in the designated address is carried out

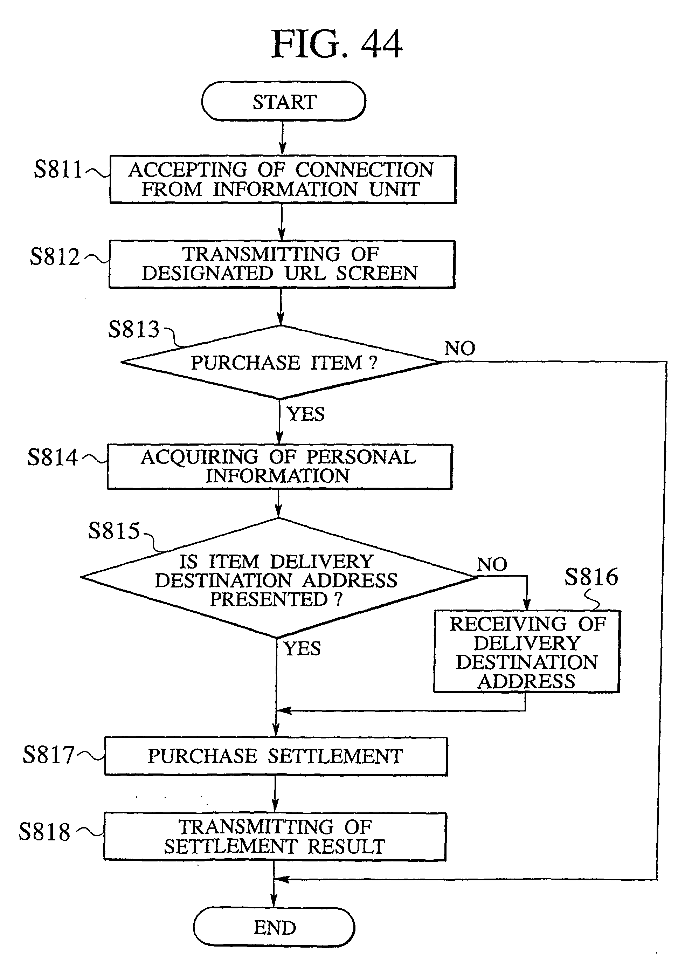

FIG. 44 is a flowchart showing processing when the item X electronic business transaction providing server 64a carries out a purchase settlement.
(a) First, in step S811, connection from the information processor 65 is accepted and, in step S812, a screen of designated URL of the item X electronic business transaction providing server 64a for executing a settlement transaction of an item X is transmitted.
(b) In step S813, if the item X is bought, the process proceeds to step S814. If the item X is not bought, the processing is finished.
(c) In the case of buying the item X, in step S814, the item X electronic business transaction providing server 64a obtains personal information.
(d) In step S815, the delivery address designating means (module) 68z presents an address from the personal information obtained in step S814 as an address for item x delivery. When the user does not wish the item X to be delivered to this address, for example when the user present the item to an other person, in step S816, a request is made to enter an address for present delivery, and an address for delivery is received. The designated address for delivery is stored in the delivery address memory 76.
(e) Then, in step 817, purchase settlement of the item X is carried out and, in step S818, settlement result information is transmitted to the information processor 65.

In the eleventh embodiment, regarding the personal information obtaining means (module) 68e, the following method can be provided.
(1) Personal information stored in the personal information memory 77 of the item X electronic business transaction providing server 64a is obtained.
(2) The personal information is recorded in the personal information memory 12 of the information processor 65, and the personal information is transmitted with image data to the item X electronic business transaction providing server 68.
(3) Other than the item X electronic business transaction providing server 64a, a personal information server is installed, the personal information is recorded therein, and the personal information is obtained from the personal information server. In this case, the personal information server may be realized by a device physically similar to the license registration checking server 28.

In the case of designating an address for delivery, the item X electronic business transaction providing server 64a may present an address for delivery, to which an item has been delivered before for the user, and the user may make selection via the information processor 65. An address for delivery converted into a two-dimensional code may be prepared beforehand, and the user may read this two-dimensional code using the information processor 65, and transmit it to the item X electronic business transaction server 64a.

As a modified example of the card selling method of the eleventh embodiment, a content buying method can be used. In the card selling method, the item was delivered from the electronic business transaction providing server. The content buying method is different in that the user accesses the electronic business transaction providing server, and downloads the content thereof. In this content buying system, electronic data such as music data or software can be suitably used.

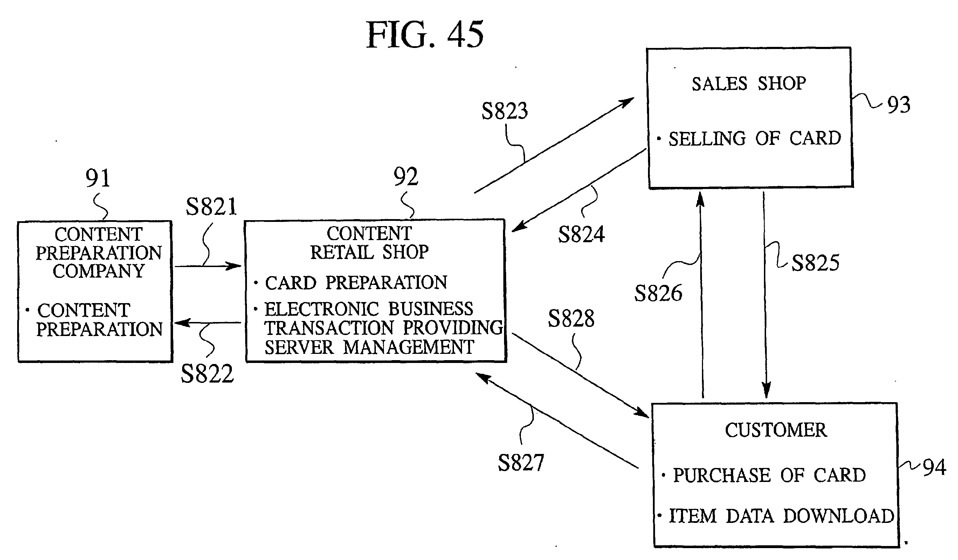

FIG. 45 is a diagram showing a data flow and a system configuration in the content buying method. As shown in FIG. 45, the content buying method includes a content manufacturing company 91, a content retail store 92, a store 93 and a customer 94.

The content manufacturing company 91 manufactures contents. The content retail store 92 manufactures cards, and manages an electronic business transaction providing server. The store 93 is a general store such as a convenience store or the like, and sells cards. The customer 94 buys a card, and downloads an item.

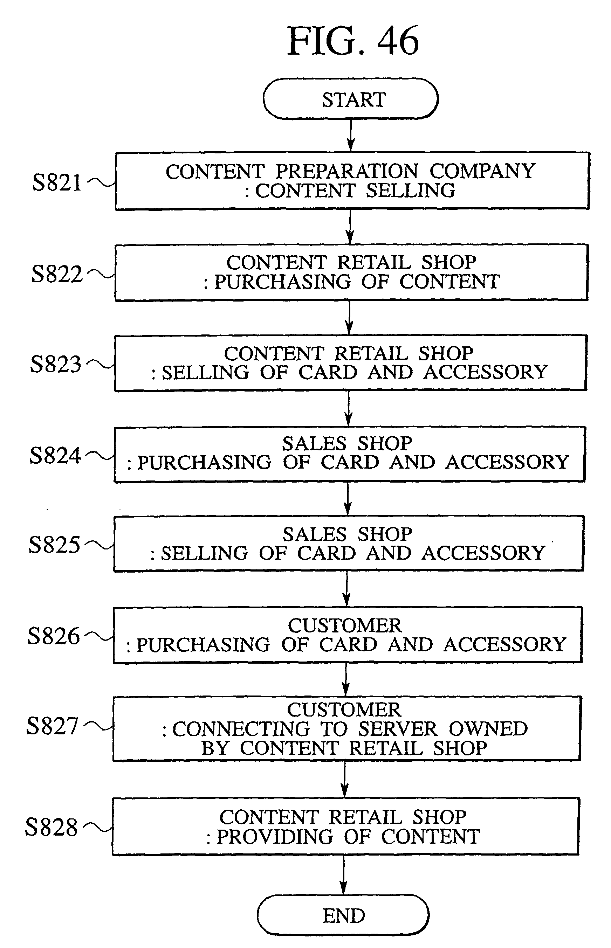

FIG. 46 is a flowchart illustrating processing of the content buying method.
(a) In step S821, the content manufacturing company 91 sells content to the content retail store 92. In step S822, the content retail store 92 buys the content. The content retail store 92 saves the content in the electronic business transaction providing server, and manages the content.
(b) In step S823, the content retail store 92 sells cards and accessories to the store 93. The accessories may be a software instruction manual, necessary cables and the like, for example if the content is software.
(c) In step S826, the customer 94 buys a card at the store 93. The customer 94 reads a two-dimensional code printed on the card by the information processor, makes connection to the electronic business transaction providing server managed by the content retail store 92 in step S827, and receives the content in step S828.

### (Twelfth Embodiment)

A delivery address designating method according to a twelfth embodiment of the present invention is designed to designate an address for item delivery.

A system configuration view of the delivery address designating method of the twelfth embodiment is similar to that of the tenth embodiment of FIG. 33, and thus description thereof will be omitted. Furthermore, a block diagram showing a structure of an information processor of the twelfth embodiment of the invention is similar to that of the first embodiment of FIG. 1, and a block diagram showing a structure of an electronic business transaction providing server 64a to that of the eleventh embodiment of FIG. 41, and thus description thereof will be omitted.

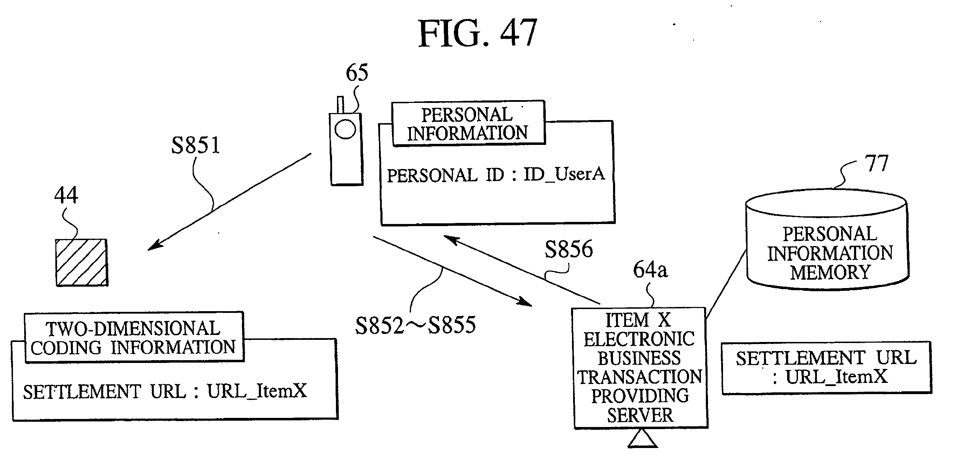

FIG. 47 shows data flow and system configuration of the delivery address designating method of the twelfth embodiment of the invention. As shown in FIG. 47, this delivery address designating method includes an information processor 65, a two-dimensional code 44, and an item X electronic business transaction providing server 64a.

The information processors 65 stores personal information of its owner. The personal information is personal ID or the like.

The two-dimensional code 44 contains connected side URL (in this case, URL of the item X electronic business transaction server 64a) coded when settlement is carried out.

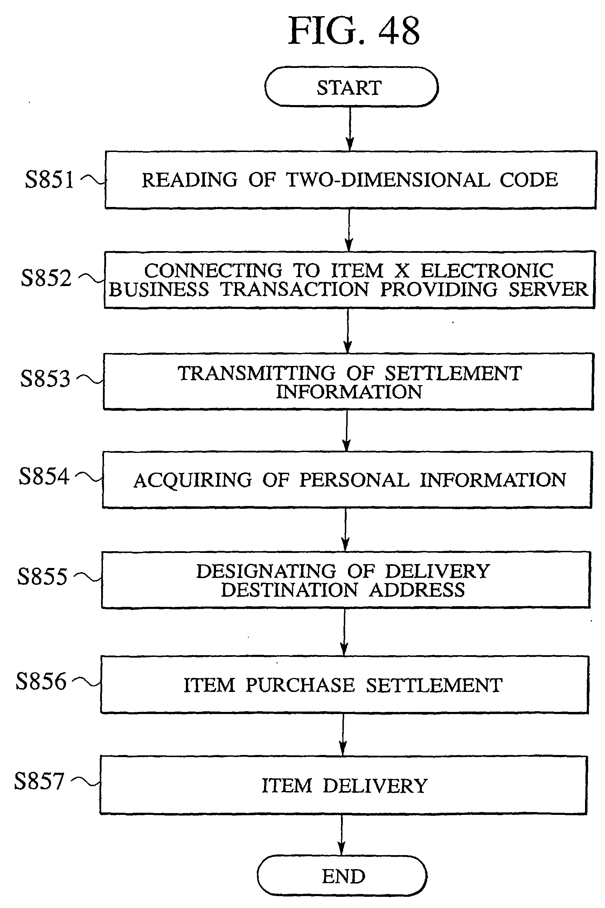

FIG. 48 is a flowchart illustrating processing of the delivery address designating method of the twelfth embodiment of the invention.
(a) In step S851, a user reads the two-dimensional code 44 of the item X by using the information processor 65. and makes connection to the item X electronic business transaction providing server 64a in step S852. Then, in step S853, settlement information obtained from the two-dimensional code is transmitted to the item X electronic business transaction providing server 64a. In step S854, personal information is obtained.
(b) In step S855, the user designates an address for the delivery of an item X to the item X electronic business transaction providing server 64a, and the user carries out purchase settlement of the item X in step S856.
(c) In step S857, the item X electronic business transaction providing server 64a arranges delivery of the purchase-settled item X to the address designated in step S855.

A flowchart of a processing operation when the item X electronic business transaction providing server 64a carries out purchase settlement is similar to that of the eleventh embodiment of FIG. 44, and thus omitted.

In the twelfth embodiment, regarding the personal information obtaining means (module) 68e, the following method can be provided.
(1) Personal information stored in the personal information memory 77 of the item X electronic business transaction providing server 64a is obtained.
(2) The personal information is recorded in the personal information memory 12 of the information processor 65, and the personal information is transmitted with image data to the item X electronic business transaction providing server 68.
(3) Other than the item X electronic business transaction providing server 64a, a personal information server is installed, the personal information is recorded therein, and the personal information is obtained from the personal information server. In this case, the personal information server may be realized by a device physically similar to the license registration checking server 28. A block diagram showing a structure of the gateway server (license registration checking server) 28 is similar to that of the tenth embodiment of FIG. 35, and thus description thereof will be omitted.

In the case of designating an address for delivery, the item X electronic business transaction providing server 64a may present an address for delivery, to which an item has been delivered before for the user, and the user may make selection through the information processor 65. Moreover, an address for delivery converted into a two-dimensional code may be prepared beforehand, and the user may read this two-dimensional code using the information processor 65, and transmit the address to the item X electronic business transaction server 64a.

### (Thirteenth Embodiment)

A business transaction settlement commission method according to a thirteenth embodiment of the present invention is designed to make a request for item settlement to a third party.

A system configuration view of the business transaction settlement commission method of the thirteenth embodiment is similar to that of the tenth embodiment of FIG. 33, and thus description thereof will be omitted. A block diagram showing a structure of an information processor of the thirteenth embodiment of the invention is similar to that of the first embodiment of FIG. 1, and a block diagram showing a structure of an electronic business transaction providing server to that of the eleventh embodiment of FIG. 41, and thus description thereof will be omitted.

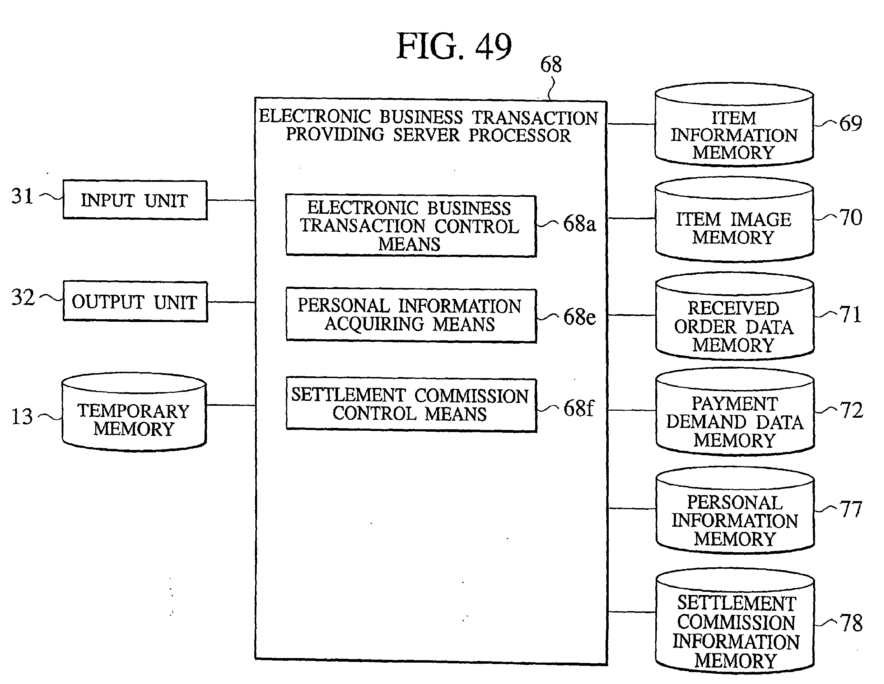

FIG. 49 is a block diagram showing a structure of an electronic business transaction providing server of the thirteenth embodiment of the present invention. As shown in FIG. 49, compared with FIG. 34 as a block diagram showing the structure of the electronic business transaction server of the tenth embodiment, a difference is that the item-purchaser correlating means (module) 68b and the electronic business transaction canceling means (module) 68c are not provided in an electronic business transaction providing server processor 68, but a settlement commission control means (module) 68f is provided, and the item-purchaser correlating information memory 75 is not provided, but a settlement commission information memory 78 is provided. The settlement information memory 78 stores a mail address for settlement commission necessary for when settlement commission is carried out, or settlement commission is in progress and the like, and it is updated by the settlement commission control means (module) 68f.

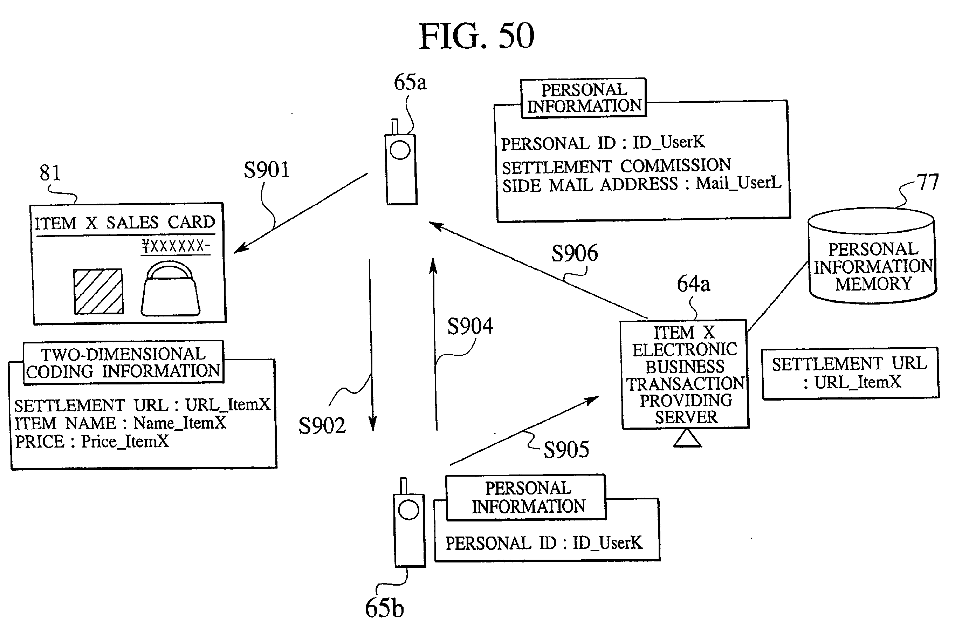

FIG. 50 is a diagram showing a data flow and a system configuration of the business settlement commission method of the thirteenth embodiment of the present invention. As shown in FIG. 50, this business transaction settlement commission method includes a first information processor 65a, a second information processor 65b, a selling card for the item X 81 and an item X electronic business transaction providing server 64a.

In this case, a user K is an owner of the first information processor 65a, a purchaser of an item X, who does not carry out settlement by himself, but makes a settlement request to the other. A user L is an owner of the second information processor 65b, and carries out requested settlement of the item X.

The first information processors 65a stores the personal information of the user K as an owner. The personal information is personal ID, a mail address for settlement commission (in this case, mail address to be received by the second information processor 65b) or the like. The second information processor 65b stores the personal information of the user L as an owner. The personal information is personal ID of the user L.

On the item X selling card 81, a two-dimensional code, explanation, a picture, and the like of an item X are printed. The two-dimensional code contains connected side URL (in this case, URL of the item X electronic business transaction server 64a) item name, and its price are coded when settlement is carried out.

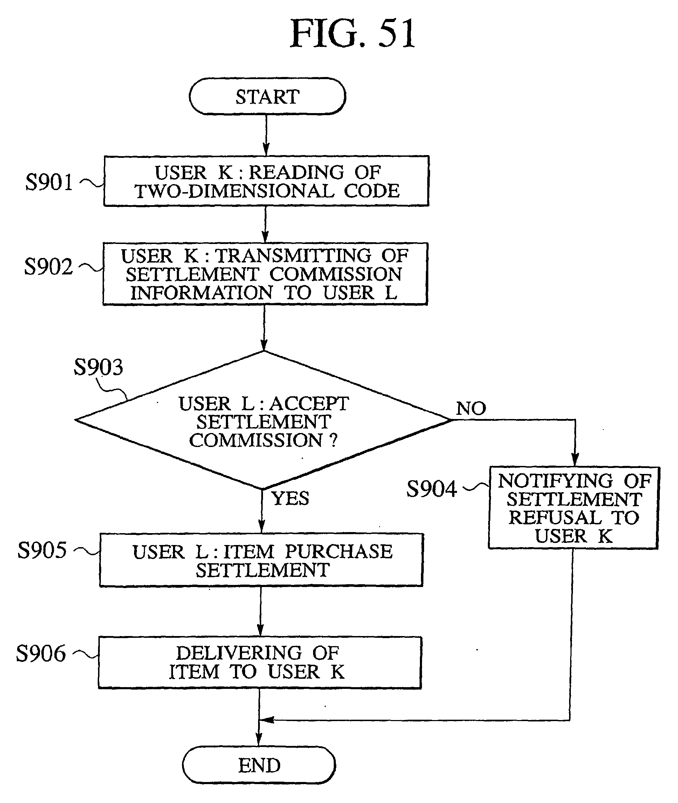

FIG. 51 is a flowchart explaining the processing of the business transaction settlement commission method of the thirteenth embodiment of the present invention.
(a) In step S901, the user K reads a two-dimensional code printed on the item X selling card 81 by using the first information processor 65a, and converts an image into character data. In step S902, personal information recorded in the first information processor 65a and two-dimensional code information of the item X selling card 81 are unified, and transmitted to the settlement commission mail address recorded in the first information processor 65a.
(b) In step S903, the second information processor 65b receives the commission information transmitted from the first information processor 65a, and the user L determines whether or not to accept the settlement commission of the item X. If the user L is not accepted, an acceptance rejection result mail is transmitted to the first information processor 65a in step S904.
(c) If the settlement commission of the item X is accepted in step S903, in step S905, the second information processor 65b carries out the purchase settlement of the item X. At this time, item information and personal ID sent from the first information processor 65a, and personal ID of the second information processor 65b are united, and this information is transmitted to the item X electronic business transaction providing server 64a. The item X electronic business transaction providing server 64a obtains personal information from the personal ID. The item X electronic business transaction providing server 64a executes item X settlement, and transmits a confirmation mail to the first and second information processors 65a and 65b.
(d) After the execution of the item settlement of the item X, the item X electronic business transaction providing server 64a carries out a procedure for shipping the item X to the user K.

Furthermore, the following example is a first modified example of the settlement commission method of the thirteenth embodiment.

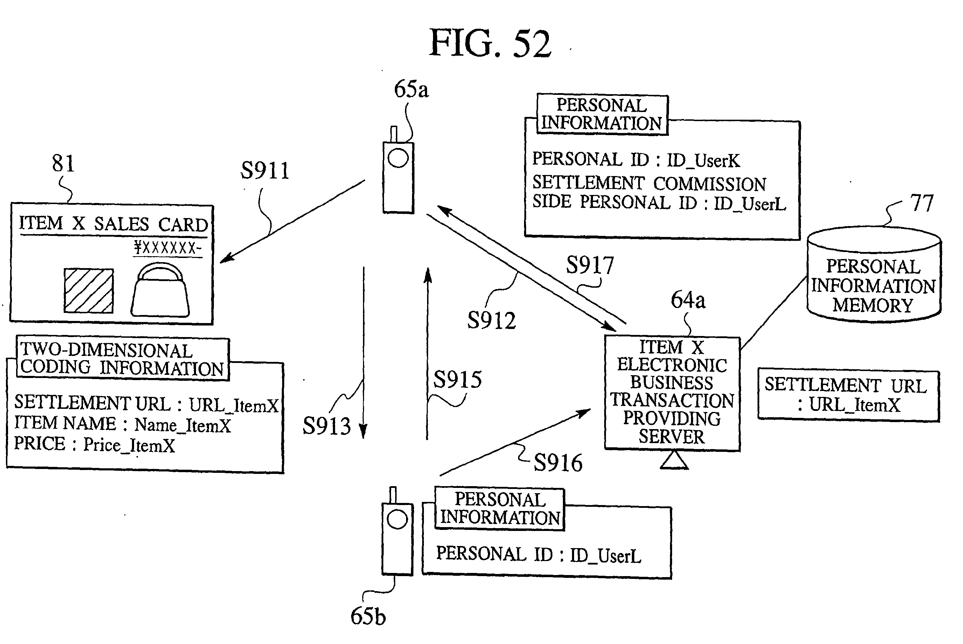

FIG. 52 is a diagram showing a data flow and a system configuration of the business settlement commission method of the first modified example of the thirteenth embodiment of the present invention.

The first information processors 65a stores personal information of a user K as an owner. The personal information is personal ID, settlement commission side personal ID (in this case, personal ID stored as personal information in the second information processor 65b) or the like. The second information processor 65b stores personal information of a user L as its owner. The personal information is personal ID of the user L.

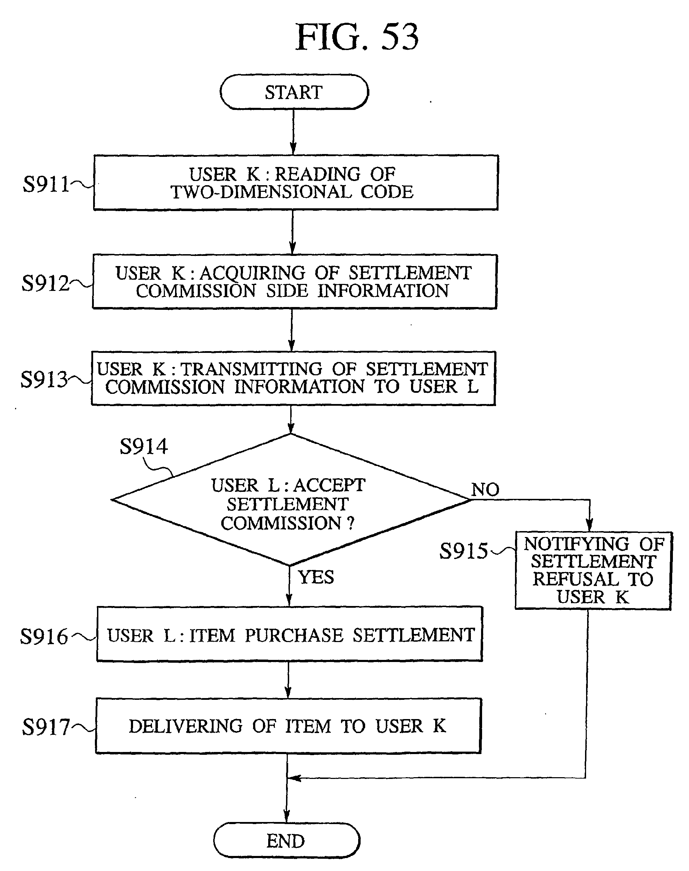

FIG. 53 is a flowchart showing processing of the business transaction settlement commission method of the first modified example of the thirteenth embodiment of the invention.
(a) In step S911, the user K reads a two-dimensional code printed on the item X selling card 81 by using the first information processor 65a, and converts the code from an image into character data. In step S912, connection is made to the item X electronic business transaction server 64a, and a mail address for settlement commission is obtained based on settlement commission personal ID. Then, in step S913, personal information recorded in the first information processor 65a and two-dimensional code information of the selling card 81 of the item X are transmitted to the settlement commission mail address.
(b) In step S914, the second information processor 65b receives the commission information transmitted from the first information processor 65a, and the user L determines whether or not to accept the settlement commission of the item X. If the user L is not accepted, an acceptance rejection mail is transmitted to the first information processor 65a in step S915.
(c) If the settlement commission of the item X is accepted in step S914, the second information processor 65b carries out the purchase settlement of the item X in step S916. At this time, item information and personal ID sent from the first information processor 65a, and the personal ID of the second information processor 65b are united, and this information is transmitted to the item X electronic business transaction providing server 64a. The item X electronic business transaction providing server 64a obtains personal information from the personal ID. The item X electronic business transaction providing server 64a executes item X settlement, and transmits a confirmation mail to the first and second information processors 65a and 65b.
(d) After the execution of the item settlement of the item X, the item X electronic business transaction providing server 64a carries out a procedure for shipping the item X to the user K.

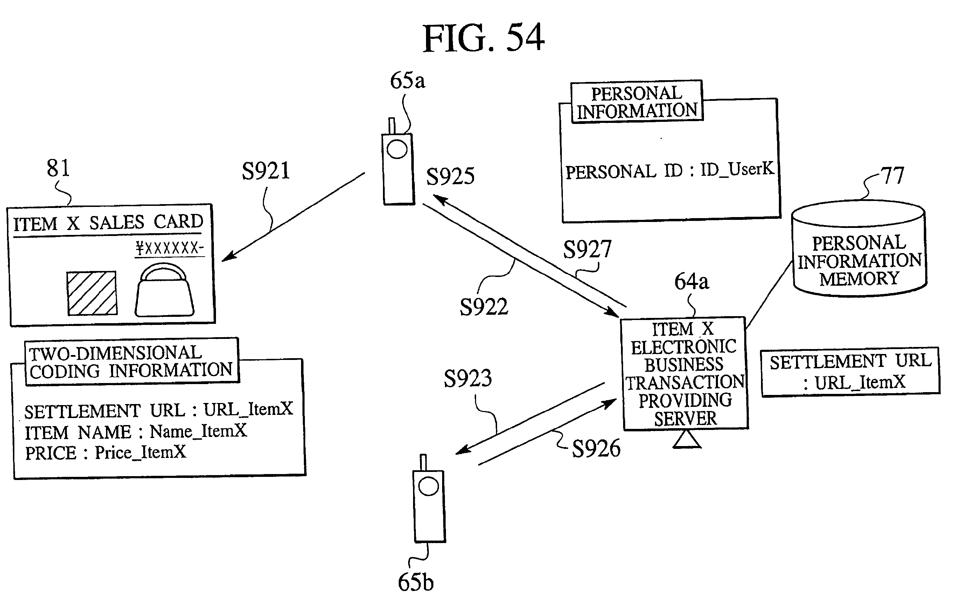

Furthermore, the following example is another first modified example of the settlement commission method of the thirteenth embodiment. FIG. 54 is a diagram showing data flow and system configuration of the business settlement commission method of the first modified example of the thirteenth embodiment of the invention.

The first information processor 65a stores personal information of a user K as an owner. The personal information is personal ID or the like. The second information processor 65b stores personal information of a user L as its owner. The personal information is personal ID of the user L.

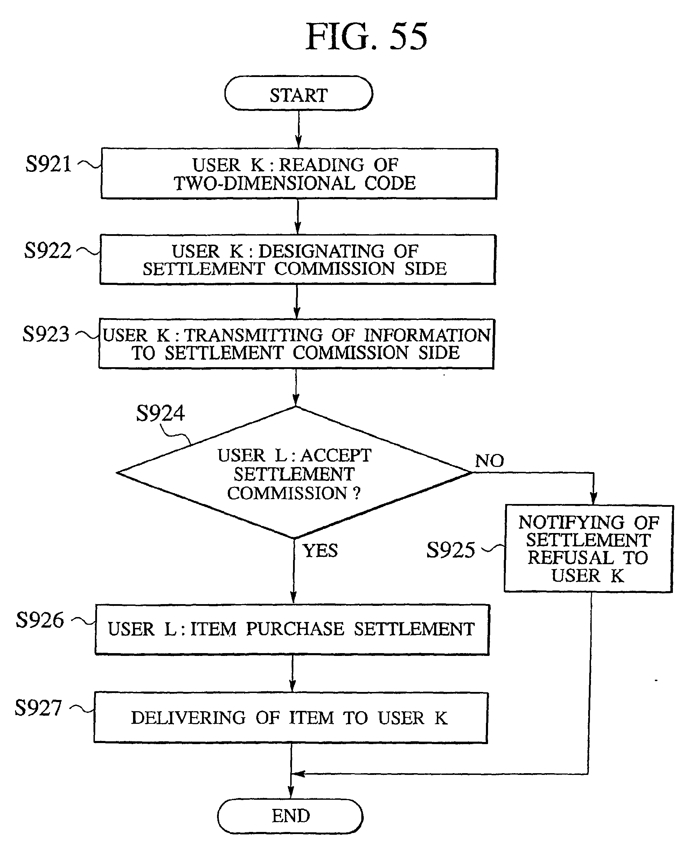

FIG. 55 is a flowchart showing processing of the business transaction settlement commission method of the second modified example of the thirteenth embodiment of the present invention.
(a) In step S921, the user K reads a two-dimensional code printed on the item X selling card 81 by using the first information processor 65a, and converts the code from an image into character data. In step S922, connection is made to the item X electronic business transaction server 65a, a list of users to be requested for settlement commission by the user K, and the user K selects a user (in this case, the user L) to be requested for settlement commission. Also, a new address for settlement commission may be registered.
(b) In step S923, the item X electronic business transaction providing server 64a transmits information unifying the two-dimensional code of the item X selling card 81 and the personal information of the user K as settlement commission information. The second information processor 65b receives the commission information transmitted from the item X electronic business transaction providing server 64a, and the user L determines whether or not to accept the settlement commission of the item X in step S924. If the user L is not accepted, an acceptance rejection mail is transmitted to the item X electronic business transaction providing server 64a in step S925, and the item X electronic business transaction providing server 64a transmits the acceptance rejection mail to the first information processor 65a.
(c) If the settlement commission for the item X is accepted in step S924, in step S926, the second information processor 65b carries out purchase settlement of the item X. At this time, item information and personal ID sent from the first information processor 65a, and personal ID of the second information processor 65b are united, and the item X electronic business transaction providing server 64a obtains personal information from the personal ID. The item X electronic business transaction providing server 64a executes settlement of the item X, and transmits confirmation mail to the first and second information processors 65a and 65b.
(d) After the execution of the item settlement of the item X, the item X electronic business transaction providing server 64a carries out a procedure for shipping the item X to the user K in step S927.

According to the thirteenth embodiment and the first modified example of the thirteenth embodiments, since it is necessary to register the settlement commission side personal ID in the personal information of the first information processor 65a, a value as a present from the user L to the user K can be recognized. Conversely, according to the second modified example of the thirteenth embodiment, since a plurality of settlement commission sides can be designated by one information processor, it is not necessary to install an information processor for each settlement commission side, and the number of information processors that an individual needs is only one.

In the thirteenth embodiment, data transfer among the first and second information processors 65a and 65b and the item X electronic business transaction providing servers was carried out by mail. However, data transfer is not limited to mail, and it may be carried out through all types of packet communications, file transfer and the like. Moreover, similar processing may be performed by accessing an optional server.

In the foregoing, the two-dimensional code as the image was converted into the character data by the first information processor 65a. However, the image itself may be transmitted from the first information processor 65a to the second information processor 65a, and then the image may be converted into character data by the second information processor 65b.

When data is transferred between the first and second information processors 65a and 65b, personal ID can be used without using a mail address recorded as personal information. In this case, by referring to the memory for corresponding personal ID held by the license registration checking server 28 with the mail address, a similar function can be achieved.

Furthermore, in the foregoing, the item name and the price were contained in the two-dimensional code on the item X selling card 81. However, when the user L wishes to obtain more specific information, connection may be made to the item X electronic business transaction providing server 64a, and then reference may be made to the picture, the price and the like displayed on the display screen.

### (Fourteenth Embodiment)

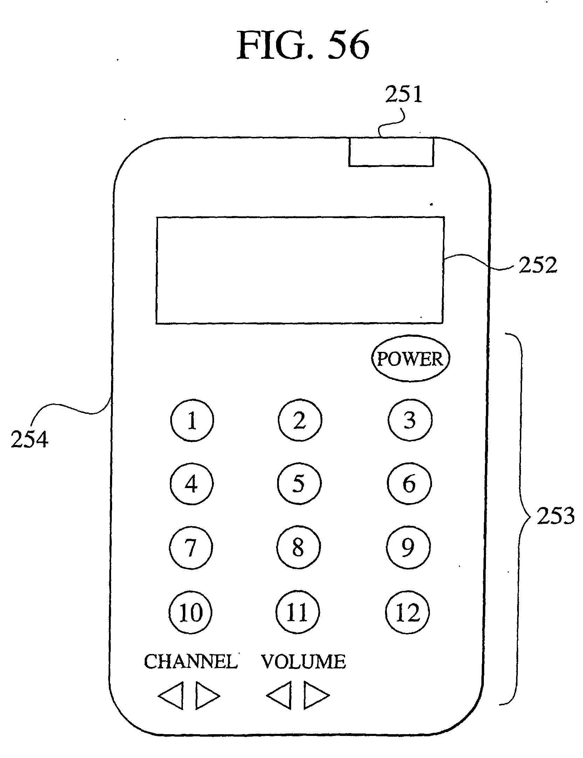

An electronic business transaction method according to a fourteenth embodiment of the present invention is designed to read a two-dimensional code displayed on a remote controller shown in FIG. 56 by an information processor. This remote controller is used, for example, in operating a television or the like. It includes a photo acceptance unit 251, a display 252, an operation button 253, and a casing 254. The remote controller receives two-dimensional code data displayed on a display of a television or the like through infrared data communication, and displays the two-dimensional code on the display 252. By reading the two-dimensional code thus displayed on the display 252 through the information processor, the two-dimensional code displayed on the display can be easily read, and a simpler electronic business transaction can be carried out.

Instead of reading the two-dimensional code displayed on the display 252 by another information processor, the remote controller may be provided with a function similar to the information processor. In this case, content displayed on the display 252 may be a two-dimensional code, character data obtained by decoding the code or the like.

That is, a system configuration in the electronic business transaction method of the fourteenth embodiment of the present invention is similar to that of the eleventh embodiment of FIG. 40, and thus description thereof will be omitted. A block diagram showing structures of an information processor 65, an item X electronic business transaction providing server 64a, and a license registration checking server 28 is similar to that of the twelfth embodiment, and thus description thereof will be omitted.

The electronic business transaction method of the fourteenth embodiment of the present invention can be applied to the delivery designating method, the settlement commission method, and the like of the twelfth and thirteenth embodiments of the present invention and the like by reading the two-dimensional code obtained from the display of the television or the like by the remote controller through the information processor. In addition, it can be applied to all the other electronic business transaction methods.

According to the fourteenth embodiment of the present invention, model numbers, product numbers or the like of all types of home electronic appliances are provided as image information and, thus, by using the personal information recorded in the information processor, it is possible to simplify the procedure of user registration, a repair request due to failure, a support request or the like.

### (Fifteenth Embodiment)

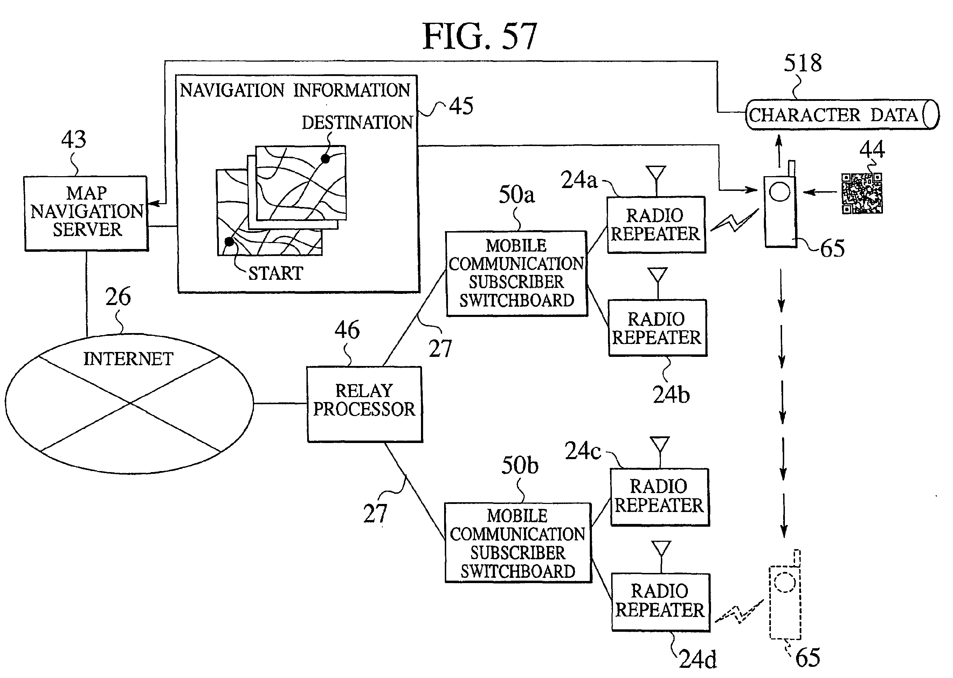

FIG. 57 is a system configuration view of a navigation system according to a fifteenth embodiment of the present invention. As shown in FIG. 57, the navigation system includes Internet (communication network) 26, to which a map/navigation server (server for navigation) 43 is connected, and a digital communication network 27, to which a portable information processor 65 is connected. Information transmitted from the portable information processor 65 is sent through radio repeaters 24a, 24b, 24c, 24d and the like and mobile communication subscriber switchboards 50a, 50b and the like to a relay processor 46. The relay processor 46 mediates data transfer between the Internet 26 and the digital communication network 27. Conversely, information transmitted from the map-navigation server 43 is sent from the Internet 26 through the relay processor 46 to the digital communication network 27, and further sent through the mobile communication subscriber switchboards 50a, 50b and the like, and the radio repeaters 24a, 24b, 24c, 24d and the like to the portable information processor 65. The radio repeaters 24a, 24b, 24c, 24d and the like are disposed at various places on the ground. By a movement of the portable information processor 65, the radio repeaters to be connected to are changed in accordance with changing location, and allowing continuous connection.

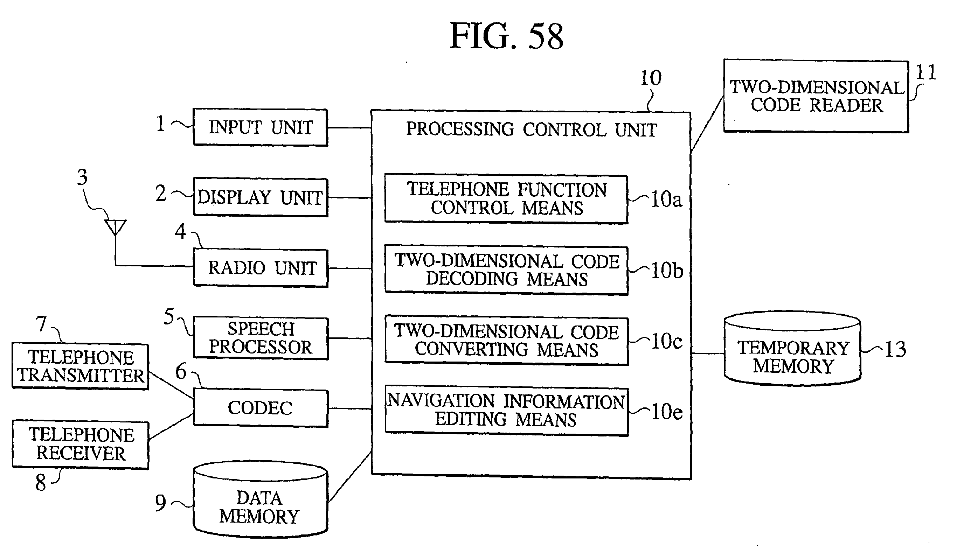

FIG. 58 is a block diagram showing the structure of a portable information processor 65 shown in FIG. 57. Compared with the first embodiment of FIG. 1, a difference is that the electronic business transaction data editing means (module) 10d is not provided, but navigation information editing means (module) 10e is provided. The navigation information editing means (module) 10e edits navigation information containing map information transmitted from the map/navigation server 43 through the Internet in such a way as to sequentially indicate a guidance route from a code acquiring position to a target position. The edited navigation information is displayed on the display unit 2. Here, optical data includes at least information of a target position such as the latitude and longitude, or an address of a location, to which a service provider posting an ad wishes to navigate a user, information of a code acquiring position such as the latitude and longitude or an address of a location of an advertising medium, on which the optical data is printed, and the URL of the map/navigation server 43. The optical data is read by the optical data reader, decoded by data decoding means (module), and converted into character data 518 containing the code acquiring position, the target position, and the URL of the map/navigation server 43 by a data converting means (module). The converted character data 518 is transferred to the map/navigation server 43 by a "communication network connecting means (module)".

The two-dimensional code reader 11 reads a two-dimensional code, and the code is received in a cellular telephone 42. The two-dimensional code is irradiated with a light, a reflected light from the two-dimensional code is focused on an image sensor such as a CCD through a predetermined optical system, and image data of the two-dimensional code is read. The temporary memory 13 temporarily stores the image data of the two-dimensional code read by the two-dimensional code reader 11, and the code and character data 518 obtained by the two-dimensional code decoding means (module) 10b and the two-dimensional code converting means (module) 10c. Though not shown in FIG. 58, needless to say, a power supply circuit, a battery or the like is provided for each unit to function normally.

In this case, the data read by the two-dimensional code reader 11 is two-dimensional code shown in each of FIGS. 2A and 2B. An amount of information to be coded is least estimated to be a total of 60 to 100 characters, i.e., about 30 to 50 characters of one name, furigana name, telephone number, and 30 to 50 characters of two bits of position information (code acquiring position/target position) and URL of the map/navigation server 43 and the like. Accordingly, in order to code such character data 518, not a conventional one-dimensional code but the image information (two-dimensional code) 44 must be used.

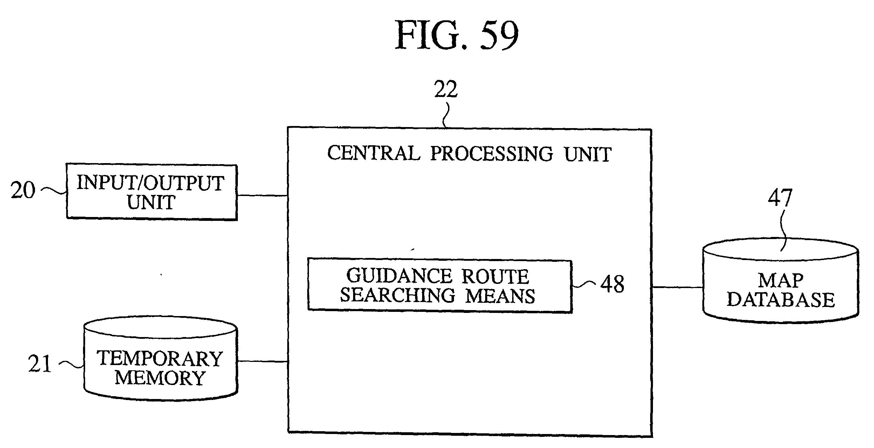

FIG. 59 is a block diagram showing a structure of the map/navigation server 43 shown in FIG. 57. As shown in FIG. 59, the map/navigation server 43 includes an input/output unit 20, a temporary memory 21, a central processing unit 22, a map database 47 and the like. The input/output unit 20 is an independent function of the map/navigation server 43 having no relation to a navigation method. It stores data in the map database 47 in a file outside the server 43, and restores the map data stored in the file in the map database. It also stores or restores a computer program for realizing a function of the central processing unit 22. The temporary memory 21 temporarily stores the character data 518 sent from the cellular telephone 42. Alternatively, it temporarily stores map data called from the map database 47 by the central processing unit 22. The central processing unit 22 includes guidance route searing means (module) 48 for searching navigation information containing map information indicating a guidance route from a code acquiring position to a target position based on information of the code acquiring position and the destination position contained in the character data 518. The map database 47 stores map information of an area targeted for navigation services. As a result of searching the guidance route, the map information of the area necessary for navigation is called out from the database 47.

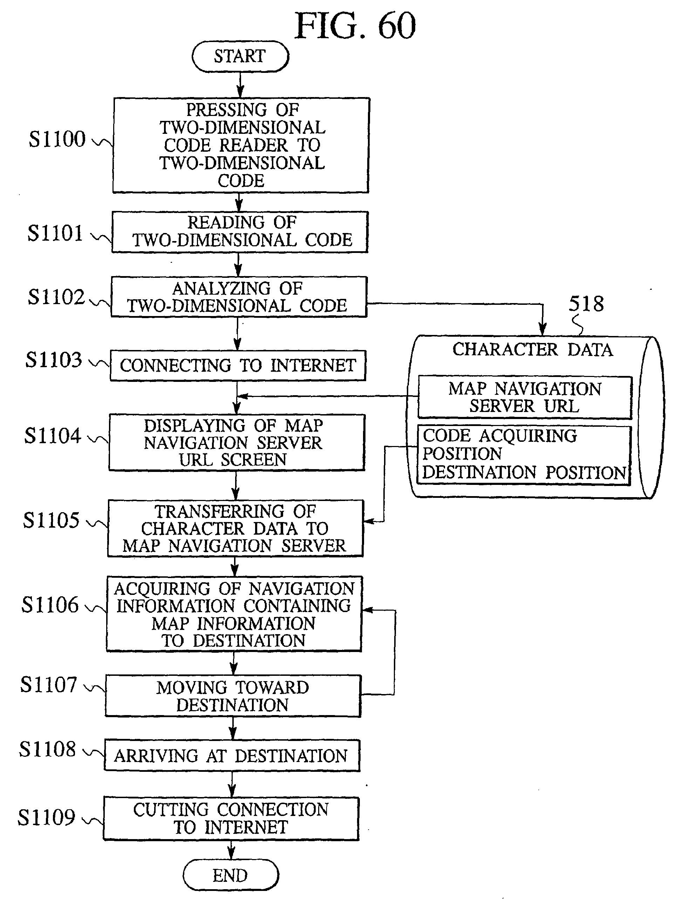

Next, description will be made of a navigation method according to the fifteenth embodiment of the present invention by referring to FIGS. 57 and 60. FIG. 60 is a flow chart of the navigation method of the fifteenth embodiment of the present invention.
(a) First, in step S1100, a service user (user) presses the two-dimensional code reader 11 in the cellular telephone 42 to the image information (two-dimensional code) 44 displayed on an advertising medium of a street model enabling external information indoors/outdoors such as on a wall surface, a road surface or a door, for example on a street corner map board, a lot number display board, a bulletin board, an advertising board, a poster, or an advertising poster hung in a train. This image information (two-dimensional code) 44 contains at least information of a target position, such as latitude and longitude or an address of a place, to which a service provider posting an ad wishes to navigate a user, information of a code acquiring position, such as latitude and longitude or an address of a place of an advertising medium, on which the image information (two-dimensional code) 44 has been printed, and an URL of the map navigation server.
   Then, in step S1101, the image data of the image information (two-dimensional code) 44 is read by the two-dimensional code reader 11 in the cellular telephone 42, and received in the cellular telephone 42. The received image data of the two-dimensional code is stored through a processing control unit 10 in the temporary memory 13. The processing control unit 10 determines whether the image information (two-dimensional code) 44 has been successfully read or not, and transmits a result of the reading through the display unit 2 to the user. If the reading has been a failure, the user of the cellular telephone 42 is urged to read the image information (two-dimensional code) 44 again. The processing control unit 10 also determines whether the image information (two-dimensional code) 44 has been coded or not, and executes code reading if it has been coded. Further, the processing control unit 10 determines a standard of the image information (two-dimensional code) 44. For the image information (two-dimensional code) 44, PDF 417, QR code, Code 16K, Code 49, Maxi Code, Data Matrix, and Code One are available as international standards. The processing control unit 10 determines to which standards among those the read image information (two-dimensional code) 44 belongs. Note that the two-dimensional codes displayed on an advertising medium may have been integrated into one standard previously.
(b) Then, in step 1102, the image information (two-dimensional code) 44 is analyzed. That is, whether the read image information (two-dimensional code) 44 is valid or not is checked by the two-dimensional code decoding means (module) 10b. Then, the two-dimensional code 44 is converted into character data 518 by the two-dimensional code converting means (module) 10c. The character data 518 is stored in the temporary memory 13 again. Preferably, the character data 518 is represented by a standard character code such as ACSII.
(c) Then, in step S1103, the user makes a connection to the Internet by using "network connecting means (module)" such as a telephone function control means (module) 10a, a radio unit 4 or an antenna 3. Then, in step S1104, a screen of URL of the map/navigation server 43 contained in the character data 518 is displayed through the Internet. If a connection is not made to the map/navigation server 43, that is, if an error is present in the URL information of the map/navigation server 43, a display is shown on the display unit 2 of the cellular telephone 42 so as to read the image information (two-dimensional code) 44 again. If a connection is made to the map/navigation server 43, a sign of connection success is displayed on the display unit 2, and the user proceeds to work of step S1105.
(d) Then, in step S1105, the user transfers the information of the code acquiring position and the destination position in the character data 518 through the Internet to the map/navigation server 43. If an error is present in the sent-in information of the code acquiring position and the target position, the map/navigation server 43 reads the image information (two-dimensional code) 44 again through the Internet, and urges the user to transfer the character data 518. If no errors are present in the sent-in information of the code acquiring position and the destination position, success in reading the two-dimensional code is conveyed through the Internet to the user, and the process proceeds to work of step S1106.
(e) Then, in step S1106, the map/navigation server 43 searches navigation information 45 containing map information indicating a guidance route from the code acquiring position to the destination position by the guidance route searching means (module) 48. Then, the navigation information 45 as a result of the searching is transmitted to the cellular telephone 42. The navigation information 45 is edited by the navigation information editing means (module) 10e of the cellular telephone 42, and outputted to the display unit 2.
(f) Then, in step S1107, the user can move according to the guidance route indicated by the navigation information 45 by allowing the display unit 2 of the cellular telephone 42 to display the navigation information 45. If the navigation information 45 contains a plurality of maps, in other words if the guidance route from the code acquiring position to the destination position cannot be displayed at once on the display unit 2, the user obtains subsequent map information from the map/navigation server 43 at a point of time when he/she finishes moving through the guidance route indicated on one map. That is, by alternately repeating steps S1106 and S1107, a necessary map can be properly obtained when necessary. Furthermore, if the map information is indicated on one large map, and the entire map cannot be displayed on the display unit, the map may be scrolled using a scroll button or the like of the cellular telephone.
(g) Lastly, in step S1108, the user can reach the destination and, in step S1109, the connection with the Internet is disconnected, and the process is ended.

As described above, the two-dimensional code is instantaneously read through one-touch operation by using the cellular telephone 42 having the two-dimensional code reader 11, and the code acquiring position, the destination position and the designated URL (URL of map/navigation server 43) contained in the two-dimensional code is transferred through the Internet to the designated server (map/navigation server 43). Accordingly, a navigation service, in which the cellular telephone 42 and the map/navigation server 43 are linked with each other, can be developed. Compared with a conventional GPS system, it is possible to provide a quick navigation service through the Internet by a simple input operation of the user. The advantage of this navigation service is large for a service provider having a store located in a place difficult to be found.

Underground (in an underground shopping center, or subway station), where a conventional GPS system is inoperable, the navigation system of the invention effectively functions. In this case, a two-dimensional code is put up on a column or a store front. Because the effect of a customer being attracted and induced to the particular shop, it is easy to obtain cooperation such as poster putting-up on a store front, from each store.

It is impossible to identify a floor of a building based on GPS position information. Situations completely differ from floor to floor, and thus identification thereof is important. Therefore, by containing a floor identification code in the two-dimensional code, it is possible to contain floor information in the position information such as the code acquiring position or the destination position.

Even in conditions where the GPS system satisfactorily functions, acquisition of the information of the destination position needs no visual or keyboard inputs, and geographical information of a destination intended by the service provider acquired from a normal magazine ad, a insert or a street map can be instantaneously registered in the portable information processor. That is, the invention is advantageous in that the navigation system is not only useful in areas such as underground or regarding floors, in which the conventional GPS system functions unsatisfactorily, but also compared with the GPS system on an equal basis, a navigation service can be developed only by a simple operation of the portable information processor to acquire the information of the destination position from a magazine ad, a street ad or the like present around the user. Note that the acquiring method of the destination position can be linked with an on-vehicle navigation system. For example, by entering a two-dimensional code of an inn or the like in DM, a destination is registered in the on-vehicle navigation system with one click. At present, an address, an inn name, a telephone number or the like is entered to recognize a destination.

An information acquiring source (type of advertising medium) can be automatically identified from the position information (latitude and longitude) of the code acquiring position. If necessary, this information acquiring source may be embedded in the two-dimensional code. This information is useful for the validity of a notice on an advertising medium, and can be used for marketing and the like.

If the cellular telephone 42 is PHS, since a density of radio relay stations (connecting antennas) 51a to 51d is relatively high, an approximate current position of the user can be estimated from the radio relay stations (connecting antennas) 51a to 51d, to which the cellular telephone 42 is connected. Thus, the map/navigation server 43 can provide navigation information enabling a current position of the user being navigated to be known, and appropriate to the current position of the user, in addition to the position information contained in the two-dimensional code. According to this method, when the user goes out of the guidance route and loses his way during navigation, navigation information from the current position to the destination can be provided. Thus, it is very convenient.

Even in the case of the portable information processor being incapable of estimating a user's current position from the radio relay station, the current position of the user can be easily transmitted to the server by reading a two-dimensional code displayed anywhere on a street corner, one containing the position information (the latitude and longitude, or address) of the two-dimensional code. For example, image information (two-dimensional code) 44 embedding latitude and longitude information may be displayed beforehand on a bulletin board indicating an address and a lot number at a street corner. Alternatively, a two-dimensional code embedding position information, and a request for comment (RFC) may be displayed on a bench, a garbage box, a post, a power pole, a traffic sign, a signal or a nameplate (generically referred to as "street furniture").

By incorporating or attaching a module for acquiring position information(i.e., GPS chip such as snap track) using a GPS in a portable information processor such as PHS, a more accurate navigation service can be provided.

A mobile metabase running system using the two-dimensional code can be a powerful platform as a user interface for general consumers when a GPS chip, a map information system, Bluetooth (local radio communication system), image net distribution, an on-vehicle navigation system (containing VICS), which will be standardized in the future, are combined to realize services. For example, in combination with the on-vehicle navigation system, the user is first guided to the nearest (or a store-designated) vacant parking lot, and then navigated to the store by a cellular telephone. Thus, various user requests can be satisfied according to user's situations. Such a service is especially effective for a woman user fond of trying out foods at various restaurants and shopping but not so good at understanding geographical space.

Note that, in the fifteenth embodiment, in order to obtain information converted into a two-dimensional code from remoteness, the two-dimensional reader 11 may include a function of reading a code from the remoteness. Specifically, a two-dimensional code put up on a building wall surface at a street corner or the like is read by a two-dimensional code reader 11 having a telecamera. Instead of the telecamera, a remote reading function using a laser beam may be used. In such a case, a large two-dimensional code displayed on an advertising medium is prepared.

In the foregoing, the optical data contains the information of the destination position, the information of the code acquiring position, and the URL of the map/navigator server 43. However, the optical data may have embedded registration information as information regarding a service provider to be registered in the portable information processor other than the above. This registration information will be described later with reference to a seventeenth embodiment. Alternatively, if the URL of the map/navigation server 43 is stored beforehand in the data memory 9 of the portable information processor 65, it is not necessary to embed the UCR in the image information (two dimensional code).

### (Sixteenth Embodiment)

In the fifteenth embodiment of the invention, the portable information processor (cellular telephone) decodes the two-dimensional code, and converted the two-dimensional code into the character data 518. That is, the cellular telephone included the data decoding module (two-dimensional code decoding means) and the code converting module (two-dimensional code converting means). In a sixteenth embodiment of the present invention, description is made of a case where an optical data analyzing server (code analyzing server) 29 having such a data decoding module (two-dimensional code decoding means) and a code converting module (two-dimensional code converting means) are further provided on the communication network.

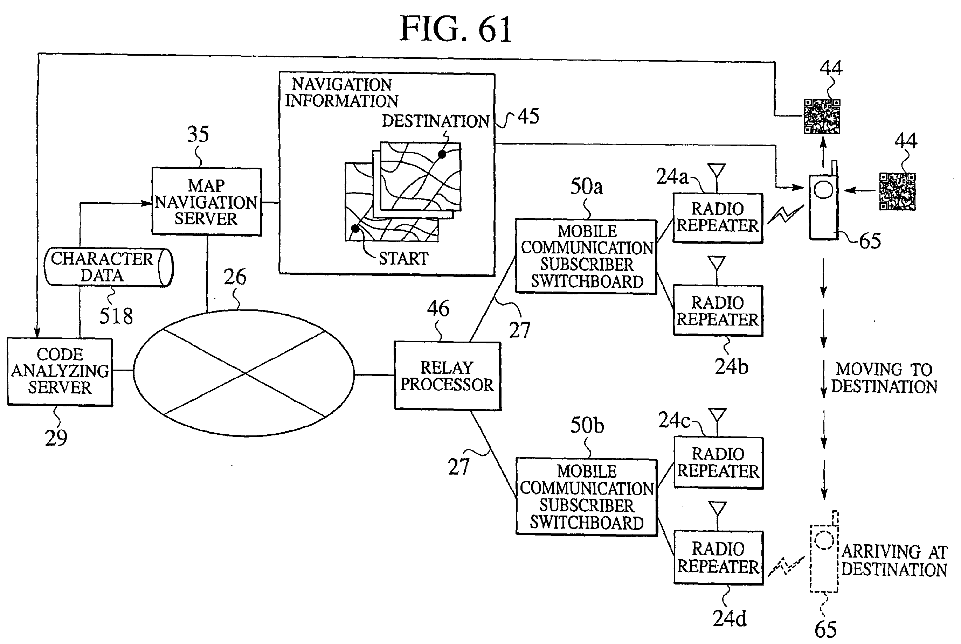

FIG. 61 is a system configuration view of a navigation system according to the sixteenth embodiment of the present invention. As shown in FIG. 61, the navigation system includes the Internet (communication network) 26, to which a map/navigation server (server for navigation) 35, and the code analyzing server (optical data analyzing server) 29 are connected, and a digital communication network 27, to which a portable information processor 65 is connected.

The portable information processor 65 is a cellular telephone 42, which includes an input unit, a display unit, a radio unit, a speech processor, a CODEC, a data memory, a processing control unit, an optical data reader (two-dimensional code reader), a temporary memory and the like. Compared with the cellular telephone 42 shown in FIG. 58, a structure of the processing control unit is different, while other components are similar. The processing control unit includes a telephone function control means (module) and a navigation information editing means (module), but not a two-dimensional code decoding means (module) 10b and a two-dimensional code converting means (module) 10c similar to those of FIG. 58. The data memory stores information regarding the URL of the code analyzing server 29 beforehand.

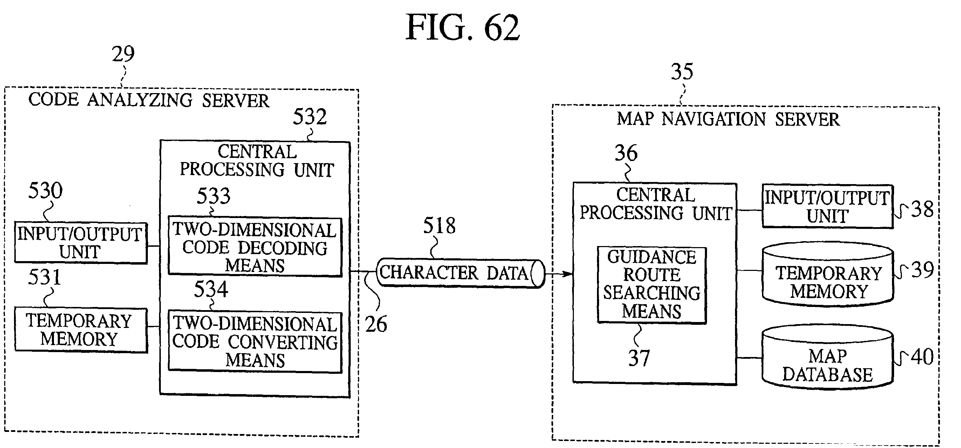

FIG. 62 is a block diagram showing structures of the code analyzing server 29 and the map/navigation server 35 shown in FIG. 61. The code analyzing server 29 includes an input/output unit 530, a temporary memory 531, and a central processing unit 532. The portable information processor 65 does not include the two-dimensional code decoding module 10b and the two-dimensional code converting module 10c Instead, however, a data decoding module (two-dimensional code decoding means) 533 and a code converting module (two-dimensional code converting means) 534 are provided in the central processing unit 532 of the code analyzing server 29. The two-dimensional code decoding means (module) 33 obtains image data of image information (two-dimensional code) 44 transmitted from the cellular telephone 42, and checks whether the image information (two-dimensional code) 44 is valid or not. The two-dimensional code converting means (module) 34 converts the image data of the image information (two-dimensional code) 44 determined to be valid by the two-dimensional code decoding means (module) 33 into character data 518. The temporary memory 531 temporarily stores the image data of the image information (two-dimensional code) 44 transmitted from the cellular telephone 42, a code obtained by the two-dimensional code decoding means (module) 33 and the two-dimensional code converting means (module) 34, and the character data 518. Passage through the two-dimensional code decoding means (module) 33 and the two-dimensional code converting means (module) 34 enables the image information (two-dimensional code) 44 to be converted into the character data 518 capable of being read by a computer. The converted character data 518 is transmitted through the Internet 26 to the map/navigation server 35 according to the URL of the map/navigation server 35 contained in the character data 518.

The map/navigation server 35 includes a central processing unit 36, an input/output unit 38, a temporary memory 39, and a map database 40. The temporary memory 39 temporarily stores the character data 518 sent from the code analyzing server 29. Alternatively, the temporary memory 39 temporarily stores map data recalled from the map database 40 by the central processing unit 36. The central processing unit 36 includes guidance route searching means (module) 37 for searching navigation information containing map information indicating a guidance route from a code acquiring position to a target position based on information of the code acquiring position and the destination position contained in the character data 518. The map database 40 stores map information of an area targeted for navigation services. As a result of searching the guidance route, the map information of the area necessary for navigation is called out from the map database 40. The input/output units (30, 38) in the code analyzing server 29 and the map/navigation server 35 have independent functions, and store files in the servers (29, and 35) and restore the files.

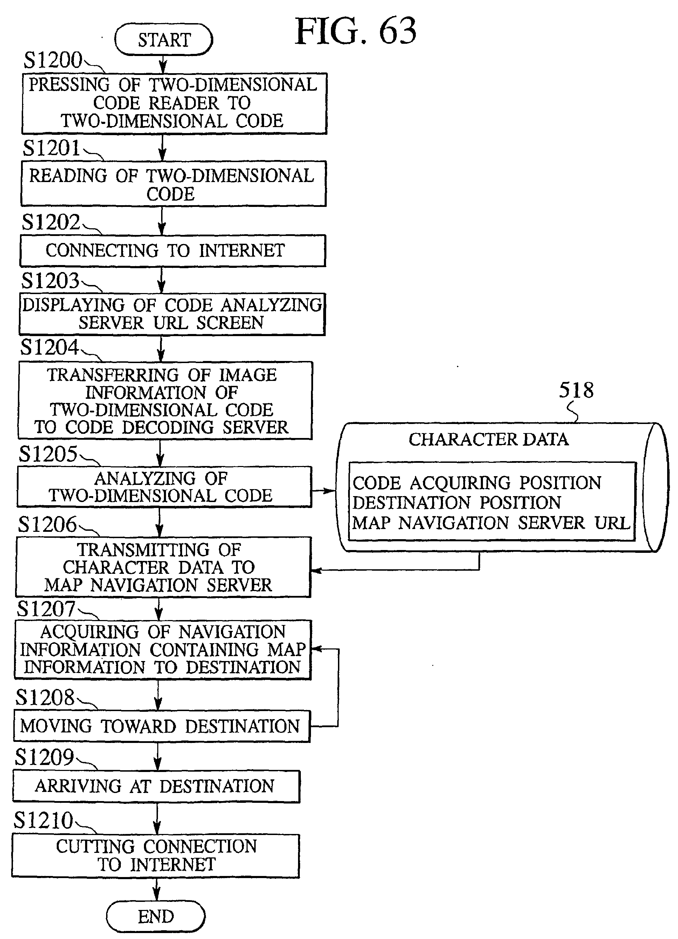

Next, description will be made of a navigation method according to the sixteenth embodiment of the invention by referring to FIGS. 61 and 63. FIG. 63 is a flowchart of the navigation method of the sixteenth embodiment of the invention shown in FIG. 61.
(a) First, as in the case of the fifteenth embodiment, in step S1200, the two-dimensional code reader 11 is pressed to image information (two-dimensional code) 44 displayed on an advertising medium of a street model. Then, in step S1201, the image data of the image information (two-dimensional code) 44 is read by the two-dimensional code reader 11, and received to in the cellular telephone 42. The processing control unit 10 executes a predetermined processing, such as a determination as to successful code reading, the presence of a code and the standard of a code, with respect to the image information (two-dimensional code) 44.
(b) Then, in step S1202, the user makes connection to the Internet by using communication network connecting means (module). Then, in step S1203, a screen of an URL of the code analyzing server 29 stored beforehand in the data memory 9 of the cellular telephone 42 is displayed through the Internet. If connection is not made to the code analyzing server 29, displaying is carried out on the display unit 2 of the cellular telephone 42 in such a way as to enter the URL of the code analyzing server 29 again. If connection is made to the code analyzing server 29, a sign of connection success is displayed on the display unit 2, and the user proceeds to work of step S1204.
(c) Then, in step S1204, the user transfers the image data of the image information (two-dimensional code) 44 through the Internet to the code analyzing server 29. The code analyzing server 29 determines the presence of an error in the image data of the sent-in image information (two-dimensional code) 44. If an error is present in the image data of the image information (two-dimensional code) 44, the user is urged to read the image information (two-dimensional code) 44 again through the Internet. If no errors are present in the image data of the image information (two-dimensional code) 44, success of reading the two-dimensional code is conveyed through the Internet to the user, and the process proceeds to work of step S1205. The image data of the image information (two-dimensional code) 44 is stored in the temporary memory 531 of the code analyzing server 29.
(d) Then, in step S1205, the code decoding server 29 checks whether the read image information (two-dimensional code) 44 is valid or not using the two-dimensional code decoding means (module) 10b. Then, the two-dimensional data 44 is converted into character data 518 by the two-dimensional code converting means (module) 10c. The character data 518 contains information of a code acquiring position, a destination position and the URL of the map/navigation server 35. The character data 518 is stored in the temporary memory 531 of the code analyzing server 29. Preferably, the character data 518 is represented by a standard character code such as ACXII.
(e) Then, in step S1206, the code analyzing server 29 transmits the character data 518 through the Internet to the map/navigation server 35.
(f) Then, in step S1207, the map/navigation server 35 searches navigation information 45 containing map information indicating a guidance route from the code acquiring position to the destination position by the guidance route searching means (module) 37. Then, the navigation information 45 as a result of the searching is transmitted to the cellular telephone 42. The navigation information 45 is edited by navigation information editing means (module) of the cellular telephone 42, and outputted to the display unit.
(g) Then, in step S1208, the user can move according to the guidance route indicated in the navigation information 45 by causing the display unit 2 of the cellular telephone 42 to display the navigation information 45. If the navigation information 45 contains a plurality of maps, in other words if the guidance route from the code acquiring position to the destination position cannot be displayed at once on the display unit 2, the user obtains subsequent map information from the map/navigation server 43 at a point of time when he finishes moving through the guidance route indicated on one map. That is, by alternately repeating steps S1207 and S1208, a necessary map can be properly obtained when necessary.
(h) Lastly, in step S1209, the user can reach the destination and, in step S1210, the connection with the Internet is cut off, and the process is ended.

In the sixteenth embodiment, the code analyzing server 29 and the map/navigation server 35 were separately provided. However, the code analyzing server 29 and the map/navigation server 35 may be unified into one server. Thus, the time and labor of data transmitting/receiving of the character data 518 can be removed, and quick navigation services can be provided. On this case, the URL information of the map/navigation server 35 is contained in the image information (two-dimensional code) 44, or the URL information of the map/navigation server 35 is registered in the cellular telephone beforehand.

### (Seventeenth Embodiment)

In the sixteenth embodiment, an explanation was made of the case where the image information (two-dimensional code) 44 contained the information of the destination position such as the latitude and longitude or the address of the location for navigating the user by the service provider putting up the ad, the information of the code acquiring position such as the latitude and longitude or the address of the location of the advertising medium having the image information (two-dimensional code) 44 printed, and the URL of the map navigation server. In the seventeenth embodiment, description is made of a case where the image information (two-dimensional code) 44 further contains registration information which is information regarding the service provider and which is capable of being registered in the portable information processor.

In advertisement of a store (ad provider) on a magazine, as information to be contained in the two-dimensional code, in addition to the information of the code acquiring position, the destination position, and the URL of the map/navigation server, information of a store name, a profile (e.g., French restaurant or the like), a telephone number, a location, opening hours, holidays and the like is added. The location of the store indicates an address, the latitude and longitude and the like of the store.

By pasting such an ad in a magazine ad or a catalogue, it is possible to instantaneously fetch the above information in the portable information processor through one-touch operation, and register the information in the portable information processor. Moreover, the foregoing promotes popularization of the portable information processor. From the information of the location of the store, a map of the store or a navigation service up to the location of the store may be provided in conjunction with the map/navigation server. Needless to say, the system may be combined with the on-vehicle navigation system.

### (Eighteenth Embodiment)

A two-dimensional code containing position information such as the latitude and longitude, or an RFC is displayed on "street furniture" of a street corner address sign and a lot number sign, or a bench, a garbage box, a post, a power pole, a traffic sign, a signal and a nameplate. Accordingly, the following information providing service can be rendered.

By displaying the two-dimensional code on the "street furniture", not only "map information of a surrounding area" but also "position information and time information (terminal normally has time information)" can be obtained. Thus, based on this space and time information, it is possible to provide various bits of related information about the surrounding area (store information, event information, related information such as regional weather forecast, and the like). These various bits of related information are obtained/updated by the following method.
(1) Various bits of related information are embedded in the two-dimensional code of the "street furniture" by using a recording medium (IC chip, hard disk, or magneto-optical disk). Various bits of related information are updated by using a recording medium such as a CD-ROM, a small memory card (flash memory) or the like.
(2) Various bits of information are obtained and updated by connecting the "street furniture" to a communication network (radio or cable).
(3) An address of an Internet server dependent on the space and time information thereof is converted into a two-dimensional code beforehand, and obtained by the portable information processor through the Internet. In this case, updating of various bits of related information is carried out at the server side.

In the cases of (1) and (2), a method of reading the information in a terminal by radio such as Bluetooth, or a method of reading the information through a recording medium such as a stick gum-shaped small memory card or an SD memory is available. In the case of (3), the information is obtained according to the obtained URL information through the Internet.

As a specific service example, a code allocated to a place on a map, a current situation of which is wished to be known, is read by the portable information processor, and thus a video of the place can be obtained. This is made possible by embedding a code in a particular place (station, street, event site or the like) on the map, installing a digital (video) camera having an ID or an IP address in the actual particular place, and connecting this to the Internet.

### (Nineteenth Embodiment)

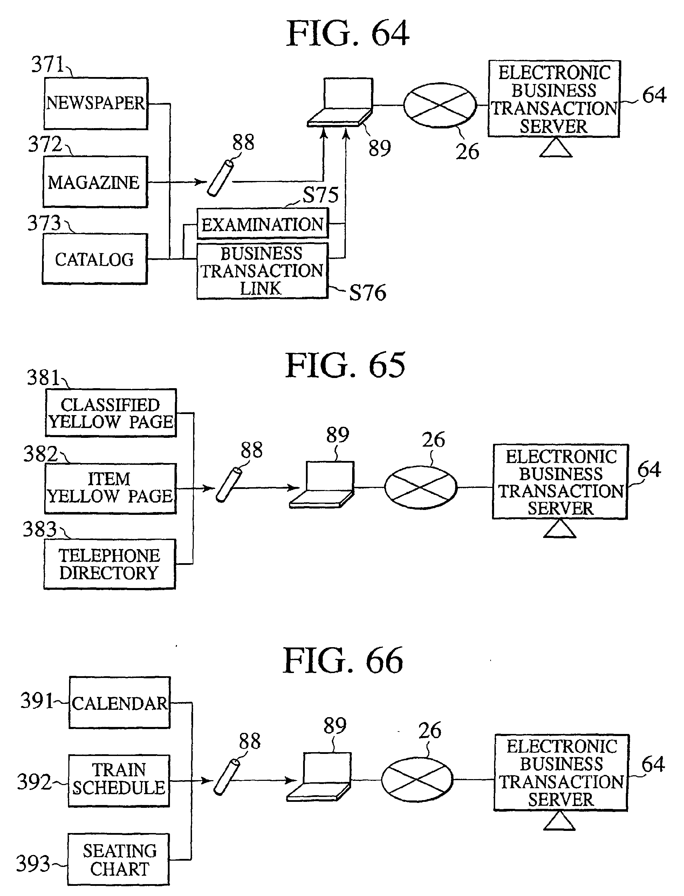

FIG. 64 shows a replica page model according to a nineteenth embodiment of the present invention. Image information (two-dimensional code) 44 on paper such as a newspaper 371, a magazine 372 or a catalogue 373 having the image information (two-dimensional code) 44 pasted or printed, the image information 44 being of item provider side information containing URL corresponding to an item to be transacted or a service to be transacted, is clicked once by an optical reading only portable information terminal 88. A content identical to that on the paper is copied (replica) on a WEB page 74 of a network terminal 89 through a network 26. A user carries out checking such as selection, determination and the like of information on the paper (step S75), and carries out work such as transaction of reserving, ordering or the like, and linking to a related page on the WEB (step S76). This combination model of the paper and the WEB uses good characteristics of easy understanding of the paper and easy processing on the WEB. The paper is easy to be seen, browsability is high, page turning is easy, and determination is made more quickly than only on the WEB, and accordingly communication costs are effectively reduced. If communication costs are based on metered rates, an advantage of this model is beyond discussion. Further, even if communication costs are based on fixed charges, the model is still effective. Business transaction information is processed at an electronic business transaction server 64 through the network 26. In the invention, this electronic business transaction is referred to as a replica page model.

Hereinafter, specific service examples derived from running the system according to the nineteenth embodiment of the invention are described.

### (a) Browse Service

A two-dimensional code printed or pasted on a page of each of a classified yellow page 381, an item/service yellow page 382 and a telephone directory 383 or the like shown in FIG. 65 is clicked once by the optical reading only portable information terminal 88. The user can immediately obtain necessary information on the WEB of the network terminal 89 through the network. It is possible to easily access an arbitrary page of a print having a great number of pages. Moreover, it is possible to build a system for enabling dial calling to be made by clicking the telephone directly only once. In the invention, this system is referred to as "browse service".

### (b) Transaction Service

Image information (two-dimensional code) 44 of information of a calendar 391, a train schedule 392, a seat 393 of a concert or the like shown in FIG. 66 is clicked once by the optical reading only portable information terminal 88. Accordingly, the information is displayed with information stored in the optical reading only portable information terminal 88 on the network terminal 89 through the network 26, enabling a reservation process to be executed. In other words, reservations can be made from the paper converted into a two-dimensional code. Moreover, by selecting information through an operation menu converted into a two-dimensional code, a reservation settlement service can be completed on the WEB without a keyboard. Since the keyboard is not necessary, application to the portable terminal is easy. In the invention, this system is referred to as "transaction service".

### (c) "My Portal" Service

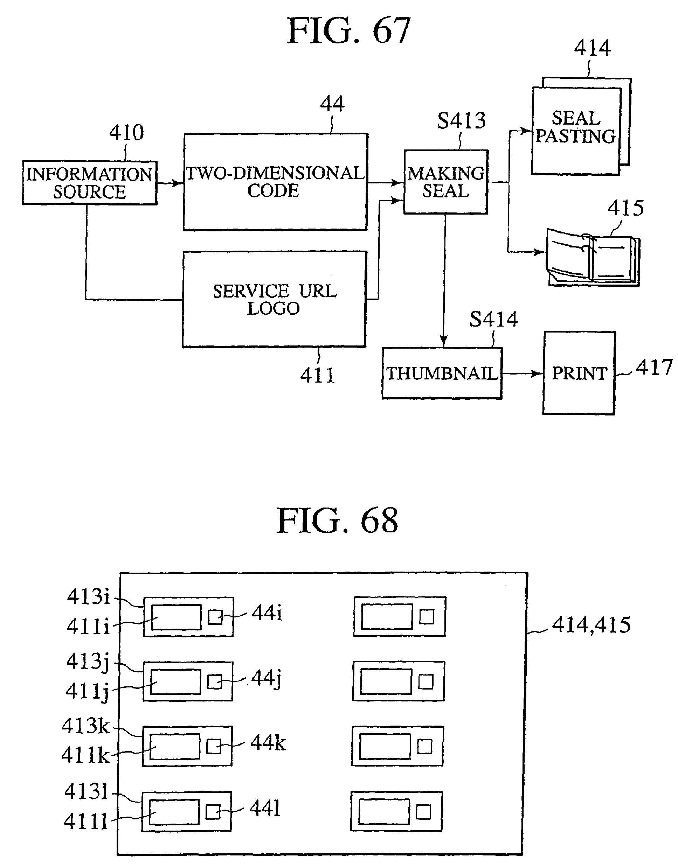

Bits of management information 411i, 411j, 411k, 411l and the like of a daily used information source, such as a logo, a service name, and the URL of, for example an E-mail address, a book, a music CD, a search engine, a restaurant, a hotel, a live music house, a movie theater, and news, shown in FIG. 67 are outputted to seals 413i, 413j, 413k, 413l and the like based on image information (two-dimensional code) 44i, 44j, 44k, 44l and the like, and the seals are pasted to a single plain paper 414, a sketchbook or a daily carried pocketbook 415. A method of outputting the image information (two-dimensional code) 44i, 44j, 44k, 44l and the like of the bits of management information 411i, 411j, 411k, 411l and the like to a thumbnail 414 to obtain a print 417 can also be used. By clicking the seals 413i 413j, 413k, 413l and the like once by the optical reading only portable information terminal 88, the user can access the information source 410 from any terminals irrespective of time and places. The seal itself becomes a self portal. In the invention, this system is referred to as "my portal service".

### (Twentieth Embodiment)

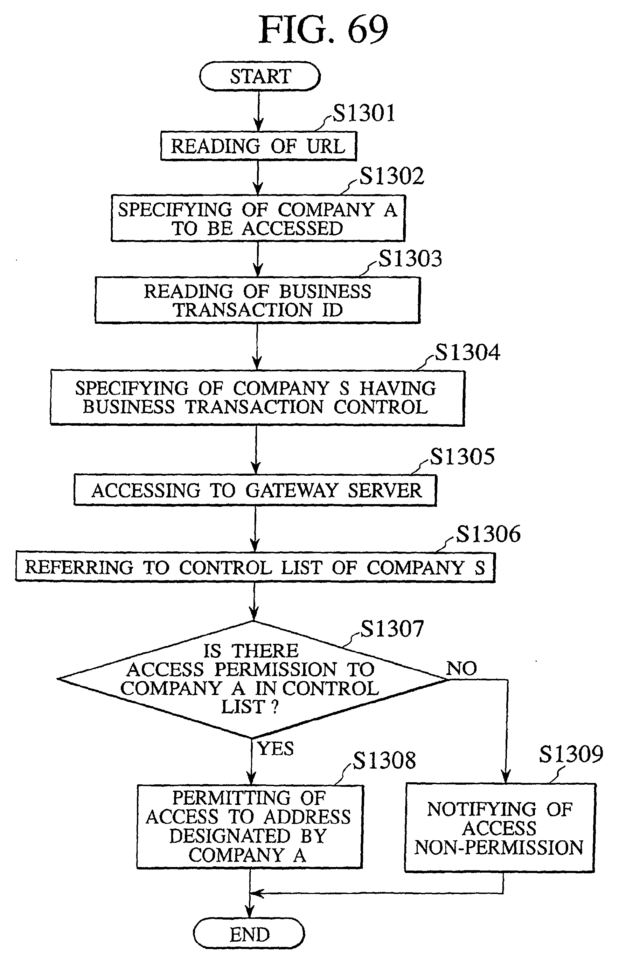

FIG. 69 is a flowchart showing access control according to a twentieth embodiment of the present invention. The "access control" enables a company S having an access control right to limit user's access to an electronic business transaction providing server 64a owned by a company A by a license registration checking server (gateway server) 28 in the communication network system shown in FIG. 21, 24, 33 or 40. Here, the company A provides codes (image information) necessary for business transactions with the company A through print, an electronic display unit (e.g., screen of a television) or the like. As shown in FIG. 22, the license registration checking server (gateway server) 28 includes an access limitation information memory 74 (equivalent to the license registration data memory of FIG. 22), and access limitation information is registered in this access limitation information memory 74. The "access limitation information" means limitation information presented beforehand by the company S having access control rights, which limits access permission/nonpermission to a designated company (e.g., company A), a designated period, and an owner of a designated portable information processor. The access limitation memory 74 of the license registration checking server (gateway server) 28 stores access limitation information (control list) for each company S having access control rights.

Now, description will be made of the access control according to the twentieth embodiment of the invention by referring to FIG. 69.
(a) First, in step S1301, the user uses, for example the portable information processor 65a to read network information (an URL or the like) of an address to be accessed from image information (two-dimensional code) 44 provided by the company A through a print or an electronic display unit. Then, in step S1302, the portable information processor 65a specifies an electronic business transaction providing server 64a of the company A to be accessed.
(b) Then, in step S1303, the portable information processor 65a reads business transaction ID recorded in the personal information memory 12 of the portable information processor 65a. Further, in step S1304, the portable information processor 65a specifies a company S having business transaction control regarding electronic business transactions of the company A.
(c) In step S1305, based on the information read by the portable information processor 65a, and the information recorded in the personal information memory 12 of the portable information processor 65a or the like, access is made from the portable information processor 65a to the license registration checking server (gateway server) 28 through the Internet 26.
(d) In step S1306, reference is made to the control list of the company S in the access control list for each company stored in the access limitation information memory 74 of the license registration checking server (gateway server) 28. Then, in step S1307, determination is made as to whether permission for access to the electronic business transaction providing server 64a of the company A is present or not in the access control list of the company S. If permission for access to the electronic business transaction providing server 64a is present, the process proceeds to step S1308, where the license registration checking server (gateway server) 28 gives access permission to an address of the electronic business transaction providing server 64a of the company A. If access permission is not present, the process proceeds to step S1309, where the license registration checking server (gateway server) 28 notifies nonpermission for access to the electronic business transaction providing server 64a of the company A to the portable information processor 65a of the user.

By the access control according to the twentieth embodiment of the invention, the following marketing models can also be provided.

### (a) Cross Marketing Model

A model where participant companies exchange members of respective markets with one another by using a list stored in the license registration checking server (gateway server) 28 shown in FIG. 21, 24, 33, 40 or the like based on a contract. A purchase company code can be registered in each of the portable information processors 65a, 65b and the like bought en bloc by the company having B-B-C independent members and member information. By carrying out cross marketing among purchase companies through the gateway server 28, it is possible to provide better services to the members of one another. In this case, the service provider pays commission to the owner company of each of the portable information processors 65a, 65b and the like. Alternatively, charges are balanced out by providing services to one another.

### (b) Server Affiliate Model

A model where a determination is made by the gateway server 28 as to which distributor the portable information processor 65a, 65b or the like belongs to, and an affiliated bonus is provided. Here, an "affiliated bonus" means that commission to an advantage generated from access from the portable information processor 65a, 65b or the like is kicked back to the owner. By registering information regarding distributors of the portable information processors 65a, 65b and the like in the respective portable information processors 65a, 65b and the like, commissions for purchases generated from corresponding portable information processors 65a, 65b and the like can be automatically provided.

### (c) Competitor Company Exclusion Control Model

A model where access to a designated competitor company of a distributor is automatically excluded by the gateway server 28.

### (d) Company by Company Filter Providing Model

A model where a site impossible to access is stored beforehand in the access limitation information memory 74 of the gateway server 28 by a company and, by referring to a content of the access limitation information memory 74 of the gateway server 28, for example, access cannot be made to an adult site from a company for child education. Alternatively, the gateway server 28 limits access so as to inhibit settlement when a total of settlement exceeds a fixed amount. Otherwise, by storing a fixed amount in the access limitation information memory 74 of the gateway server 28, an amount capable of being settled can be presented by a prepaid system.

### (e) Sever Load Great Reduction Model (Full-parallel Join)

A model where based on image information, internal information (address of the gateway server 28 or personal information) of each of the portable information processors 65a, 65b and the like, an item is selected, a selected item, a medium putting up the selected item and user information are correlated with each other, a necessary attribute in user information is obtained, and it is registered in the database, by the portable information processor 65a, 65b or the like of the user side. That is, each user executes data coupling of database calculation (join calculation) completely in parallel (full parallel) at the respective terminals (portable information processors 65a, 65b and the like). Thus, a load (concentrated access load, exclusion control load, or DB calculation execution load) on the gateway server 28 side is greatly reduced.

### (f) Product Self-Multiplication Model

A model where a reorder code is attached to a product, and action is caused during reordering. In this case, related item information is simultaneously carried, and such related items can also be ordered. Specifically, by reflecting a result of data mining for analyzing purchase history data, and selecting data of simultaneously presented item/service, user's purchase probability can be maximized. Since orders multiply themselves during reordering from generation to generation, sales chances are exponentially increased with time.

### (Twenty First Embodiment)

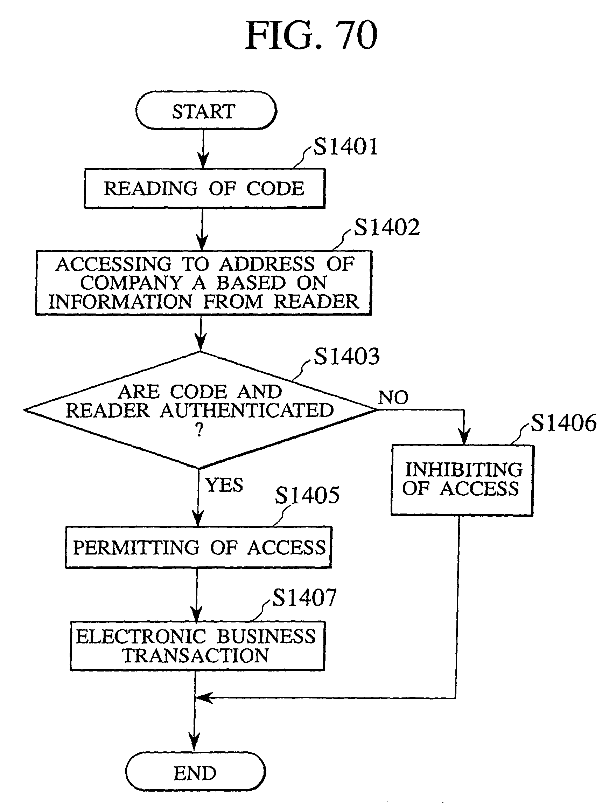

FIG. 70 is a flowchart of when a mobile metadatabase using an automatic recognition technology according to a twenty first embodiment of the present invention is utilized. The "automatic recognition technology" means a technology for automatically recognizing information necessary for business transactions carried out by the image information and the portable information processors 65a, 65b and the like described above with reference to the first to the twentieth embodiments.

Now, description is made of a method of using the mobile metadata base using the automatic recognition technology by referring to FIGS. 21, 24, 33, 40 and 70. In this case, it is assumed that a code (image information) displayed in print, on an electronic display unit (e.g., screen of a television) or the like contains information necessary for electronic business transactions owned by the service provider A, and a reader (portable information processor 65a) contains personal information of a user C necessary for electronic business transactions.
(a) First, in step S1401, the portable information processor 65a reads the image information.
(b) Then, in step S1402, based on information from the portable information processor 65a, the portable information processor 65a accesses an address of a designated electronic business transaction providing server 64a owned by the provider A through a communication network 26.
(c) In step S1403, a license registration checking server (gateway server) 28 run by a company M authenticates the image information and the portable information processor 65a. If access is permitted to the designated electronic business transaction server 64a on the communication network 26, the process proceeds to step S1405. In step S1407, the electronic business transaction providing server 64a run by the provider A completes execution of the electronic business transaction process based on the image information and information received from the portable information processor 65a. If access is inhibited, the process proceeds to step S1406, where access to the electronic business transaction providing server 64a is controlled.

As described above, by using the automatic recognition technology based on the image information and the portable information processor 65a, it is possible to control access to the electronic business transaction providing servers 64a, 64b and the like on the communication network 26, and select, obtain, couple and register necessary data in the database. Moreover, by a minimum input of electronic business transaction (keyboard-less), it is possible to carry through (complete execution) of transactions with the electronic business transaction providing servers 64a, 64b and the like.

### (Other Embodiments)

The present invention has been described by way of the first to twenty first embodiments. It should be understood that the description and drawings constituting parts of the disclosure are not limitative of the invention. As obvious to those skilled in the art, various alternative embodiments, other embodiments and operation technologies can be made.

In the foregoing embodiments, the item provider displays information such as item listing URL or item information by using the two-dimensional code. However, the invention is not limited to the two-dimensional code. A one-dimensional barcode, a 1.5-dimensional barcode, a three-dimensional code, a hologram, an electronic watermark, or a code may be used, and even character data itself may be used.

In the first to twenty first embodiments of the present invention, the description was made using the cellular telephone as the information processor. However, the information processor is not limited to a cellular telephone. Other than a cellular telephone, a PHS, a PDA, a notebook computer, an electronic databook or the like may be used. An electronic device such as a camera including a digital camera, a game machine, a car navigation device, a scanner, or a printer may be used. Further, a wrist watch, eyeglasses, a belt or shoes, which are attachable to the body or portable, may be used. Further, an electric appliance such as a fixed telephone, a public telephone, a desktop computer or a television connected to the communication network 26 may be used. In the case of the fixed information processor, the present invention can be implemented through an STB or the like. The invention can be applied even to a refrigerator or an electronic oven by adding an attachment similar to the STB.

In the first to twenty first embodiments, mainly electronic business transactions using the communication network were described. However, there is no need to carry out actual electronic business transactions, and the invention may be applied to a lottery, quiz application, marketing by an advertising medium and the like using the communication network.

Thus, needless to say, the present invention contains various embodiments and the like not described here. Therefore, from the foregoing description, a technical scope of the invention is defined only by items considered to be necessary for specifying invention described in proper claims.

### INDUSTRIAL APPLICABILITY

The present invention can be applied to an information processing industry and computer related industry using various communication networks related to an electronic business transaction method, a business transaction promoting method, a card item selling method, a delivery address designating method, a business transaction settlement commission method, a business transaction canceling method and the like.

For example, the invention can be used for an information processing industry, where from an arbitrary place and various media (TV guide, newspaper, street poster and the like), through the information processors 65a, 65b and the like of the invention, programming of recording is made of programs described on the media in a self video recorder (video recorder provided with a recording function having an IP address connected to the Internet). Specifically, it is only necessary to enter a network address for making program reservation by the information processors 65a, 65b and the like as image information, such as a channel name (including all of ground wave, satellite, and digital broadcast stations), a program name or ID, starting time and finishing time, in TV listings of a magazine. By storing an IP address of a self video recorder in the information processors 65a, 65b and the like of the invention, or based on personal ID, the IP address of the self video recorder may be specified and obtained by the information processors 65a, 65b and the like and servers of the invention. The invention can be used for an information processing industry, where through the information processors 65a, 65b and the like of the invention, access is made to the video server, and based on designated program starting/finishing time, and a channel, recording information is prepared, and delivered through the network to the self video recorder.

The invention can also be applied to an information processing industry, where by using the information processors 65a, 65b and the like of the invention, a current scene of a site can be location-specified, and seen from a pamphlet map. For example, the information processors 65a, 65b and the like of the invention can be used for checking situation of a site such as a streetscape, road congestion, a line at a bus stop/concert hall entrance. Specifically, from a pamphlet distributed at the entrance of a theme park, a crowded state of an arbitrary attraction can be checked by using the information processors 65a, 65b and the like of the invention. When a road is selected on a road map, a road congested state of a target point (junction, bottleneck or the like) can be checked by using the information processors 65a, 65b and the like of the invention.

The invention can be applied to an information processing industry, where contents capable of being directly downloaded through a communication network are downloaded to a digital television, a game machine, a personal computer, a music player (MP 3) or the like from various media such as a catalogue, a flier, a pamphlet, and a magazine ad through the information processors 65a, 65b and the like of the invention. In this case, on new disk information of a magazine, download instruction may be described with the ID or net address (URL) of the content. Further, when access is made to the electronic business transaction providing server to download a designated file, accounting can be simultaneously carried out by simultaneously transferring personal information of the main body. That is, the electronic business transaction providing server can simultaneously download a designated content file to the net terminal of the user, and carry out accounting based on personal information sent from the information processors 65a, 65b and the like of the invention.

Further, the invention can be applied to an information processing industry, where using an upload camera having a function of taking and recording a digital picture, and converting the digital picture into digital information, and automatically converting its image or the like into an HTML file, and a function of making connection to a communication network, only by performing a conventional recording operation (photographing, and recording), a web page is updated/added on the communication network from the information processors 65a, 65b and the like of the invention. The digital picture may be read through the optical data reader of the invention. Further, by using a map, a menu sheet or the like as an interface, image information containing an address of a WEB page providing information corresponding to a place on the map or the menu sheet is pasted. Then, information to be updated is photographed by the upload camera having the above functions. Simply by photographing a bargain item of the day, lunch of the day, or a live situation of a concert or the like in real time and a store owner or the like on the spot, a corresponding web page can be updated. In addition, if image information of a web page of a menu sheet registering/updating side is read by the optical data reader of the invention, a corresponding web page is updated only by reading the image information. For example, in the case of a web page for notifying a street situation, if a passerby takes a picture, and web page updating image information put up on the spot is read by the optical data reader of the invention, information on the web page can be updated on the spot. In other words, regional information is indicated by an icon in a corresponding position on the map on the magazine, and information registering/updating/adding (upload) and conventional information reading (downloading) are enabled on the same magazine. Users such as storeowners, shop attendants, customers, and passersby, who are busy and not accustomed to methods of use of information equipment, can transmit/receive information (especially information transmission, web page rewriting and the like) without any training.

Further, the invention can be applied to an information processing industry, where if a medium containing an item, service information, a price, and an ad is converted into image information, a database is formed without imposing any load on a computer system constituting a wide area distributed communication network. That is, by printing pieces of the database as image information on a publication such as a magazine or a catalogue containing ads widely, the database can be distributed far and wide. In this case, various items of customer information (name, personal ID, address for delivery and the like) stored in the information processors 65a, 65b and the like of the invention, and data of the printed image information can be coupled (equivalent to joining of the database) on paper. Then, the completed image information is transferred to a designated address on the communication network 26. Thus, since a database record completed on the paper is directly transferred, transactions (information transmission/reception) of the electronic business transaction providing server are greatly reduced, and information system construction costs and management running costs are greatly reduced. Moreover, since the data form and content of the image information is decided by each company itself, it is not necessary to standardize data contents and forms.

Further, the invention can be applied to an information processing industry, where if a "group of data (first-hand information) and operations (registration, access and the like)" regarding a store, an individual, and a place such as a cellular telephone number, a URL of a homepage, an electronic mail address, and position information (latitude and longitude) is converted into image information, various registration execution services can be easily carried out by a combination of these. In addition, by preparing an execution system simultaneously with the registration system, all kinds of actions can be realized. For example, it is possible to run an execution system in which upon reading image information, a telephone call is made thereto and the telephone number is registered in the main body, and in which upon reading image information, access is made to the designated homepage and the URL is registered in the bookmark of the main body. When position information (latitude and longitude) is read from the image information and registered, corresponding map information, navigation information to its place and the like can be obtained from a map electronic business transaction providing server when necessary. Moreover, a destination can be instantaneously set in conjunction with a car navigation system.

Alternatively, the invention can be applied to an information processing industry, where data itself such as a program, a table having a structure, a selection menu or a matrix is prepared in image information, and executed and displayed when read by using the optical data reader of the invention. Since the selection menu can be displayed without accessing the communication network, the load on the electronic business transaction providing server can be greatly reduced. Moreover, editing/organizing of catalogue paper can be greatly simplified. Specifically, a mechanism can be realized, where by directly converting a program of HTML, JAVA, CGI or a method of Internet browser, XML or the like into image information (two-dimensional code), and printing the program, and reading the program by the optical data reader of the invention, display and execution are made on the screen of the main body. For example, if various sizes (S, M and L) and colors (red, orange, blue and black) can be selected for one item of a mail-order catalog, a table of 3×4 of sizes and colors is written in a program as in the case of writing in HTML or the like of a normal homepage, and converted into image information. Then, when item image information on the catalog is read, the table for selecting a size and a color is directly displayed on the screen without accessing the communication network, the user selects desired color and size on the spot, and transmits order data to designated address in the image information on the communication network. In this case, since the selection menu is contained in the image information, no transactions occur through the communication network during selection. Accordingly, the company does not need to prepare an item selection homepage for each item. An advantage is provided to the user in that it is not necessary to wait for a response from the communication network to carry out a transaction of information entry. Moreover, the company can enjoy an advantage that loads on the electronic business transaction providing server are greatly reduced. On the other hand, the user can greatly reduce a load of communication costs, and waiting time caused by the load of the electronic business transaction providing server. Such a mechanism is extremely useful in that complex Internet connection setting, an operation accompanied by an entry such as user registration, access and execution (e.g., selling/buying of particular stocks, auction bidding, reservation of popular tickets and the like) as matters of urgency can be instantaneously executed through one action by using the information processors 65a, 65b and the like of the invention.

## Claims

1. An information processor comprising:
a communication network connection module for connecting with a communication network;
an optical data reader for optically reading information necessary for a transaction;
a processing control unit for controlling the processing of image information read by the optical data reader, and sending a result of the processing control through the communication network connection module to the communication network;
a personal information memory for storing data necessary for the processing control; and
an input unit for entering instruction necessary for operation of the optical data reader and the processing control unit.

2. An information processor according to claim 1, wherein the processing control unit includes at least a data decoding module for decoding the image information read by the optical data reader, a code converting module for converting the image information decoded by the data decoding module into character data, and an electronic transaction data editing module for editing character information acquired by the code converting module and personal information recorded in the personal information memory in forms designated by a partner of the transaction.

3. An information processor according to claim 1, wherein the processing control unit includes at least a data decoding module for decoding the image information read by the optical data reader, a code converting module for converting the image information decoded by the data decoding module into character data containing information of a code acquiring position and a destination position, and a navigation information editing module for editing navigation information sent through the communication network from a navigation server based on the character data.

4. An information processor according to claim 1,
wherein the information processor is implemented by a main function unit and a code reading attachment detachably attached to the main function unit,
wherein the communication network connection module, the input unit and a part of the processing control unit are housed in the main function unit, and the optical data reader and remaining parts of the processing control unit are housed in the code reading attachment.

5. An information processor according to claim 4, wherein the remaining part of the processing control unit housed in the code reading attachment includes a data decoding module for decoding the image information read by the optical data reader, a code converting module for converting the image information decoded by the data decoding module into character data, and an electronic transaction data editing module for editing character information acquired by the code converting module and personal information recorded in the personal information memory into predetermined forms.

6. A license registration checking server configured for communicating with each of an information processor including an optical data reader, and a server for providing electronic transactions through a communication network, comprising:
a processing control unit including a license registration checking module for acquiring transaction information through the communication network, the transaction information having been acquired by subjecting image information read by the optical data reader to processing control at the information processor, and checking a possibility of connecting the information processor to the electronic transaction server based on the transaction information.

7. A license registration checking server according to claim 6, wherein the processing control unit further includes a module for checking whether the image information has been coded, and a module for decoding a code when the image information has been coded.

8. A license registration checking server configured for communicating with each of an information processor including an optical data reader, and a server for providing electronic transactions through a communication network, comprising:
a processing control unit including a data decoding module for acquiring image information through the communication network, the image information having been read by the optical data reader at the information processor, and decoding the image information, a code converting module for converting the image information into character data, and a license registration checking module for checking a possibility of connecting the information processor to the electronic transaction server based on the character data.

9. A server for providing electronic transactions configured for communicating with an information processor including an optical data reader through a communication network, comprising:
a processing control unit including a data decoding module for acquiring image information through the communication network, the image information having been read by the optical data reader at the information processor, and decoding the image information, and a code converting module for converting the image information into character data.

10. A server for providing electronic transactions according to claim 9, wherein the processing control unit further includes a module for checking whether the image information has been coded, and a module for decoding a code when the image information has been coded.

11. A server for providing electronic transactions connected through a communication network to an information processor for optically reading image information, comprising:
a receiver for receiving item intrinsic information at the electronic transaction server, the item intrinsic information being image information intrinsic to an item, which has been decoded by the information processor;
a module for acquiring personal information of a current purchaser;
a module for executing item purchase settlement by using information integrating the personal information of the current purchaser with the item intrinsic information;
a module for transmitting a result of the item purchase settlement to the information processor;
a module for searching a database for a history of purchasing using the item intrinsic information;
a module for adding a privilege/service code to personal information of a previous purchaser who has bought the item previously, when a purchase history is present; and
a module for recording the personal information of the current purchaser and the item intrinsic information correlated to each other, when no purchase history is present.

12. A server for providing electronic transactions connected through a communication network to an information processor configured for optically reading image information, comprising:
a receiver for receiving the image information from the information processor, the image information having been optically read by the information processor as information necessary for a transaction;
a module for acquiring personal information;
a screen displaying module for displaying a screen of designated identification information on a display unit of the information processor according to the designated identification information of the electronic transaction server contained in the image information;
an electronic transaction module for carrying out electronic transactions; and
a delivery address designating module for designating an address for item delivery.

13. A server for providing electronic transactions connected through a communication network to an information processor configured for optically reading image information, comprising:
a receiver for receiving the image information from the information processor, the image information having been optically read by the information processor as information necessary for a transaction;
a module for acquiring personal information;
a screen displaying module for displaying a screen of designated identification information on a display unit of the information processor according to the designated identification information of the electronic transaction server contained in the image information;
an electronic transaction module for carrying out electronic transactions; and
an electronic transaction canceling module for adding an order intrinsic number to each electronic transaction, and canceling the electronic transaction.

14. A navigation server configured for communicating with an information processor including an optical data reader through a communication network, comprising:
a data decoding module for acquiring image information through the communication network, the image information having been read by the optical data reader at the information processor, and decoding the image information;
a code converting module for converting the image information decoded by the data decoding module into character data containing information of a code acquiring position and a destination position; and
a guidance route searching module for searching a guidance route from the code acquiring position to the destination position.

15. An electronic transaction method comprising, when an information processor optically reads image information as electronic transaction information in a system including the information processor configured for optically reading the image information, a server for providing electronic transactions, and a communication network for interconnecting the information processor and the electronic transaction server:
a step of receiving, by the information processor, the electronic transaction information from the electronic transaction server, the electronic transaction information having been read by the information processor;
a step of transmitting, by the electronic transaction server, a screen of designated identification information of the electronic transaction server to the information processor;
a step of executing, by the information processor, a determination whether to buy an item from the electronic transaction server;
a step of acquiring personal information, and executing a transaction by the electronic transaction server; and
a step of transmitting, by the electronic transaction server, a result of the executing step to the information processor.

16. An electronic transaction method according to claim 15, further comprising;
a step of transmitting, by the electronic transaction server, an address contained in the personal information as a first address for item delivery to the information processor,
a step of authenticating, by the information processor, the first address for delivery when an item is delivered to the first address for delivery,
a step of entering, by the information processor, a second address for delivery when an address different from the first address for delivery is set as an address for delivery, and
a step of receiving, by the electronic transaction server, the second address for delivery.

17. An electronic transaction method comprising:
a step of receiving, by a server for providing electronic transactions, image information optically read by an information processor;
a step of checking, by the electronic transaction server, whether the received image information has been coded;
a step of decoding, by the electronic transaction server, a code when the image information has been coded;
a step of decoding, by the electronic transaction server, the image information;
a step of converting, by the electronic transaction server, the image information into character data;
a step of transmitting, by the electronic transaction server, a screen of designated identification information to the information processor;
a step of making, by the electronic transaction server, the information processor execute a determination whether to buy an item;
a step of instructing, by the electronic transaction server, the information processor to transmit personal information when item buying is carried out; and
a step of receiving, by the electronic transaction server, the personal information, and executing a transaction.

18. An electronic transaction method comprising:
a step of receiving, by a license registration checking server, image information optically read by an information processor;
a step of checking, by the license registration checking server, whether an electronic transaction server is under a license contract by referring to a license registration data memory;
a step of enabling, by the license registration checking server, the information processor to display a screen of designated identification information when the electronic transaction server is under the license contract;
a step of instructing, by the license registration checking server, the information processor to transmit personal information;
a step of receiving, by the license registration checking server, the personal information from the information processor;
a step of transmitting, by the license registration checking server, the personal information to the electronic transaction server;
a step of receiving, by the license registration checking server, settlement information from the electronic transaction server; and
a step of transmitting, by the license registration server, the settlement information to the information processor.

19. An electronic transaction method using a system including a plurality of information processors configured for optically reading image information, a server for providing electronic transactions, and a communication network for interconnecting the information processors and the electronic transaction server, comprising:
a step of reading, by a first information processor owned by a current purchaser, image information intrinsic to an item;
a step of receiving, by the electronic transaction server, item intrinsic information acquired by decoding the image information by the first information processor, and executing item purchase settlement by using information integrated personal information of the current purchaser with the item intrinsic information;
a step of searching, by the electronic transaction server, a database for a history of purchasing the item corresponding to the item intrinsic information;
a step of adding a privilege/service code to the personal information of a previous purchaser who has bought the item previously, when a purchase history is present; and
a step of recording the personal information of the current purchaser and the item intrinsic information correlated to each other when no purchase history is present.

20. An electronic transaction method in a system including an information processor configured for optically reading image information, an electronic transaction server, and a communication network for interconnecting the information processor and the electronic transaction server, comprising:
a step of receiving, by the electronic transaction server, electronic transaction information from the information processor, the electronic transaction information being image information having been optically read by the information processor as information necessary for a transaction;
a step of transmitting, by the electronic transaction server, a screen of designated identification information of the electronic transaction server to the information processor;
a step of executing, by the information processor, a determination whether to buy an item;
a step of acquiring personal information when buying is carried out;
a step of transmitting, by the electronic transaction server, an address contained in the personal information as a first address for item delivery to the information processor;
a step of authenticating, by the information processor, the first address for delivery when an item is delivered to the first address for delivery;
a step of transmitting, by the information processor, a second address for delivery when an address different from the first address for delivery is set as an address for delivery;
a step of receiving, by the electronic transaction server, the second address for delivery; and
a step of executing, by the electronic transaction server, a transaction.

21. An electronic transaction method using a system including a first information processor for reading image information, a second information processor for receiving information contained in the image information from the first information processor, a server for providing electronic transactions, and a communication network for interconnecting the first information processor, the second information processor, and the server, comprising:
a step of reading, by the first information processor, the image information as information necessary for a transaction;
a step of permitting, by the second information processor, settlement of the electronic transaction; and
a step of carrying out, by the electronic transaction server, settlement based on the permission of settlement by the second information processor.

22. An electronic transaction method in a system including an information processor configured for optically reading image information, a server for providing electronic transactions, and a communication network for interconnecting the information processor and the server, comprising:
a step of receiving, by the electronic transaction server, electronic transaction information, the electronic transaction information being image information optically read by the information processor as information necessary for a transaction;
a step of transmitting, by the electronic transaction server, a screen of designated identification information of the electronic transaction server to the information processor;
a step of executing, by the information processor, determination whether to buy an item;
a step of acquiring personal information and executing, by the electronic transaction server, a transaction when buying is carried out;
a step of transmitting, by the electronic transaction server, a result of the executing step to the information processor;
a step of adding an order intrinsic number to the transaction; and
a step of canceling the transaction by designating the order intrinsic number.

23. An electronic transaction method in a system including a remote controller, an information processor configured for optically reading image information, a server for providing electronic transactions, and a communication network for interconnecting the remote controller, the information processor, and the server, comprising:
a step of driving the remote controller to display the image information as information necessary for a transaction on a display unit;
a step of reading, by the information processor, the image information displayed on the display unit;
a step of receiving, by the electronic transaction server, electronic transaction information, the electronic transaction information being the image information optically read by the information processor;
a step of transmitting, by the electronic transaction server, a screen of designated identification information of the electronic transaction server to the information processor;
a step of executing, by the information processor, a determination whether to buy an item; and
a step of acquiring personal information and executing, by the electronic transaction server, a transaction when buying is carried out.

24. A navigation method comprising:
a step of reading, by an information processor, image information displayed on an advertising medium;
a step of decoding, by the information processor, the image information, and convert the image information into character data containing at least information of a code acquiring position and a destination position;
a step of transferring, by the information processor, at least the character data through a communication network to a navigation server; and
a step of transmitting, by the navigation server, a guidance route at least from the code acquiring position to the destination position through the communication network to the information processor.

25. A navigation method comprising:
a step of reading, by an information processor, image information displayed on an advertising medium;
a step of transferring at least the image information from the information processor through a communication network to a navigation server;
a step of decoding, by the navigation server, the image information, and converting the image information into character data containing at least information of a code acquiring position and a destination position; and
a step of transmitting, by the navigation server, a guidance route at least from the code acquiring position to the destination position through the communication network to the information processor.

26. A navigation method comprising:
a step of reading, by an information processor, image information displayed on an advertising medium;
a step of transferring at least the image information from the information processor through a communication network to an optical data analyzing server;
a step of decoding, by the optical data analyzing server, the image information, and converting the image information into character data containing at least information of a code acquiring position and a destination position;
a step of transmitting, by the optical data analyzing server, the character data through the communication network to the navigation server; and
a step of transmitting, by the navigation server, a guidance route at least from the code acquiring position to the destination position through the communication network to the information processor.
